# EUROPEAN PATENT APPLICATION

(11) **EP 4 778 754 A1**
(43) Date of publication of application: **22.07.2026**
(21) Application number: 24865311.5
(22) Date of filing: 03.09.2024
(51) Int. Cl.: B60K 11/02, B60H 1/22, B60L 9/18, B60L 50/60, B60L 53/14, B60L 58/10

(54) **TEMPERATURE CONTROL DEVICE FOR MOBILE BODY AND PROGRAM**

(30) Priority: 11.09.2023 JP 2023147154
(71) Applicant: DENSO CORPORATION, Kariya-shi, Aichi 448-8661 (JP)
(72) Inventor: UEKI, Takeshi, Nisshin-shi, Aichi 470-0111 (JP); KOJIMA, Takayoshi, Nisshin-shi, Aichi 470-0111 (JP); KUBO, Shunichi, Kariya-shi, Aichi 448-8661 (JP); KAZAOKA, Ryoya, Kariya-shi, Aichi 448-8661 (JP); YAMAMOTO, Hiroyoshi, Kariya-shi, Aichi 448-8661 (JP); NUMATA, Masanari, Kariya-shi, Aichi 448-8661 (JP)
(74) Representative: TBK
(86) International application number: PCT/JP2024/031581
(87) International publication number: WO 2025/057809

(57) **Abstract**

A temperature control circuit (7) includes a first valve (V1) capable of switching among flow paths of a refrigerant. The first valve (V1) is connected to a pipe (H) leading to an inverter (43), a pipe (H) leading to a motor (45), and one or more additional pipes (H). The first valve (V1) is configured to transport the refrigerant supplied from an upstream side thereof to at least one of the pipes (H) on a downstream side thereof. A transport control unit controls the first valve (V1) such that, when at least one of the inverter (43) and the motor (45) satisfies a heat generation condition, the refrigerant is transported, in the flow paths, to a transport destination disposed downstream of the one of the inverter (43) and the motor (45).

## Description

The present application claims the benefit of priority of Japanese Patent Application No. 2023-147154 filed on September 11, 2023, the disclosure of which is incorporated in its entirety herein by reference

### Technical Field

This disclosure generally relates to techniques for controlling a temperature of a target object in a mobile object, such as an automotive vehicle.

### BACKGROUND ART

Generally, battery electric vehicles (BEVs)-that is, electric vehicles powered solely by a battery-are required to increase their cruising range in winter and to shorten battery charging time.

It is also known that, as a characteristic of the battery, when the battery temperature rises to a predetermined desirable temperature, the cruising range is extended and the charging time can be shortened.

Accordingly, in order to increase the cruising range and shorten the battery charging time, a technique is known in which the battery temperature is raised to a predetermined temperature in winter or under similar conditions.

Incidentally, as a method for heating a temperature-sensitive component such as a battery, a technique that uses heat generated by an in-vehicle motor generator (MG) has been disclosed (see, e.g., First patent literature).

### PRIOR ART DOCUMENT

### PATENT LITERATURE

FIRST PATENT LITERATURE : U.S. Patent Application Publication No. 2019/0070924

### SUMMARY OF THE INVENTION

However, the inventors have found the following problems in the conventional technology as a result of detailed study.

In the conventional technology, thermal energy generated by an inverter or a motor generator (MG) is utilized only in the device in which it is generated.

That is, study of a technique for using heat generated by a heat-generating device, such as the inverter or the MG, to increase the temperature of various devices in the vehicle-i.e., devices that are preferably maintained at an appropriate temperature-has been insufficient, and further improvements have been required.

It is an object of the present disclosure to provide a technique capable of improving various performance characteristics of a mobile object by effectively utilizing heat generated by heat-generating equipment in the mobile object.

According to one aspect of this disclosure, there is provided a temperature control apparatus configured to control a temperature of equipment in a mobile object.

The temperature control apparatus includes a circuit in which a refrigerant flows and a controller configured to control an operation of the circuit.

The circuit includes, as constituent elements thereof, an inverter, a motor, pipes, and a valve. The pipes define flow paths in which the refrigerant flows. The valve is disposed in the pipes and capable of switching among the flow paths.

The valve is connected to one of the pipes which leads to the inverter, one of the pipes which leads to the motor, and at least one of the remaining pipes. The valve is configured to be switchable so as to transport the refrigerant supplied from an upstream side of the valve to at least one of the pipes arranged on a downstream side of the valve.

The controller includes a transport control unit (61A) configured to, when a heat generation condition is met wherein at least one of the inverter and the motor is capable of heating the refrigerant, control the valve so as to transport the refrigerant, in the circuit, from the at least one of the inverter and the motor that satisfies the heat generation condition to a transport destination located downstream of the at least one of the inverter and the motor.

The above configuration serves to improve various performances of the mobile object by effectively utilizing heat generated by equipment capable of generating heat in the mobile object.

Specifically, when the inverter or the motor satisfies the heat generation condition, it is possible to increase a temperature of the refrigerant (i.e., a heat transfer medium) supplied to the inverter or the motor. Therefore, by using the valve to change a destination to which the temperature-increased refrigerant is transported, the heat of the refrigerant is effectively utilized to efficiently increase a temperature of a required target.

According to another aspect of this disclosure, there is provided a computer program for controlling a temperature control apparatus configured to perform temperature control on equipment installed in a mobile object.

The temperature control apparatus includes as constituent elements of a circuit in which a refrigerant flows:
an inverter;
a motor;
pipes defining flow paths through which the refrigerant flows; and
a valve disposed in the pipes and configured to switch among the flow paths.

In addition to the pipe leading to the inverter and the pipe leading to the motor, one or more additional pipes are connected to the valve. The valve is capable of being switched so as to transport the refrigerant supplied from an upstream side of the valve to at least one of the pipes on a downstream side of the valve.

The computer program causes a computer to function as a transport control unit (61A) configured to, when at least one of the inverter and the motor satisfies a heat generation condition under which the at least one of the inverter and the motor is capable of heating the refrigerant, control the valve so as to transport the refrigerant, in the flow paths, from the at least one of the inverter and the motor satisfying the condition to a transport destination disposed downstream of the at least one.

The above configuration serves to improve various performances of the mobile object by effectively utilizing heat generated by equipment capable of generating heat in the mobile object.

Specifically, when the inverter or the motor satisfies the heat generation condition, it is possible to increase a temperature of the refrigerant (i.e., a heat transfer medium) supplied to the inverter or the motor. Therefore, by using the valve to change a destination to which the temperature-increased refrigerant is transported, the heat of the refrigerant is effectively utilized to efficiently increase a temperature of a required target.

### BRIEF DESCRIPTION OF THE DRAWINGS

In the drawings:
Fig. 1 is an explanatory diagram illustrating a configuration of a vehicle system according to the first embodiment;
Fig. 2 is an explanatory diagram illustrating a configuration of a circuit system according to the first embodiment;
Fig. 3A is a block diagram illustrating an electrical configuration of a vehicle controller, sensors, actuators, and the like according to the first embodiment;
Fig. 3B is a block diagram functionally illustrating an arithmetic processing unit;
Fig. 4A is an explanatory diagram illustrating a flow path through which a refrigerant from an inverter to a motor;
Fig. 4B is an explanatory diagram illustrating a flow path through which a refrigerant flows from a motor to an inverter;
Fig. 5 is a table representing characteristics of heat generation achieved by an inverter and a motor;
Fig. 6 is a table representing relationships among each heat source, a path of the refrigerant, a transportation destination of the refrigerant, and a purpose of heating;
Fig. 7A is an explanatory diagram illustrating a circuit system in the first operation example;
Fig. 7B is an explanatory diagram illustrating relationships among each heat source, a path of the refrigerant, a transportation destination, and a purpose of heating in the first operation example;
Fig. 8A is an explanatory diagram illustrating a circuit system in the second operation example;
Fig. 8B is an explanatory diagram illustrating relationships among each heat source, a path of the refrigerant, a transportation destination, and a purpose of heating in the second operation example;
Fig. 9A is an explanatory diagram illustrating a circuit system in the third operation example;
Fig. 9B is an explanatory diagram illustrating relationships among each heat source, a path of the refrigerant, a transportation destination, and a purpose of heating in the third operation example;
Fig. 10A is an explanatory diagram illustrating a circuit system in the fourth operation example;
Fig. 10B is an explanatory diagram illustrating relationships among each heat source, a path of the refrigerant, a transportation destination, and a purpose of heating in the fourth operation example;
Fig. 11A is an explanatory diagram illustrating a circuit system in the fifth operation example;
Fig. 11B is an explanatory diagram illustrating relationships among each heat source, a path of the refrigerant, a transportation destination, and a purpose of heating in the fifth operation example;
Fig. 12A is an explanatory diagram illustrating a circuit system in the sixth operation example;
Fig. 12B is an explanatory diagram illustrating relationships among each heat source, a path of the refrigerant, a transportation destination, and a purpose of heating in the sixth operation example;
Fig. 13A is an explanatory diagram illustrating a circuit system in the seventh operation example;
Fig. 13B is an explanatory diagram illustrating relationships among each heat source, a path of the refrigerant, a transportation destination, and a purpose of heating in the seventh operation example;
Fig. 14A is an explanatory diagram illustrating a circuit system in the eighth operation example;
Fig. 14B is an explanatory diagram illustrating relationships among each heat source, a path of the refrigerant, a transportation destination, and a purpose of heating in the eighth operation example;
Fig. 15A is an explanatory diagram illustrating a circuit system in the ninth operation example;
Fig. 15B is an explanatory diagram illustrating relationships among each heat source, a path of the refrigerant, a transportation destination, and a purpose of heating in the ninth operation example;
Fig. 16A is an explanatory diagram illustrating a circuit system in the tenth operation example;
Fig. 16B is an explanatory diagram illustrating relationships among each heat source, a path of the refrigerant, a transportation destination, and a purpose of heating in the tenth operation example;
Fig. 17A is an explanatory diagram illustrating a circuit system in the eleventh operation example;
Fig. 17B is an explanatory diagram illustrating relationships among each heat source, a path of the refrigerant, a transportation destination, and a purpose of heating in the eleventh operation example;
Fig. 18A is an explanatory diagram illustrating a circuit system in the twelfth operation example;
Fig. 18B is an explanatory diagram illustrating relationships among each heat source, a path of the refrigerant, a transportation destination, and a purpose of heating in the twelfth operation example;
Fig. 19A is an explanatory diagram illustrating a circuit system in the thirteenth operation example;
Fig. 19B is an explanatory diagram illustrating relationships among each heat source, a path of the refrigerant, a transportation destination, and a purpose of heating in the thirteenth operation example;
Fig. 20A is an explanatory diagram illustrating a circuit system in the fourteenth operation example;
Fig. 20B is an explanatory diagram illustrating relationships among each heat source, a path of the refrigerant, a transportation destination, and a purpose of heating in the fourteenth operation example;
Fig. 21A is an explanatory diagram illustrating a circuit system in the fifteenth operation example;
Fig. 21B is an explanatory diagram illustrating relationships among each heat source, a path of the refrigerant, a transportation destination, and a purpose of heating in the fifteenth operation example;
Fig. 22A is an explanatory diagram illustrating a circuit system in the sixteenth operation example;
Fig. 22B is an explanatory diagram illustrating relationships among each heat source, a path of the refrigerant, a transportation destination, and a purpose of heating in the sixteenth operation example;
Fig. 23A is an explanatory diagram illustrating a circuit system in the seventeenth operation example;
Fig. 23B is an explanatory diagram illustrating relationships among each heat source, a path of the refrigerant, a transportation destination, and a purpose of heating in the seventeenth operation example;
Fig. 24A is an explanatory diagram illustrating a circuit system in the eighteenth operation example;
Fig. 24B is an explanatory diagram illustrating relationships among each heat source, a path of the refrigerant, a transportation destination, and a purpose of heating in the eighteenth operation example;
Fig. 25A is an explanatory diagram illustrating a circuit system in the nineteenth operation example;
Fig. 25B is an explanatory diagram illustrating relationships among each heat source, a path of the refrigerant, a transportation destination, and a purpose of heating in the nineteenth operation example;
Fig. 26A is an explanatory diagram illustrating a circuit system in the twenties operation example;
Fig. 26B is an explanatory diagram illustrating relationships among each heat source, a path of the refrigerant, a transportation destination, and a purpose of heating in the twenties operation example;
Fig. 27A is an explanatory diagram illustrating a circuit system in the twenty-first operation example;
Fig. 27B is an explanatory diagram illustrating relationships among each heat source, a path of the refrigerant, a transportation destination, and a purpose of heating in the twenty-first operation example;
Fig. 28A is an explanatory diagram illustrating a circuit system in the twenty-second operation example;
Fig. 28B is an explanatory diagram illustrating relationships among each heat source, a path of the refrigerant, a transportation destination, and a purpose of heating in the twenty-second operation example;
Fig. 29A is an explanatory diagram illustrating a circuit system in the twenty-third operation example;
Fig. 29B is an explanatory diagram illustrating relationships among each heat source, a path of the refrigerant, a transportation destination, and a purpose of heating in the twenty-third operation example;
Fig. 30A is an explanatory diagram illustrating a circuit system in the twenty-fourth operation example;
Fig. 30B is an explanatory diagram illustrating relationships among each heat source, a path of the refrigerant, a transportation destination, and a purpose of heating in the twenty-fourth operation example;
Fig. 31A is an explanatory diagram illustrating a circuit system in the twenty-fifth operation example;
Fig. 31B is an explanatory diagram illustrating relationships among each heat source, a path of the refrigerant, a transportation destination, and a purpose of heating in the twenty-fifth operation example;
Fig. 32A is an explanatory diagram illustrating a circuit system in the twenty-sixth operation example;
Fig. 32B is an explanatory diagram illustrating relationships among each heat source, a path of the refrigerant, a transportation destination, and a purpose of heating in the twenty-sixth operation example;
Fig. 33A is an explanatory diagram illustrating a circuit system in the twenty-seventh operation example;
Fig. 33B is an explanatory diagram illustrating relationships among each heat source, a path of the refrigerant, a transportation destination, and a purpose of heating in the twenty-seventh operation example;
Fig. 34A is an explanatory diagram illustrating a circuit system in the twenty-eighth operation example;
Fig. 34B is an explanatory diagram illustrating relationships among each heat source, a path of the refrigerant, a transportation destination, and a purpose of heating in the twenty-eighth operation example;
Fig. 35 is a flowchart illustrating main processing in a first embodiment;
Fig. 36 is a table representing valve openings, i.e., valve angular positions of respective valves in the first embodiment;
Fig. 37 is a flowchart illustrating a first processing example in the first embodiment;
Fig. 38 is a flowchart illustrating a second processing example in the first embodiment;
Fig. 39 is a flowchart illustrating a third processing example in the first embodiment;
Fig. 40 is a flowchart illustrating a fourth processing example in the first embodiment;
Fig. 41 is a flowchart illustrating a fifth processing example in the first embodiment;
Fig. 42 is a flowchart illustrating a sixth processing example in the first embodiment;
Fig. 43 is a flowchart illustrating a seventh processing example in the first embodiment;
Fig. 44 is a flowchart illustrating an eighth processing example in the first embodiment;
Fig. 45 is a flowchart illustrating a ninth processing example in the first embodiment;
Fig. 46 is a flowchart illustrating a tenth processing example in the first embodiment;
Fig. 47A is an explanatory diagram illustrating a configuration of a circuit system in the heating-priority mode;
Fig. 47B is an explanatory diagram illustrating a configuration of a circuit system in a battery-priority mode;
Fig. 48A is a graph illustrating experimental results obtained by the heating-priority mode;
Fig. 48B is a graph illustrating experimental results obtained by the battery-priority mode;
Fig. 49 is an explanatory diagram illustrating a temperature control circuit in the second embodiment; and
Fig. 50 is an explanatory diagram illustrating a temperature control circuit in the third embodiment.

### MODES FOR CARRYING OUT THE INVENTION

Embodiments in this disclosure will be described below with reference to the drawings.

### 1. FIRST EMBODIMENT

In the first embodiment, a temperature control apparatus for an electrically driven mobile body, capable of adjusting the temperatures of various on-board devices, will be described. In the following description, a battery electric vehicle (BEV) that travels solely on electricity will be described as an example.

### 1-1 OVERALL STRUCTURE

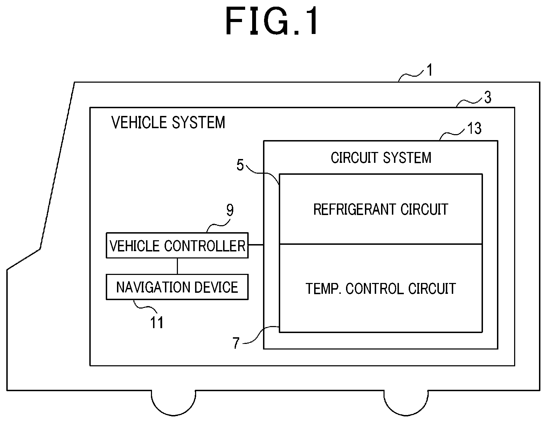

As illustrated in Fig. 1, in the first embodiment, the vehicle 1 is equipped with the vehicle system 3. The vehicle system 3 functions as a temperature control apparatus for a mobile body and includes: the refrigerant circuit 5 having heat-pump (HP) functions; the temperature control circuit 7 capable of adjusting the temperatures of various pieces of equipment mounted on the vehicle 1; the vehicle controller 9 that controls operations of the refrigerant circuit 5 and the temperature control circuit 7 as well as other apparatuses of the vehicle 1; and the known navigation device 11, among others.

The circuit system 13 includes the refrigerant circuit 5 and the temperature control circuit 7. The circuit system 13 includes a flow path through which a refrigerant serving as a heat transfer medium flows. The temperature control circuit 7 may be regarded as a circuit that functions as a temperature control apparatus for a mobile object.

Hereinafter, each configuration will be described.

### 1-2 CONFIGURATIONS OF PARTS

### REFRIGERANT CIRCUIT

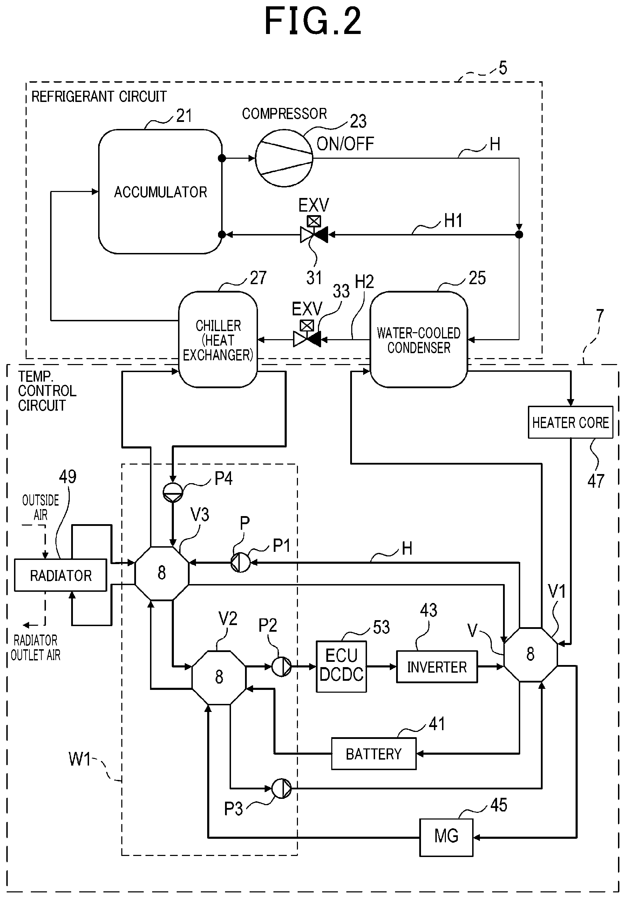

As illustrated in Fig. 2, the refrigerant circuit 5 is a known circuit through which a refrigerant flows and includes the accumulator 21, the compressor 23, the water-cooled condenser 25, and the chiller 27. The refrigerant flows in a gaseous state or a liquid state, as is well known.

The accumulator 21 is a device that separates gas and liquid and accumulates the gas (i.e., a gaseous refrigerant), while the compressor 23 is a device that compresses the refrigerant. The water-cooled condenser 25 is disposed over portions of the refrigerant circuit 5 and the temperature control circuit 7 which are located across a boundary between the refrigerant circuit 5 and the temperature control circuit 7. The water-cooled condenser 25 works to use the refrigerant of the refrigerant circuit 5 to heat the refrigerant of the temperature control circuit 7 (i.e., a refrigerant at a temperature lower than that of the refrigerant of the refrigerant circuit 5). The chiller 27 is, like the water-cooled condenser 25, disposed on both boundary portions between the refrigerant circuit 5 and the temperature control circuit 7. The chiller 27 works to cool the refrigerant of the temperature control circuit 7 (i.e., a refrigerant at a temperature higher than that of the refrigerant of the refrigerant circuit 5) using the refrigerant of the refrigerant circuit 5. In other words, the chiller 27 is implemented by a heat exchanger which cools the refrigerant in the temperature control circuit 7, that is, performs heat exchange between the refrigerant circuit 5 and the temperature control circuit 7.

In Fig. 2, the pipe H through which the refrigerant flows (i.e., the flow path of the refrigerant) is indicated by a solid line, and the direction of a solid-line arrow is the direction in which the refrigerant flows. Hereinafter, also in the other drawings, the direction of an arrow of each flow path indicates the direction in which the refrigerant flows.

Further, the compressor 23 is disposed downstream of the accumulator 21. The flow path downstream of the compressor 23 branches and is connected to the accumulator 21 and the water-cooled condenser 25. The chiller 27 is disposed downstream of the water-cooled condenser 25. The accumulator 21 is disposed downstream of the chiller 27.

Further, in the pipe H1 extending from a branch point on the downstream side of the compressor 23 to the accumulator 21, a well-known electronically controlled valve, which is an on-off valve (i.e., an EXV) 31, is disposed, and a similar electronically controlled valve 33 is also disposed in the pipe H2 extending from the water-cooled condenser 25 to the chiller 27.

### TEMPERATURE CONTROL CIRCUIT

As illustrated in Fig. 2, the temperature control circuit 7 is a circuit through which the refrigerant (e.g., water) flows in a liquid state. The temperature control circuit 7 includes, as constituent elements thereof, the battery 41, the inverter 43, the motor generator 45, the heater core 47, the radiator 49, the water-cooled condenser 25, the chiller 27, a plurality of flow path switching valves V, and a plurality of pumps P. The temperature control circuit 7 also includes the ECU 53 which adjusts a DC-DC voltage. The ECU 53, whoever, may be omitted. Further, the respective constituent elements are connected by the pipe H through which the refrigerant flows.

The battery 41 is a rechargeable battery (i.e., a secondary battery) used for driving the vehicle 1. The battery 41 can be charged by a charger (not shown) outside the vehicle 1. Further, the battery 41 is capable of storing electric power generated by the motor generator 45.

The inverter 43 is a well-known device that converts a direct current into an alternating current.

The motor generator (i.e., an MG) 45 is a well-known device having both a motor function and a generator function. Hereinafter, the motor generator 45 may be simply referred to as the motor or may be denoted as the MG in the drawings.

The heater core 47 is a well-known device that is heated by thermal energy from the refrigerant flowing through the temperature control circuit 7 and/or thermal energy transferred from the refrigerant circuit 5, and is used for heating within the vehicle 1.

The radiator 49 is a well-known device used for heat exchange with outside air.

The pumps P (e.g., water pumps) (e.g., P1 to P4) are well-known devices each of which causes the refrigerant in the pipe H to flow in a predetermined direction. Note that the pumps P are driven as necessary, but may not be driven in some cases.

Each of the flow path switching valves V is configured as an eight-way selector valve capable of switching the flow path in eight directions in response to a control signal from the vehicle controller 9. In the example illustrated in Fig. 2, the flow path switching valves V include the first valve V1, the second valve V2, and the third valve V3.

Each of the flow path switching valves V is provided with openings at eight locations and has an internal flow path formed herein which is connected to the openings. Further, the piping H is connectable to each of the openings. Note that the pipes H need not be connected to all eight openings.

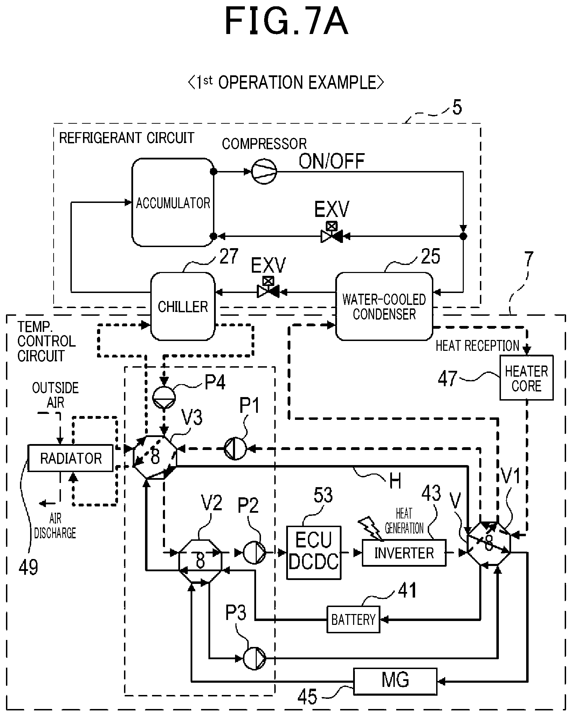

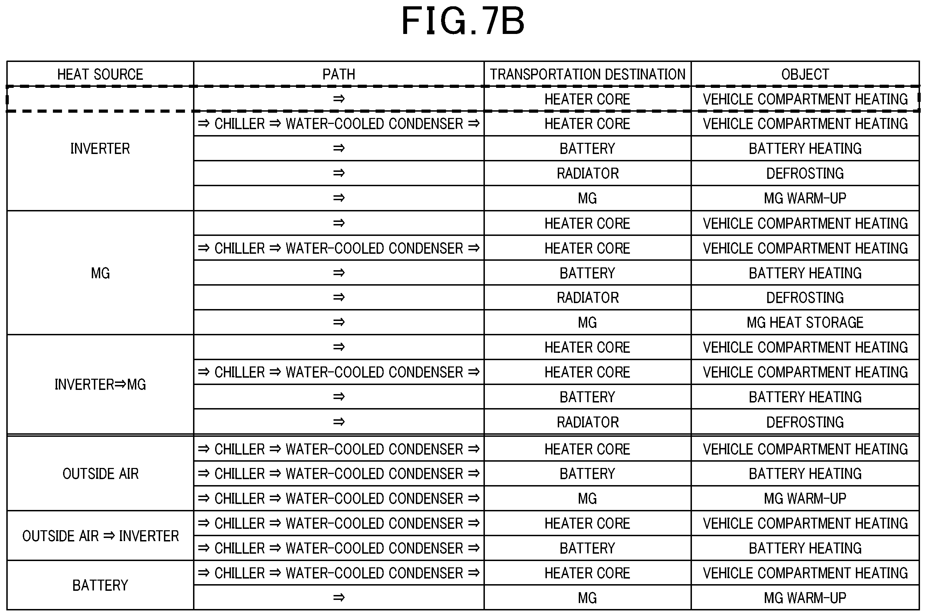

In Fig. 7 and the following drawings referred to below, internal flow paths are schematically indicated by arrows shown on surfaces and/or insides of the flow path switching valves V, and openings are schematically indicated by corners of the surfaces of the flow path switching valves V (for example, connections of the arrows to the corners).

Accordingly, as will be described in detail later, when the flow path switching valves V are rotatable about a central axis (for example, a central axis perpendicular to the plane of Fig. 2), each time the flow path switching valves V are rotated by a predetermined angle, the connection state between the respective openings and the respective pipes H is changed, whereby the flow path of the refrigerant is switched.

### VEHICLE CONTROLLER

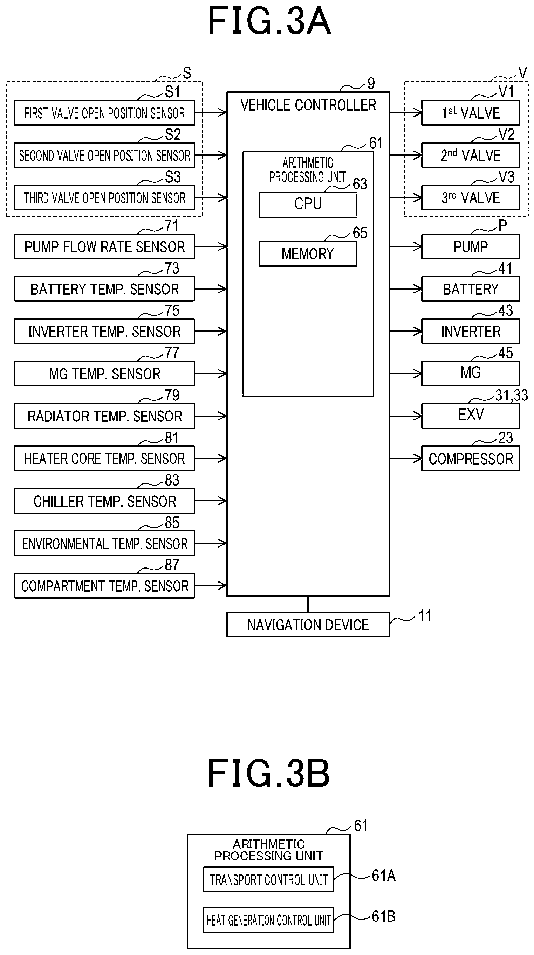

As illustrated in Fig. 3A, the vehicle controller 9 includes the arithmetic processing unit 61 functioning as a controller configured to execute various types of control tasks.

The arithmetic processing unit 61 is mainly constituted by a microcomputer including the CPU 63 and a semiconductor memory (hereinafter, a "memory 65") such as a ROM, a RAM, and a flash memory. Various functions of the arithmetic processing unit 61 are implemented by the CPU 63 executing a program stored in a non-transitory tangible recording medium. In this example, the memory 65 corresponds to the non-transitory tangible recording medium storing the program. Further, by executing the program, a method corresponding to the program is executed.

The number of microcomputers constituting the arithmetic processing unit 61 may be one or a plurality. Further, the technique for implementing the various functions of the arithmetic processing unit 61 is not limited to software, and some or all of the elements thereof may be implemented using one or a plurality of pieces of hardware. For example, when the above-described functions are implemented by an electronic circuit as hardware, the electronic circuit may be implemented by a digital circuit including a number of logic circuits, an analog circuit, or a combination thereof.

Various sensors for measuring conditions or states of the vehicle 1 are connected to the vehicle controller 9. Outputs of the sensors (which will also be referred to below as sensor outputs) indicating the respective states of the vehicle 1 are output to the vehicle controller 9.

The sensors include the open position sensor S1 for measuring an open position of the first valve V1, the open position sensor S2 for measuring an open position of the second valve V2, and the open position sensor S3 for measuring an open position of the third valve V3.

The open position, as referred to herein, is a parameter representing an angle (i.e., a valve angle) through which the valve has rotated from a reference position. As will be described later, once the valve angle is determined, it is determined to which the pipes H the respective openings of the respective valves V are connected.

The sensors also include the flow rate sensors 71 that measure flow rates of the refrigerant flowing through the respective pumps P, the temperature sensor 73 that measures a temperature of the battery 41, the temperature sensor 75 that measures a temperature of the inverter 43, the temperature sensor 77 that measures a temperature of the motor 45, the temperature sensor 79 that measures a temperature of the radiator 49, the temperature sensor 81 that measures a temperature of the heater core 47, the temperature sensor 83 that measures a temperature of the chiller 27, the temperature sensor 85 that measures an ambient environmental temperature (for example, an outside air temperature), and the temperature sensor 87 that measures a temperature inside a passenger compartment of the vehicle 1.

Further, various actuators are connected to the vehicle controller 9 in order to perform various operations of the vehicle 1. The vehicle controller 9 outputs control signals the actuators to operate the actuators.

The actuators include the valves V: the first valve V1, the second valve V2, and the third valve V3.

The actuators also include the pumps P, the battery 41, the inverter 43, the motor 45, the EXVs 31 and 33, and the compressor 23.

The arithmetic processing unit 61 functionally includes, for example, as shown in Fig. 3B, the transport control unit 61A and the heat generation control unit 61B.

The transport control unit 61A is configured to control the first valve V1 such that, when at least one of the inverter 43 and the motor 45 satisfies a heat generation condition under which it is possible to heat the refrigerant (i.e., the refrigerant in the temperature control circuit 7), for example, when temperature-increasing control (which will also be referred to below as a temperature-increasing operation) has been performed on at least one of the inverter 43 and the motor 45 to increase the temperature thereof, the refrigerant is transported in the flow path from at least one of the inverter 43 and the motor 45 that satisfies the heat generation condition to a transport destination disposed downstream of the at least one of the inverter 43 and the motor 45.

The heat generation control unit 61B is configured to perform, for example, as control that satisfies the heat generation condition, temperature-increasing control that produces thermal energy by causing an electrical current to flow through at least one of the inverter 43 and the motor 45.

Accordingly, the arithmetic processing unit 61 is capable of controlling the first valve V1 such that, when temperature-increasing control is performed on at least one of the inverter 43 and the motor 45, the refrigerant is transported to the transport destination disposed downstream of at least one of the inverter 43 and the motor 45 on which the temperature-increasing control is performed.

Examples of the heat generation condition (i.e., a condition under which the refrigerant will be heated by the inverter 43 and/or the motor 45) include, in addition to a condition in which at least one of the inverter 43 and the motor 45 is subjected to the temperature-increasing control, a condition in which at least one of the inverter 43 and the motor 45 reaches or exceeds a predetermined temperature.

### 1-3 CHARACTERISTIC CONFIGURATIONS

Next, characteristic configurations of the first embodiment will be described below.

The pipes H for the refrigerant are arranged in the vicinity of the inverter 43, the motor 45, and the battery 41. This causes heat generated by the inverter 43, the motor 45, and the battery 41 to be transferred by the refrigerant flowing through the pipes H to a target to be heated (i.e., a target whose temperature is to be increased), such as a component for an intended purpose (for example, the battery 41). Conversely, each component, such as the inverter 43, the motor 45, and the battery 41, is heated by the refrigerant flowing through the pipes H.

The following discussion will sometimes simply refer to "the refrigerant that has passed through the inverter 43 and the motor 45" or "transporting the refrigerant to the inverter 43 and the motor 45", without specifically referring to the pipes H.

### CONFIGURATION OF TEMPERATURE CONTROL CIRCUIT

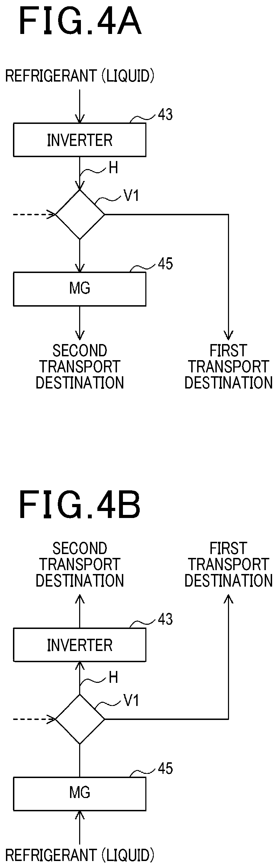

As shown in Fig. 4A, the temperature control circuit 7 has the first valve V1 disposed in one of the pipes H that connects an outlet of the inverter 43 from which the refrigerant is discharged and an inlet of the motor 45 into which the refrigerant is inputted.

The first valve V1 is designed to switch between the flow paths of the refrigerant such that the refrigerant having passed through the inverter 43 subjected to the temperature-increasing control is transported, directly by the pipes H or indirectly via another valve V, to at least one transport destination selected from among the battery 41, the chiller 27, the heater core 47, the radiator 49, and the motor 45.

The temperature control circuit 7 may alternatively, as illustrated in Fig. 4B, have the first valve V1 disposed in the pipe H connecting between the refrigerant outlet of the motor 45 and the refrigerant inlet of the inverter 43.

In the above case, the first valve V1 is capable of switching the flow path of the refrigerant such that the refrigerant having passed through the motor 45 subjected to the temperature-increasing control is transported, directly by the pipe H or indirectly via another valve V, to at least one transport destination selected from among the battery 41, the chiller 27, the heater core 47, and the radiator 49. As will be described later, the refrigerant may be transported to the motor 45 itself through a closed circuit.

### MODE OF HEAT GENERATION

Next, heat generation modes of the inverter 43 and the motor 45 will be described below.

Here, the heat generation refers to an operation performed for the purpose of generation of thermal energy, separately from an original operation of the inverter 43 and the motor 45, that is, an operation in which an electrical current is supplied to the inverter 43 itself and the motor 45 itself for the purpose of generating heat. In this embodiment, the temperature-increasing control is performed by causing heat to be generated by supplying an electrical current for the purpose of heat generation under control of the vehicle controller 9.

Specifically, for the inverter 43, the heat generation is performed by, for example, the temperature-increasing control such as switching control in which an electrical current is supplied to a diode of the inverter 43 which has a relatively large energy loss. Further, for the motor 45, the heat generation is performed by, for example, the temperature-increasing control such as an inefficient operation in which an electrical current is supplied to only one of the three phases in the motor 45.

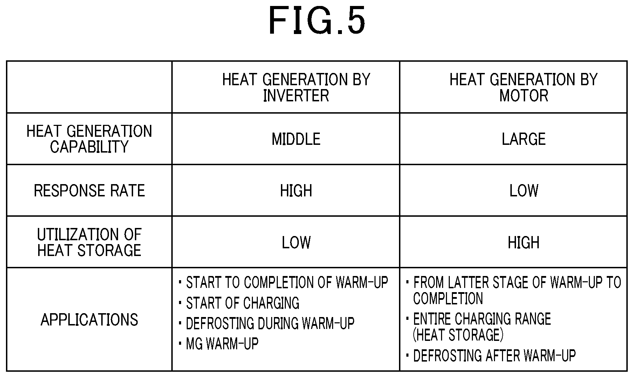

As demonstrated in Fig. 5, when the inverter 43 is in the heat generation mode, power consumption per unit time of the inverter 43 is, for example, 4.2 kW, while when the motor 45 is in the heat generation mode, power consumption per unit time of the motor 45 is, for example, 6 kW. The motor 45, therefore, has a larger power consumption per unit time than the inverter 43. Accordingly, the motor 45 has a larger amount of heat generation per unit time than the inverter 43.

The supply of electrical power to the inverter 43 and the motor 45 in the same manner causes the temperature of the inverter 43 to rise more quickly than the motor 45. In other words, the inverter 43 has higher responsiveness than the motor 45. Furthermore, since the motor 45 has a larger heat capacity than the inverter 43, the motor 45 has higher heat storage performance.

Accordingly, the inverter 43 and the motor 45 are appropriately used for the heat generation in accordance with the respective characteristics described above, as will be described later.

Specifically, the heat generation using the inverter 43 is performed, for example, during a period from a start to completion of warm-up of equipment such as the battery 41, during a predetermined period from a start of charging of the battery 41, during a predetermined period in which defrosting is performed while various pieces of equipment are being warmed up (for example, during heating), and during a predetermined period from a start of warm-up of the motor 45.

The heat generation using the motor 45 is performed, for example, during a period from the latter half to completion of warm-up of equipment such as the battery 41, during an entire period of charging of the battery 41, and during a predetermined period of defrosting after warm-up of various pieces of equipment.

In this disclosure, the warm-up refers to warming equipment such as the battery 41 and the motor 45 to a predetermined temperature suitable for operation thereof.

### HEAT TRANSFER PATH AFTER HEAT GENERATION

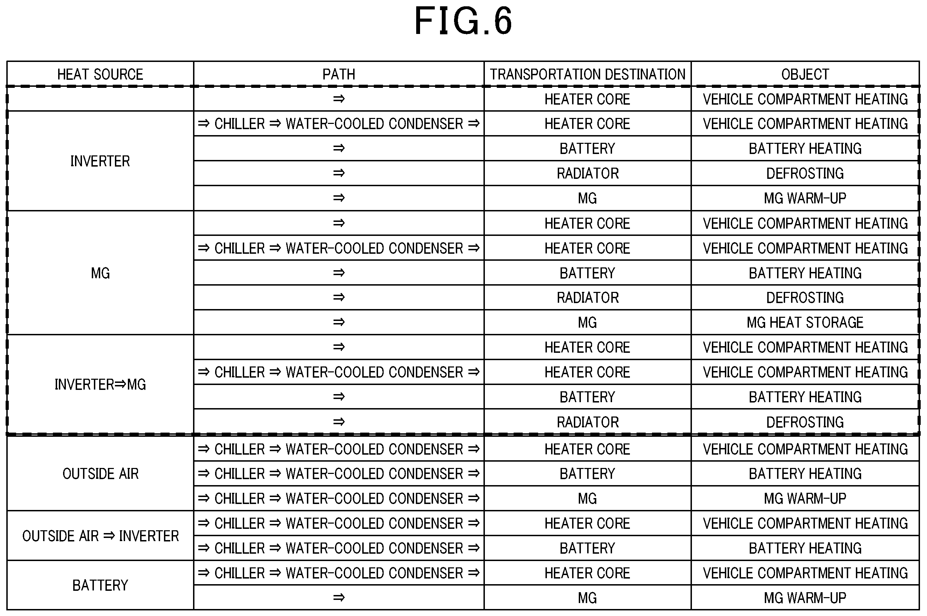

As shown in the upper portion of Fig. 6 (i.e., the three upper fields), heat generated by the inverter 43 and/or the motor 45 (i.e., by the temperature-increasing control) is transferred via respective paths to targets to be heated. For example, the refrigerant heated in the inverter 43 or the motor 45 is transported via the respective paths to intended transport destinations. Note that a range indicated by broken lines in Fig. 6 is a characteristic configuration of the first embodiment.

For example, the refrigerant heated in the inverter 43 is transported to the heater core 47 for the purpose of heating the vehicle interior. Further, heat of the refrigerant is transferred to the heater core 47 for the purpose of heating the vehicle interior via the chiller 27 and the water-cooled condenser 25. Further, the refrigerant is transported to the battery 41 for the purpose of warming up the battery 41. Further, the refrigerant is transported to the radiator 49 for the purpose of defrosting the radiator 49. Further, the refrigerant is transported to the motor 45 for the purpose of warming up the motor 45.

The refrigerant heated in the motor 45 is transported to the heater core 47 for the purpose of heating the vehicle interior. Further, heat of the refrigerant is transferred to the heater core 47 for the purpose of heating the vehicle interior via the chiller 27 and the water-cooled condenser 25. Further, the refrigerant is transported to the battery 41 for the purpose of warming up the battery 41. Further, the refrigerant is transported to the radiator 49 for the purpose of defrosting the radiator 49. Further, the refrigerant is transported to the motor 45 itself for the purpose of warming up the motor 45 itself.

Further, the refrigerant heated in the inverter 43 and the motor 45 is transported to the heater core 47 for the purpose of heating the vehicle interior. Further, the heat of the refrigerant is transferred to the heater core 47 for the purpose of heating the vehicle interior via the chiller 27 and the water-cooled condenser 25. Further, the refrigerant is transported to the battery 41 for the purpose of warming up the battery 41. Further, the refrigerant is also transported to the radiator 49 for the purpose of defrosting the radiator 49.

Note that, since a target to be heated may also be heated by the control of the lower portion of Fig. 6 (i.e., the three lower fields), a brief description will be given.

For example, heat of outside air is transferred, for the purpose of heating the vehicle interior, warming up the battery 41, and warming up the motor 45, via the radiator 49, the chiller 27, the water-cooled condenser 25, and the like, to the heater core 47, the battery 41, and the motor 45, respectively.

Heat due to outside air and heat generation of the inverter 43 is transferred, for the purpose of heating the vehicle interior and warming up the battery 41, via the chiller 27, the water-cooled condenser 25, and the like, to the heater core 47 and the battery 41, respectively.

Heat due to heat generation of the battery 41 (for example, heat generation using a ripple current) is transferred, for the purpose of heating the vehicle interior, to the heater core 47 via the chiller 27 and the water-cooled condenser 25. Further, the refrigerant heated by heat generation of the battery 41 is supplied to the motor 45 for the purpose of warming up the motor 45.

### 1-4 OPERATION

Next, a specific operation example (i.e., an operation example of the contents of Fig. 6) in the first embodiment will be described in detail.

### FIRST OPERATION EXAMPLE

A case will be described in which, as shown in a broken-line frame in Fig. 7B, the refrigerant is heated by heat generation of the inverter 43, and the refrigerant is transported to the heater core 47 for the purpose of heating the vehicle interior.

As shown in Fig. 7A, each of the valves V is configured to have a valve opening (i.e., an angular position determined by rotation thereof) which is set so as to cause the refrigerant to flow in the direction indicated by the arrow in the drawing. It should be noted that, except for each valve V, the refrigerant flows within the pipes H indicated by solid lines and broken lines, and inside each valve V, the refrigerant flows within the internal flow passages indicated by solid lines and broken lines.

It should be noted that, in Fig. 7A, lines such as solid lines indicating the internal flow passages intersect with each other; however, in practice, the internal flow passages indicated by the respective lines are provided so as not to merge with each other midway. The same applies to each of the drawings below.

First, the refrigerant heated by the inverter 43 is transported to the water-cooled condenser 25 via the first valve V1, as indicated by the broken line. The water-cooled condenser 25 then receives the heat from the refrigerant circuit 5 and transports it to the heater core 47, thereby heating the heater core 47. Then, the heater core 47 works to heat the passenger compartment of the vehicle 1.

Thereafter, the refrigerant returns from the heater core 47 to the inverter 43 via the first valve V1, the pump P1, the third valve V3, the second valve V2, the pump P2, and the ECU 53.

It should be noted that the respective components, such as the valves V, are connected by the pipes H, and the refrigerant in the pipes H moves so as to be delivered by the pump P.

In the first operation example, the motor 45 generates no heat. As indicated by the solid line, the refrigerant returns from the motor 45 to the second valve V2, to the pump P3, to the first valve V1, to the battery 41, to the second valve V2, to the third valve V3, to the first valve V1, and then to the motor 45.

It should be noted that the refrigerant that has undergone heat exchange (i.e., has been cooled) in the chiller 27 returns to the chiller 27 via the pump P4, the third valve V3, the radiator 49, and the third valve V3, as indicated by the broken line.

It should be noted that the pumps P1 to P4 operate to cause the refrigerant to flow. In the following description, the pumps P1 to P4 are assumed to be operating unless stoppage is indicated.

### SECOND OPERATION EXAMPLE

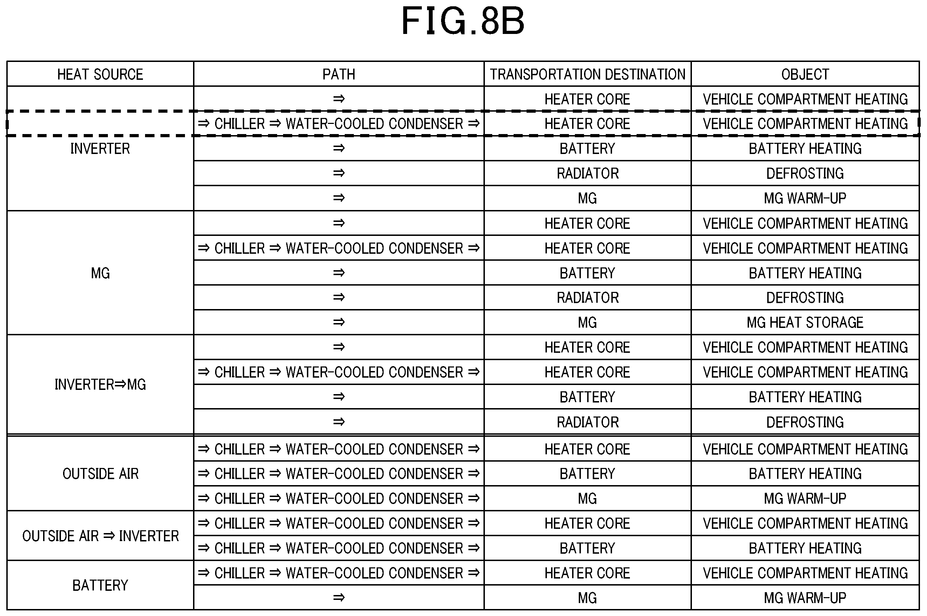

A case will be described in which, as shown in the broken-line frame in Fig. 8B, the refrigerant is heated by the inverter 43, and, for the purpose of heating the passenger compartment of the vehicle 1, heat of the refrigerant is transferred to the heater core 47 via the chiller 27 and the water-cooled condenser 25.

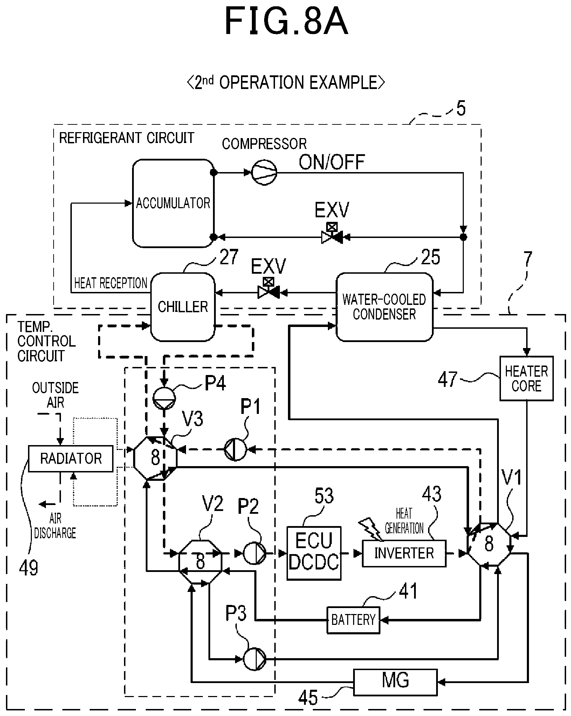

As shown in Fig. 8A, the refrigerant heated by the inverter 43 returns to the inverter 43 via the first valve V1, the pump P1, the third valve V3, the chiller 27, the pump P4, the third valve V3, the second valve V2, the pump P2, and the ECU 53, as indicated by the broken line.

In the second operation example, heat is not generated by the motor 45. As indicated by the solid line, the refrigerant returns from the motor 45 to the motor 45 via the second valve V2, the pump P3, the first valve V1, the battery 41, the second valve V2, the third valve V3, the first valve V1, the water-cooled condenser 25, the heater core 47, and the first valve V1.

With the above-described configuration, since the temperature of the chiller 27 increases due to the refrigerant heated by the inverter 43, the temperature of the refrigerant flowing in a portion of the chiller 27 which is located in the refrigerant circuit 5 increases. Therefore, the temperature of the refrigerant flowing in a portion of the water-cooled condenser 25 which is located in the refrigerant circuit 5 also increases, and the temperature of the heater core 47 on the downstream side of the water-cooled condenser 25 also increases. This causes the air in the passenger compartment of the vehicle 1 to heated by the heater core 47.

It should be noted that, as indicated by the thin broken line, the flow passage connecting the radiator 49 and the third valve V3 forms a closed circuit. Here, the closed circuit refers to a circuit in which components such as the radiator 49 disposed in the closed circuit are not connected to other components (for example, a heating target), i.e., a closed flow path in which heat is not transferred by the refrigerant. The closed circuit may include the pump(s) P. The pump(s) P of the closed circuit may be stopped.

### THIRD OPERATION EXAMPLE

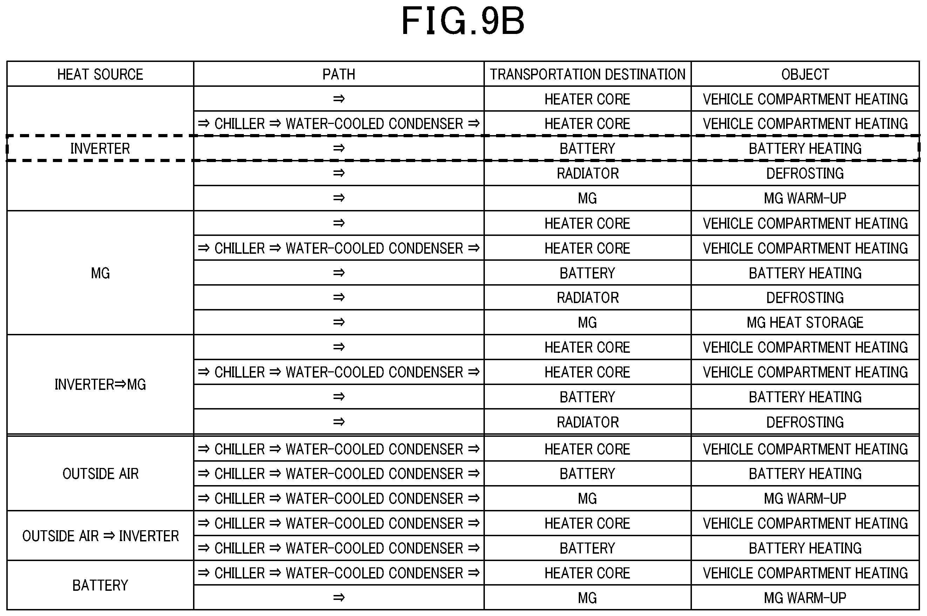

A case will be described in which, as shown in the broken-line frame in Fig. 9B, the refrigerant is heated by the inverter 43, and, for the purpose of warming up the battery 41, the refrigerant is transported to the battery 41.

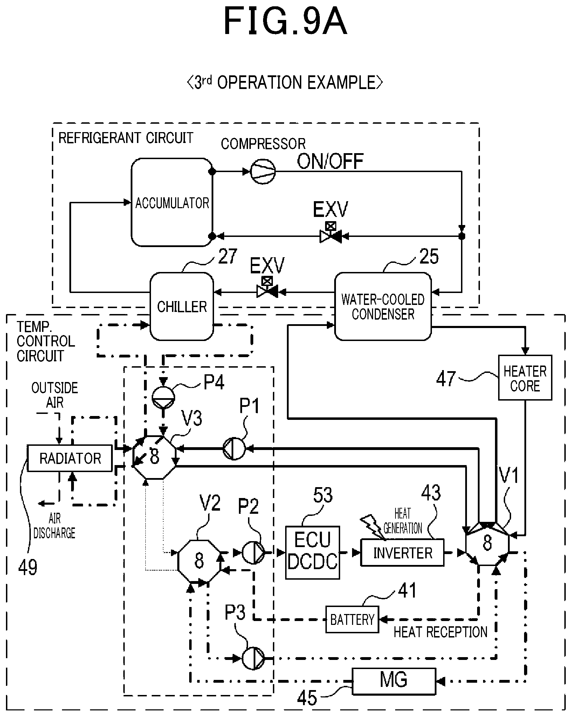

As shown in Fig. 9A, the refrigerant heated by the inverter 43 returns to the inverter 43 via the first valve V1, the battery 41, the second valve V2, the pump P2, and the ECU 53, as indicated by the broken line. It should be noted that the battery 41 is heated by the refrigerant heated by the inverter 43.

In the third operation example, heat is not generated by the motor 45; however, as indicated by the two-dot chain line, the refrigerant returns from the motor 45 to the motor 45 via the second valve V2, the pump P3, and the first valve V1.

Further, the refrigerant heated in the water-cooled condenser 25 returns to the water-cooled condenser 25 via the heater core 47, the first valve V1, the pump P1, the third valve V3, and the first valve V1, as indicated by the solid line.

Furthermore, the refrigerant cooled in the chiller 27 returns to the chiller 27 via the pump P4, the third valve V3, the radiator 49, and the third valve V3, as indicated by the one-dot chain line.

It should be noted that, as indicated by the thin broken line, the flow passage connecting the second valve V2 and the third valve V3 forms a closed circuit.

### FOURTH OPERATION EXAMPLE

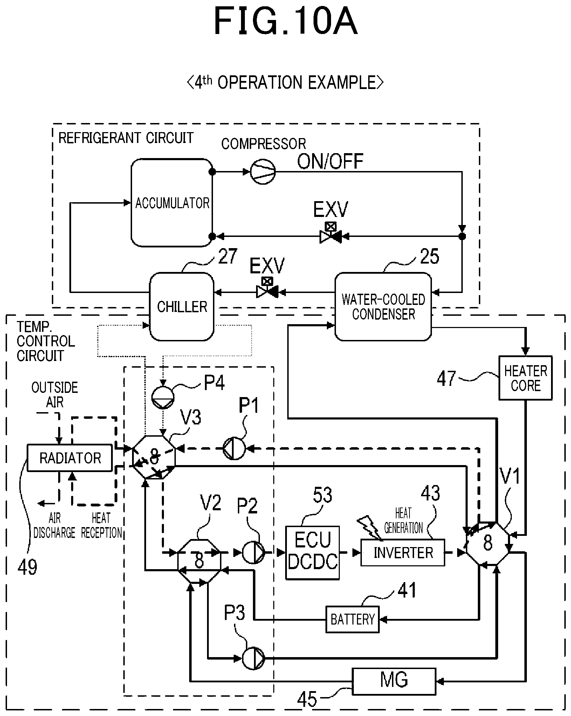

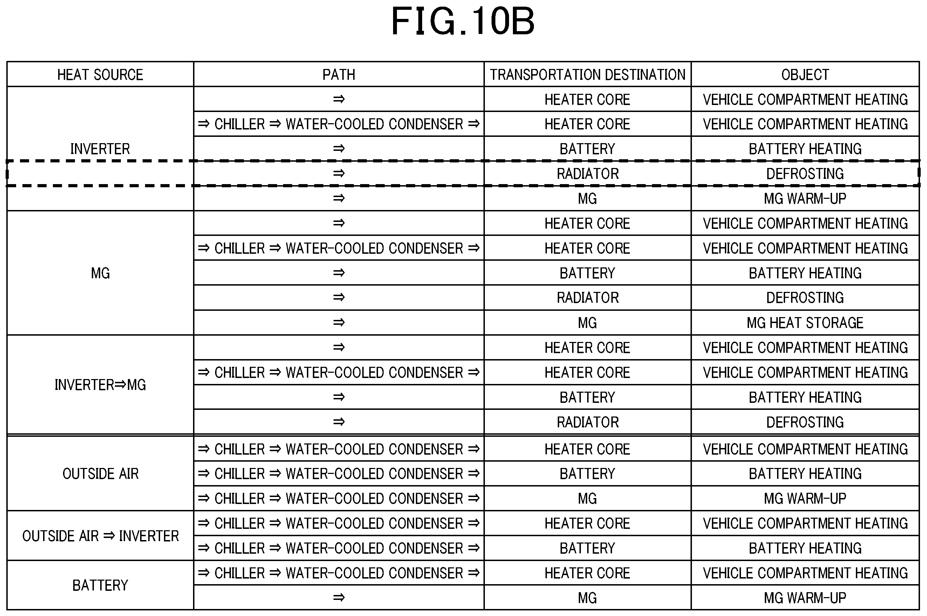

As indicated within the dashed-line frame in Fig. 10B, a case will be described in which, by utilizing heat generated by the inverter 43 to heat the refrigerant, the refrigerant is transported to the radiator 49 for the purpose of defrosting at the radiator 49.

As shown in Fig. 10A, the refrigerant heated by the inverter 43 returns to the inverter 43 via, as indicated by the dashed line, the first valve V1, the pump P1, the third valve V3, the radiator 49, the third valve V3, the second valve V2, the pump P2, and the ECU 53. The radiator 49 is heated by the refrigerant heated by the inverter 43 and then defrosted.

In the fourth operation example, no heat is generated in the motor 45. As indicated by the solid lines, the refrigerant flows from the motor 45, through the second valve V2, the pump P3, the first valve V1, the battery 41, the second valve V2, the third valve V3, the first valve V1, the water-cooled condenser 25, the heater core 47, and the first valve V1, and returns to the motor 45.

As indicated by the thin broken line, the flow path connecting the chiller 27 and the third valve V3 forms a closed circuit. The pump P4 is stopped.

### FIFTH OPERATION EXAMPLE

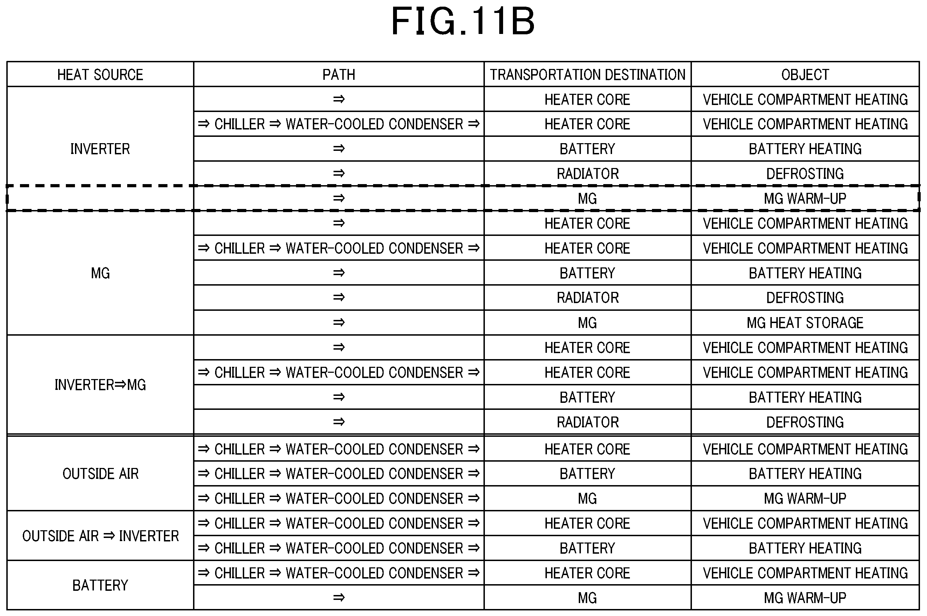

A case will be described in which, as shown within a broken-line frame in Fig. 11B, the refrigerant is heated by the inverter 43 and the heat transfer medium is transported to the motor 45 for the purpose of warming up the motor 45.

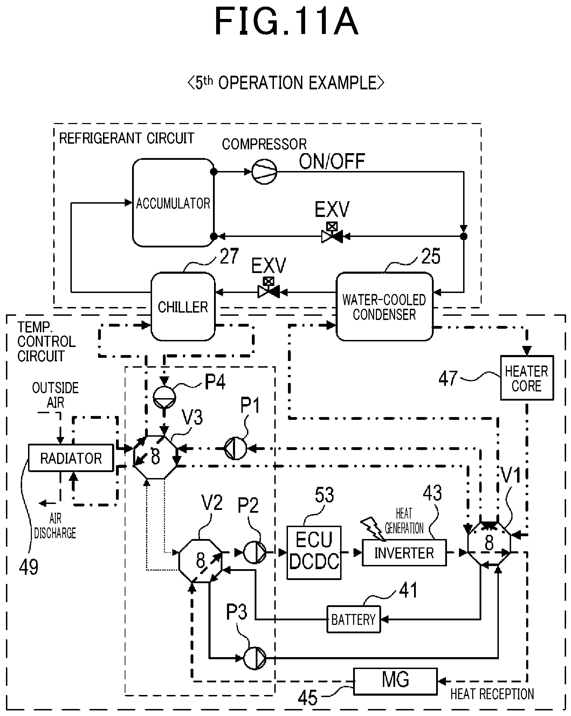

As shown in Fig. 11A, the refrigerant heated by the inverter 43 is transported to the motor 45 through the first valve V1, as indicated by the broken line, and heats the motor 45. Thereafter, the refrigerant returns from the motor 45 to the inverter 43 through the second valve V2, the pump P2, and the ECU 53.

Further, separately from the above-described flow path, the refrigerant flows from the battery 41 and returns to the battery 41 through the second valve V2, the pump P3, and the first valve V1, as indicated by the solid line.

Further, separately from the above-described flow path, the refrigerant, as indicated by the two-dot chain line, flows from the water-cooled condenser 25, through the heater core 47, the first valve V1, the pump P1, the third valve V3, and the first valve V1, and returns to the water-cooled condenser 25.

Further, separately from the above-described flow path, the refrigerant, as indicated by the one-dot chain line, flows from the chiller 27, through the pump P4, the third valve V3, the radiator 49, and the third valve V3, and returns to the chiller 27.

As indicated by the thin broken line, the flow path connecting the second valve V2 and the third valve V3 forms a closed circuit.

### SIXTH OPERATION EXAMPLE

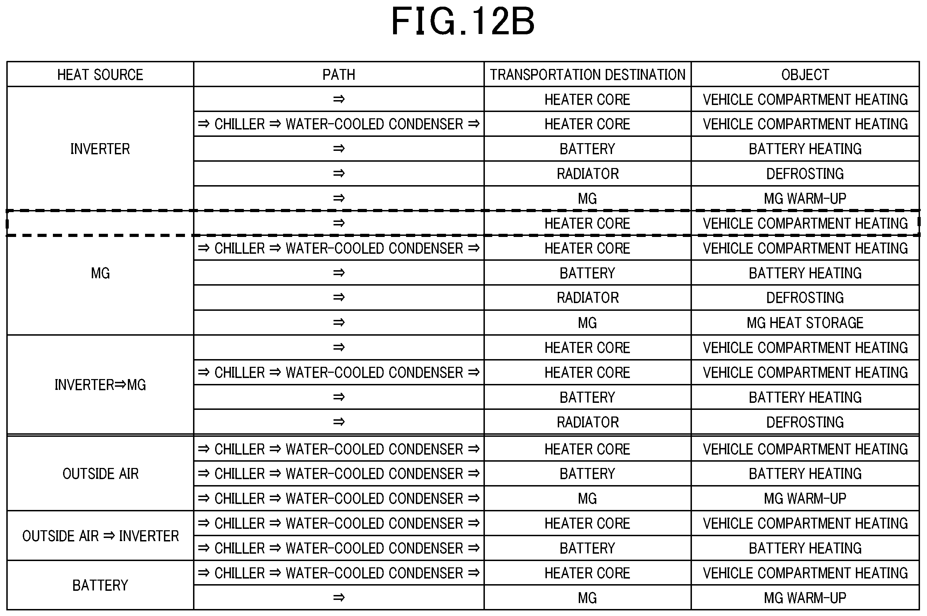

A case will be described in which, as shown within a broken-line frame in Fig. 12B, the refrigerant is heated by thermal energy generated by the motor 45 and transported to the heater core 47 for the purpose of heating the passenger compartment of the vehicle 1.

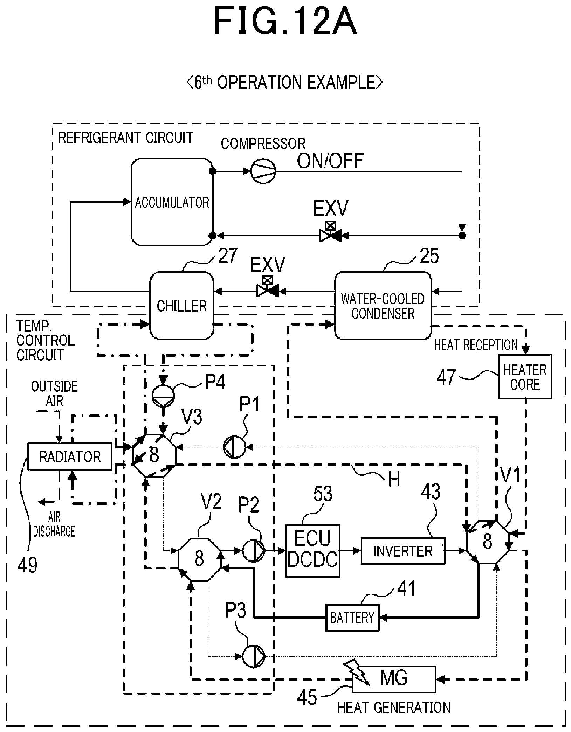

As shown in Fig. 12A, the refrigerant heated by the motor 45, as indicated by the broken line, returns to the motor 45 through the second valve V2, the third valve V3, the first valve V1, the water-cooled condenser 25, the heater core 47, and the first valve V1. The air in the passenger compartment of the vehicle 1 is heated in the heater core 47 by the refrigerant heated by the motor 45 and the water-cooled condenser 25.

In the sixth operation example, no heat is generated in the inverter 43; however, as indicated by the solid line, the refrigerant flows from the inverter 43, through the first valve V1, the battery 41, the second valve V2, the pump P2, and the ECU 53, and returns to the inverter 43.

Further, separately from the above-described flow path, the refrigerant, as indicated by the one-dot chain line, flows from the chiller 29, through the pump P4, the third valve V3, the radiator 49, and the third valve V3, and returns to the chiller 27.

As indicated by the thin broken line, the pumps P1 and P3 arranged in the pipes H are stopped.

### SEVENTH OPERATION EXAMPLE

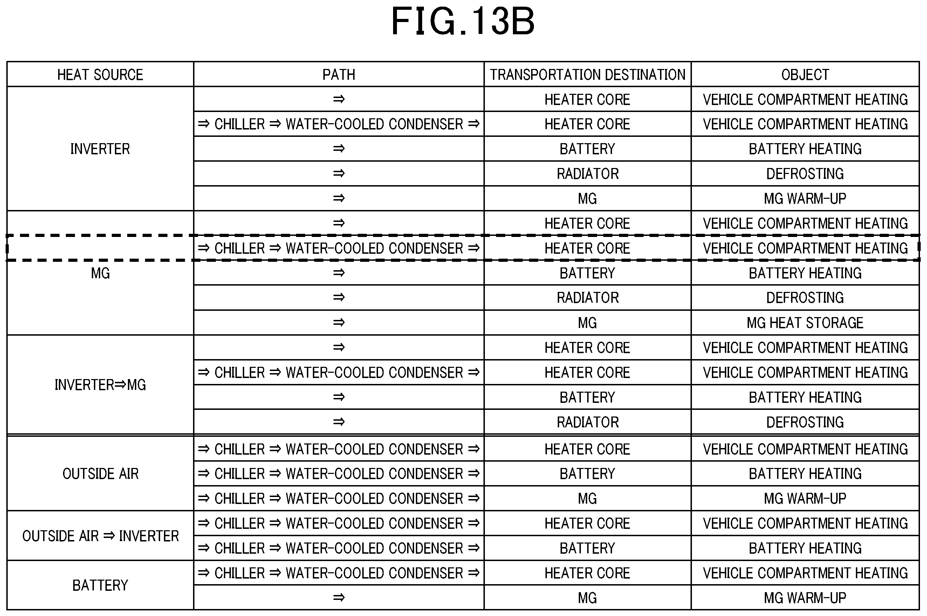

A case will be described in which, as shown within a broken-line frame in Fig. 13B, the refrigerant is heated by thermal energy generated by the motor 45 and, for the purpose of heating the passenger compartment of the vehicle 1, the heat of the refrigerant is transferred to the heater core 47 via the chiller 27 and the water-cooled condenser 25.

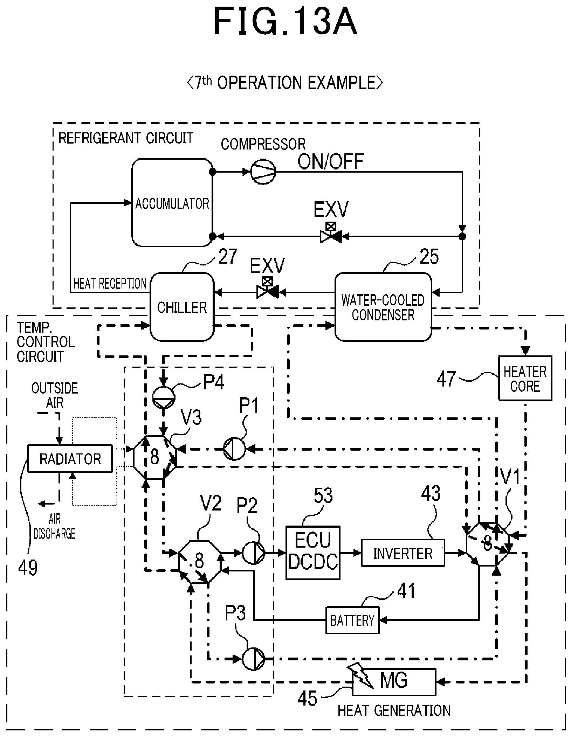

As shown in Fig. 13A, the refrigerant heated by the motor 45, as indicated by the broken line, returns to the motor 45 through the second valve V2, the third valve V3, the chiller 27, the pump P4, the third valve V3, and the first valve V1.

Further, separately from the above-described flow path, the refrigerant, as indicated by the one-dot chain line, flows from the water-cooled condenser 25, through the heater core 47, the first valve V1, the pump P1, the third valve V3, the second valve V2, the pump P3, and the first valve V1, and returns to the water-cooled condenser 25.

With the configuration described above, the chiller 27 increases in temperature due to the refrigerant heated in the motor 45, and thus the temperature of the refrigerant flowing in a portion of the chiller 27 disposed in the refrigerant circuit 5 increases. Accordingly, the temperature of the refrigerant flowing in a portion of the water-cooled condenser 25 which is disposed in the refrigerant circuit 5 also increases. This causes the air in the passenger compartment of the vehicle 1 to be heated by the heater core 47 supplied with the refrigerant whose temperature has increased.

In the seventh operation example, no heat is generated in the inverter 43; however, as indicated by the solid line, the refrigerant flows from the inverter 43, through the first valve V1, the battery 41, the second valve V2, the pump P2, and the ECU 53, and returns to the inverter 43.

As indicated by the thin broken line, the flow path connecting the radiator 49 and the third valve V3 forms a closed circuit.

### EIGHTH OPERATION EXAMPLE

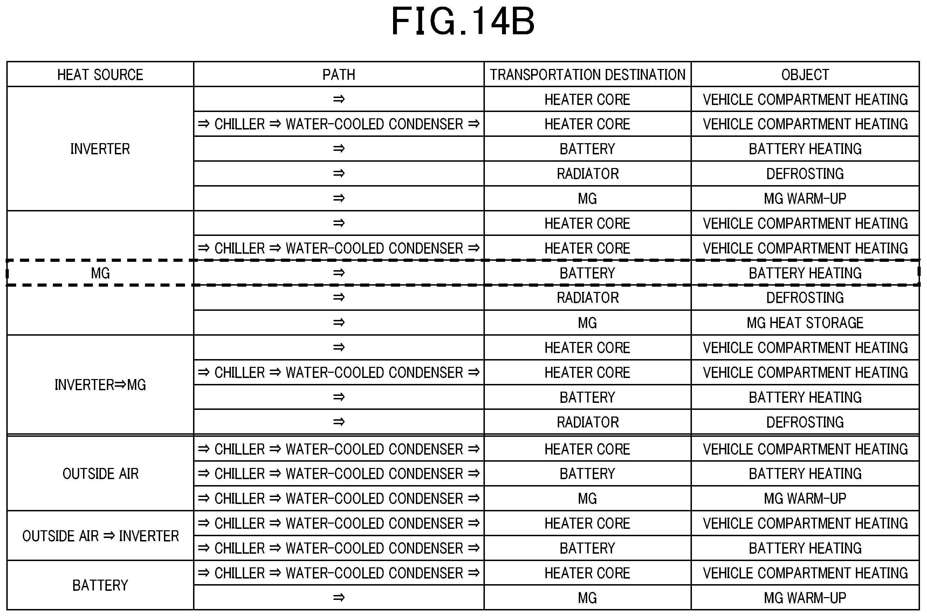

A case will be described in which, as shown within a broken-line frame in Fig. 14B, the refrigerant is heated by thermal energy produced by the motor 45 and then transported to the battery 41 for the purpose of warming up the battery 41.

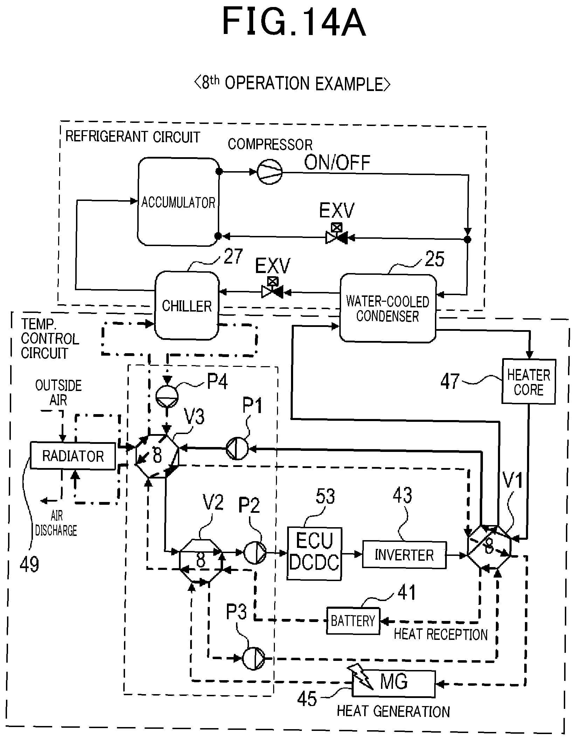

As shown in Fig. 14A, the refrigerant heated by the motor 45, as indicated by the broken line, returns to the motor 45 through the second valve V2, the pump P3, the first valve V1, the battery 41, the second valve V2, the third valve V3, and the first valve V1. The battery 41 is heated by the refrigerant heated by the motor 45.

In the eighth operation example, no heat is generated in the inverter 43; however, as indicated by the solid line, the refrigerant flows from the inverter 43, through the first valve V1, the water-cooled condenser 25, the heater core 47, the first valve V1, the pump P1, the third valve V3, the second valve V2, the pump P2, and the ECU 53, and returns to the inverter 43.

Further, separately from the above-described flow path, the refrigerant cooled by the chiller 27, as indicated by the one-dot chain line, flows through the pump P4, the third valve V3, the radiator 49, and the third valve V3, and returns to the chiller 27.

### NINTH OPERATION EXAMPLE

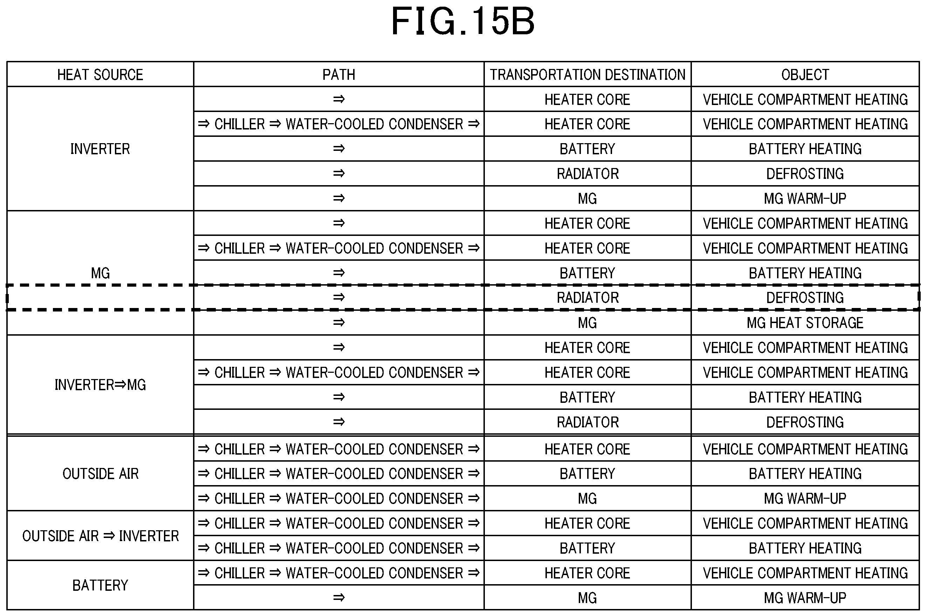

A case will be described in which, as shown within a broken-line frame in Fig. 15B, the refrigerant is heated by thermal energy produced by the motor 45 and transported to the radiator 49 for the purpose of defrosting at the radiator 49.

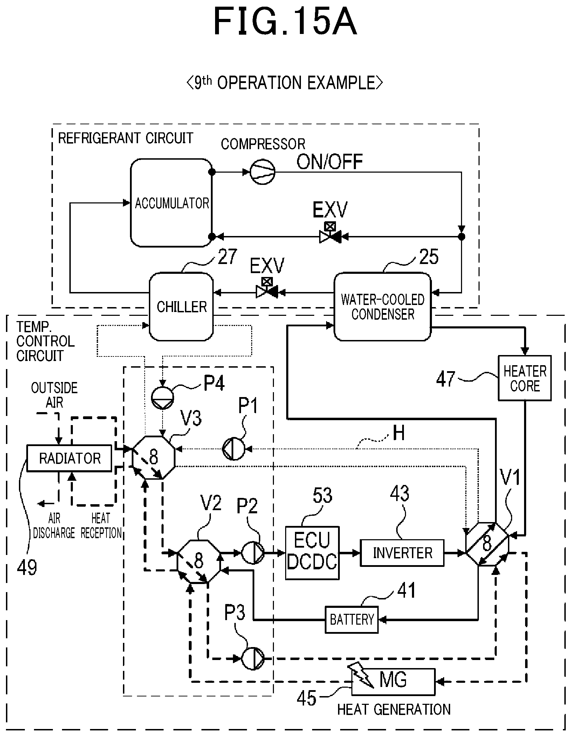

As shown in Fig. 15A, the refrigerant heated by the motor 45, as indicated by the broken line, returns to the motor 45 through the second valve V2, the third valve V3, the radiator 49, the third valve V3, the second valve V2, the pump P3, and the first valve V1. Defrosting is performed by heating the radiator 49 with the refrigerant heated by the motor 45.

In the ninth operation example, no heat is generated in the inverter 43; however, as indicated by the solid line in Fig. 15A, the refrigerant flows from the inverter 43, through the first valve V1, the water-cooled condenser 25, the heater core 47, the first valve V1, the battery 41, the second valve V2, the pump P2, and the ECU 53, and returns to the inverter 43.

The pumps P1 and P4 are, as indicated by thin broken lines, disposed in the pipes H are at rest.

### TENTH OPERATION EXAMPLE

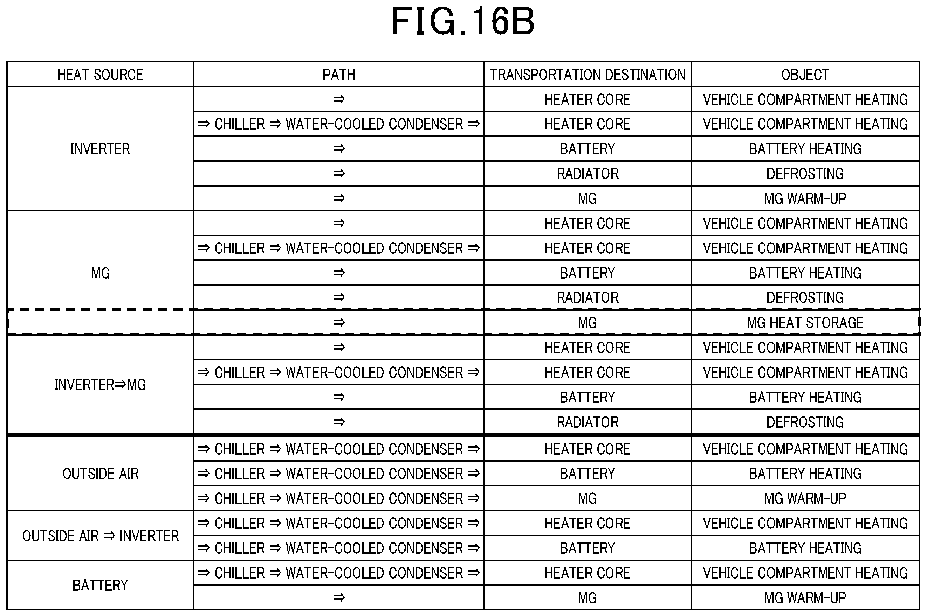

A case will be described in which, as shown within a broken-line frame in Fig. 16B, the refrigerant is heated by thermal energy generated by the motor 45 and transported to the motor 45 for the purpose of storing heat in the motor 45.

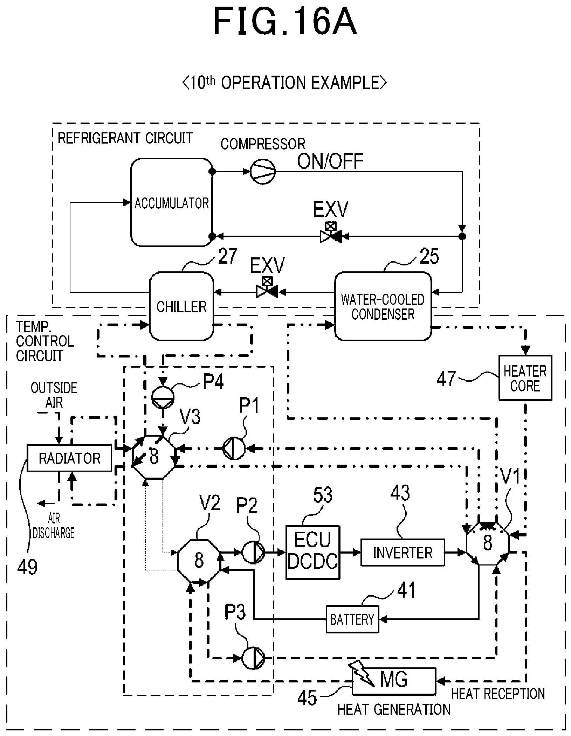

As shown in Fig. 16A, the refrigerant heated by the motor 45, as indicated by the broken line, returns to the motor 45 through the second valve V2, the pump P2, and the first valve V1, and heat is stored in the motor 45.

In the tenth operation example, no heat is generated in the inverter 43; however, as indicated by the solid line, the refrigerant flows from the inverter 43, through the first valve V1, the battery 41, the second valve V2, the pump P2, and the ECU 53, and returns to the inverter 43.

Further, separately from the above-described flow path, the refrigerant, as indicated by the two-dot chain line, flows from the water-cooled condenser 25, through the heater core 47, the first valve V1, the pump P1, the second valve V2, and the first valve V1, and returns to the water-cooled condenser 25.

Further, separately from the above-described flow path, the refrigerant, as indicated by the one-dot chain line, flows from the chiller 27, through the pump P4, the third valve V3, the radiator 49, and the third valve V3, and returns to the chiller 27.

As indicated by the thin broken line, the flow path connecting the second valve V2 and the third valve V3 forms a closed circuit.

### ELEVENTH OPERATION EXAMPLE

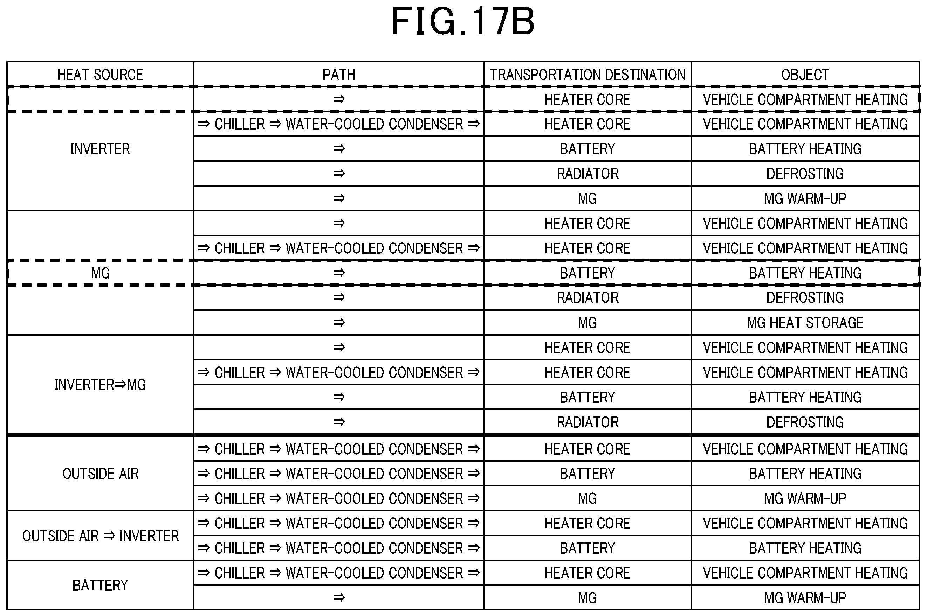

A case will be described in which, as shown within two broken-line frames in Fig. 17B, the refrigerant is heated by thermal energy generated by the inverter 43 and transported to the heater core 47 for the purpose of heating the passenger compartment of the vehicle 1, and the refrigerant is also heated by thermal energy generated by the motor 45 and transported to the battery 41 for the purpose of warming up the battery 41.

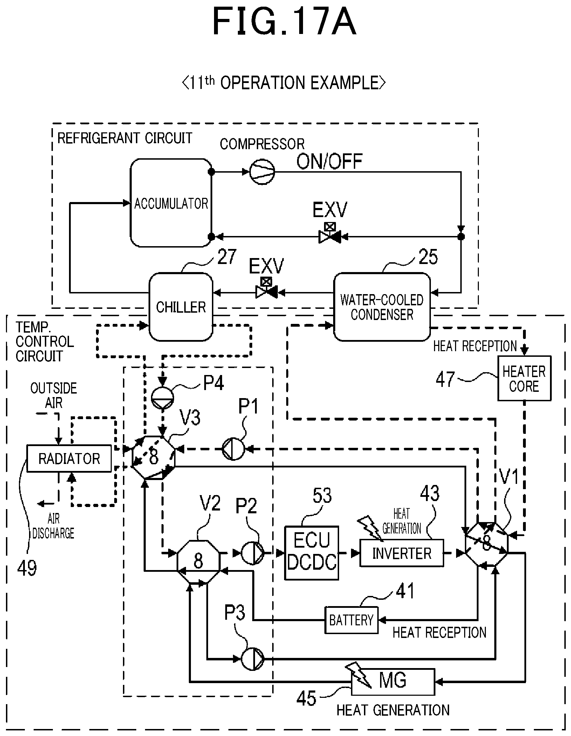

As shown in Fig. 17A, the refrigerant heated by the inverter 43, as indicated by the broken line, returns to the inverter 43 through the first valve V1, the water-cooled condenser 25, the heater core 47, the first valve V1, the pump P1, the third valve V3, the second valve V2, the pump P2, and the ECU 53. This heats the heater core 47 and elevates the temperature of air in the passenger compartment of the vehicle 1.

Further, separately from the above-described flow path, the refrigerant heated by the motor 45, as indicated by the solid line, returns to the motor 45 through the second valve V2, the pump P3, the first valve V1, the battery 41, the second valve V2, the third valve V3, and the first valve V1, thereby warming up the battery 41.

Further, separately from the above-described flow path, the refrigerant, as indicated by the broken line, flows from the chiller 27, through the pump P4, the third valve V3, the radiator 49, and the third valve V3, and returns to the chiller 27.

### TWELFTH OPERATION EXAMPLE

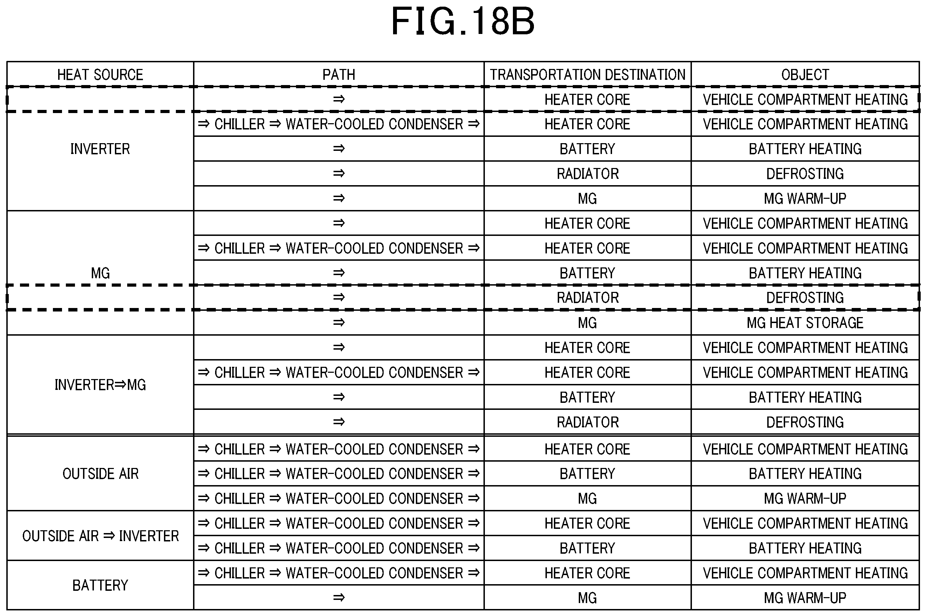

A case will be described in which, as shown within two broken-line frames in Fig. 18B, the refrigerant is heated by thermal energy generated by the inverter 43 and transported to the heater core 47 for the purpose of heating the passenger compartment of the vehicle 1, and the refrigerant is heated by thermal energy produced by the motor 45 and transported to the radiator 49 for the purpose of defrosting the radiator 49.

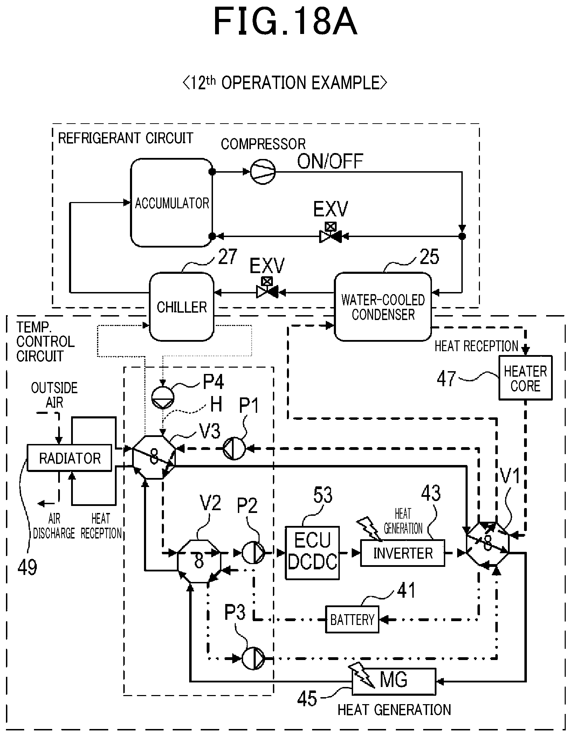

As shown in Fig. 18A, the refrigerant heated by the inverter 43, as indicated by the broken line, returns to the inverter 43 through the first valve V1, the water-cooled condenser 25, the heater core 47, the first valve V1, the pump P1, the third valve V3, the second valve V2, the pump P2, and the ECU 53. This heats the heater core 47 which elevates the temperature of air in the passenger compartment of the vehicle 1.

Further, separately from the above-described flow path, the refrigerant heated by the motor 45, as indicated by the solid line, returns to the motor 45 through the second valve V2, the third valve V3, the radiator 49, the third valve V3, and the first valve V1. This defrosts the radiator 49.

The pump P4 disposed in the pipe H indicated by the thin broken line is not driven.

### THIRTEENTH OPERATION EXAMPLE

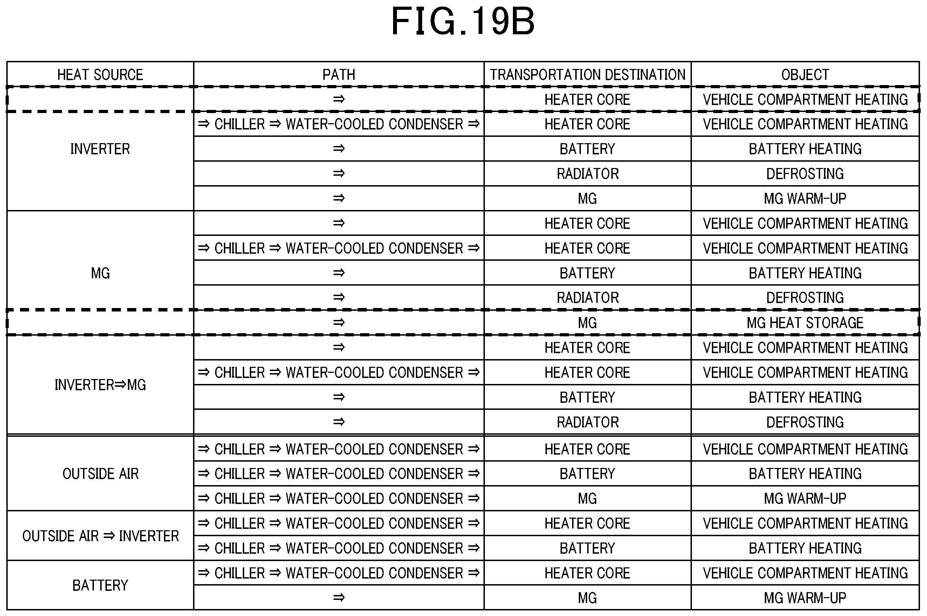

A case will be described in which, as shown within two broken-line frames in Fig. 19B, the refrigerant is heated by thermal energy generated by the inverter 43 and transported to the heater core 47 for the purpose of heating the passenger compartment of the vehicle 1, and the refrigerant is also heated by thermal energy generated by the motor 45 and transported to the motor 45 itself for the purpose of storing heat in the motor 45.

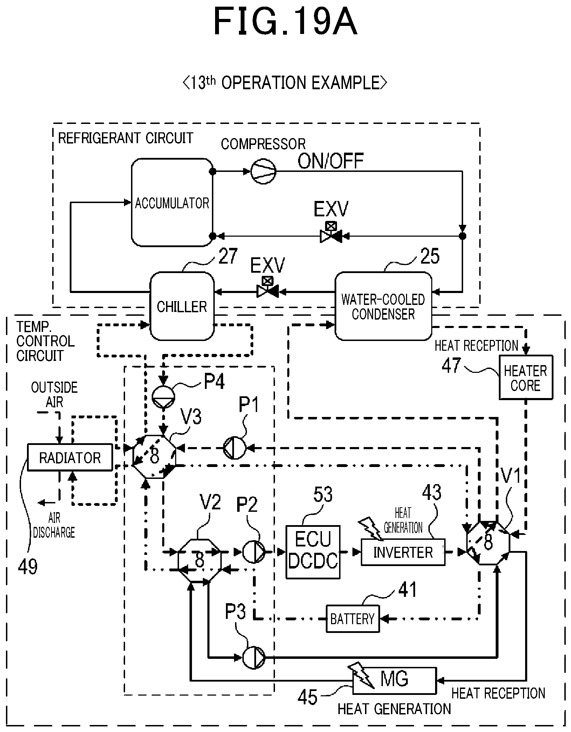

As shown in Fig. 19A, the refrigerant heated by the inverter 43, as indicated by the broken line, returns to the inverter 43 through the first valve V1, the water-cooled condenser 25, the heater core 47, the first valve V1, the pump P1, the third valve V3, the second valve V2, the pump P2, and the ECU 53. This heats the heater core 47, thereby increasing the temperature of air in the passenger compartment of the vehicle 1.

Further, separately from the above-described flow path, the refrigerant heated by the motor 45, as indicated by the solid line, returns to the motor 45 through the second valve V2, the pump P3, and the first valve V1. The heat is, therefore, stored in the motor 45.

Further, separately from the above-described flow path, the refrigerant, as indicated by the broken line, flows from the chiller 27, through the pump P4, the third valve V3, the radiator 49, and the third valve V3, and returns to the chiller 27.

### FOURTEENTH OPERATION EXAMPLE

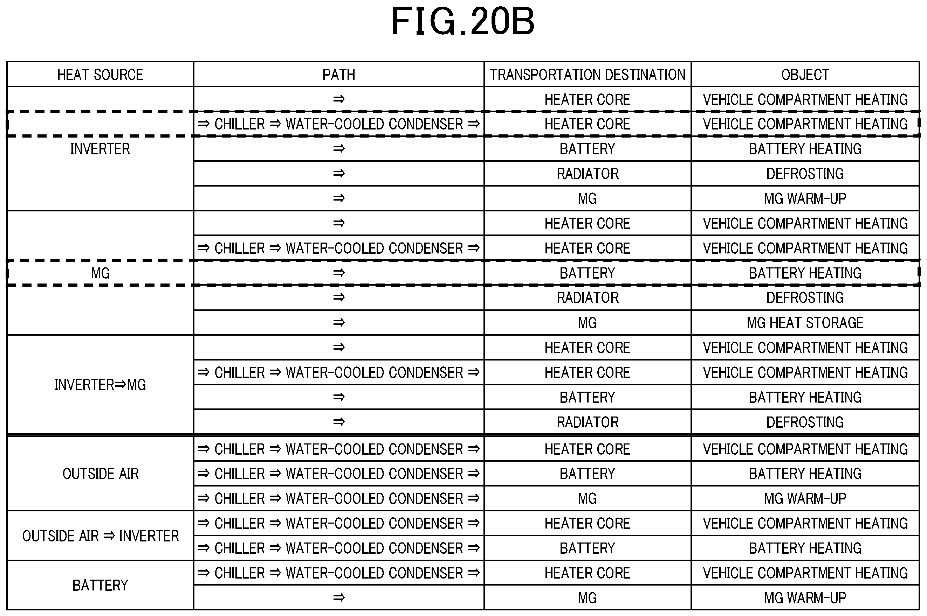

A case will be described in which, as demonstrated within two broken-line frames in Fig. 20B, the refrigerant is heated by thermal energy generated by the inverter 43, heat of the refrigerant is transmitted to the heater core 47 via the chiller 27 and the water-cooled condenser 25 for the purpose of heating the passenger compartment of the vehicle 1, and the refrigerant is also heated by thermal energy generated by the motor 45 and transported to the battery 41 for the purpose of warming up the battery 41.

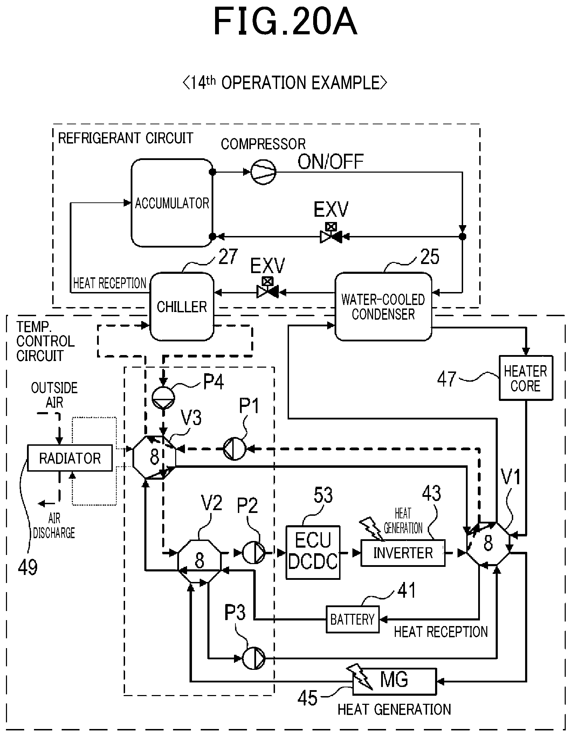

As shown in Fig. 20A, the refrigerant heated by the inverter 43, as indicated by the broken line, returns to the inverter 43 through the first valve V1, the pump P1, the third valve V3, the chiller 27, the pump P4, the third valve V3, the second valve V2, the pump P2, and the ECU 53.

Further, separately from the above-described circuit, the refrigerant heated by the motor 45, as indicated by the solid line, returns to the motor 45 through the second valve V2, the pump P3, the first valve V1, the battery 41, the second valve V2, the third valve V3, the first valve V1, the water-cooled condenser 25, the heater core 47, and the first valve V1. This warms up the battery 41.

With the configuration described above, the chiller 27 increases in temperature due to the refrigerant heated in the inverter 43, and thus the temperature of the refrigerant flowing in a portion of the chiller 27 which is disposed in the refrigerant circuit increases. Therefore, the temperature of the refrigerant flowing in the water-cooled condenser 25 which is disposed in the refrigerant circuit 5 also increases, and the temperature of the heater core 47 also increases. This causes the air in the passenger compartment of the vehicle 1 to be heated by the heater core 47.

As indicated by the thin broken line, the flow path connecting the radiator 49 and the third valve V3 forms a closed circuit.

### FIFTEENTH OPERATION EXAMPLE

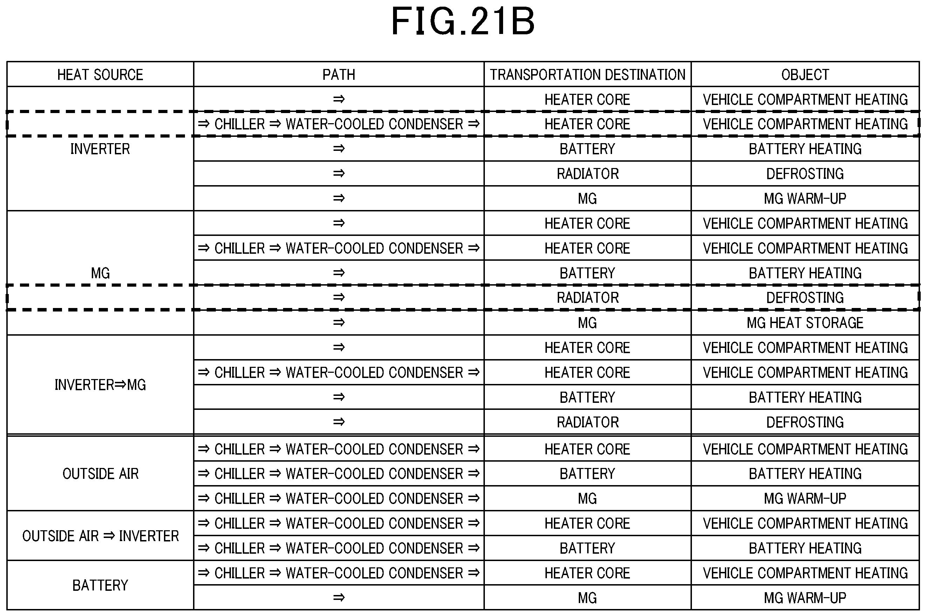

A case will be described in which, as shown within two broken-line frames in Fig. 21B, the refrigerant is heated by thermal energy generated by the inverter 43, so that heat of the refrigerant is transmitted to the heater core 47 via the chiller 27 and the water-cooled condenser 25 for the purpose of heating the passenger compartment of the vehicle 1, and the refrigerant is also heated by thermal energy generated by the motor 45 and transported to the radiator 49 for the purpose of defrosting the radiator 49.

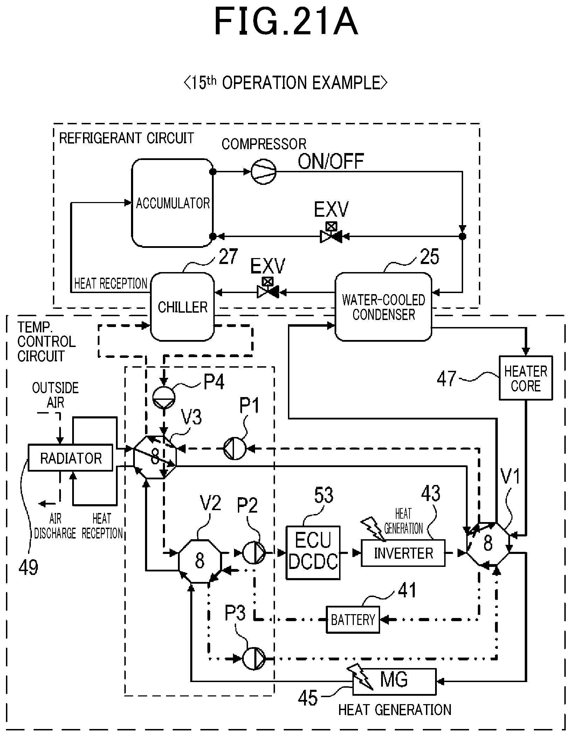

As shown in Fig. 21A, the refrigerant heated by the inverter 43, as indicated by the broken line, returns to the inverter 43 through the first valve V1, the pump P1, the third valve V3, the chiller 27, the pump P4, the third valve V3, the second valve V2, the pump P2, and the ECU 53.

Further, separately from the above-described circuit, the refrigerant heated by the motor 45, as indicated by the solid line, returns to the motor 45 through the second valve V2, the third valve V3, the radiator 49, the third valve V3, the first valve V1, the water-cooled condenser 25, the heater core 47, and the first valve V1. This defrosts the radiator 49.

With the configuration described above, the chiller 27 increases in temperature due to the refrigerant heated by the inverter 43, and thus the temperature of the refrigerant flowing in a portion of the chiller 27 which is disposed in the refrigerant circuit 5 increases. This causes the temperature of the refrigerant flowing in a portion of the water-cooled condenser 25 which is disposed in the refrigerant circuit 5 to be increased and also causes the temperature of the heater core 47 to be increased. This causes the air in the passenger compartment of the vehicle 1 to be heated by the heater core 47.

### SIXTEENTH OPERATION EXAMPLE

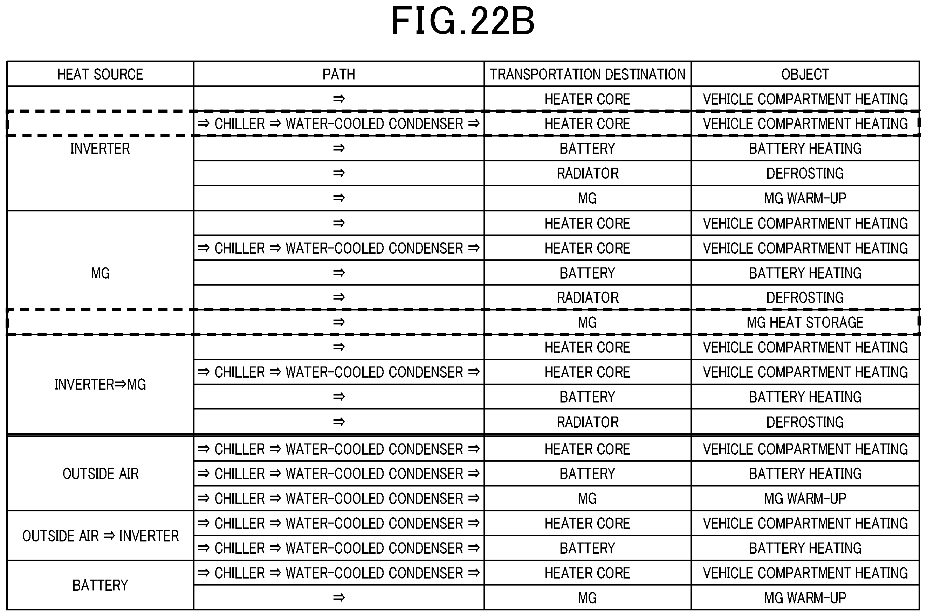

A case will be described in which, as shown within two broken-line frames in Fig. 22B, the refrigerant is heated by thermal energy generated by the inverter 43, so that heat of the refrigerant is transmitted to the heater core 47 via the chiller 27 and the water-cooled condenser 25 for the purpose of heating the passenger compartment of the vehicle 1, and the refrigerant is also heated by heat generation of the motor 45 and transported to the motor 45 for the purpose of storing heat in the motor 45.

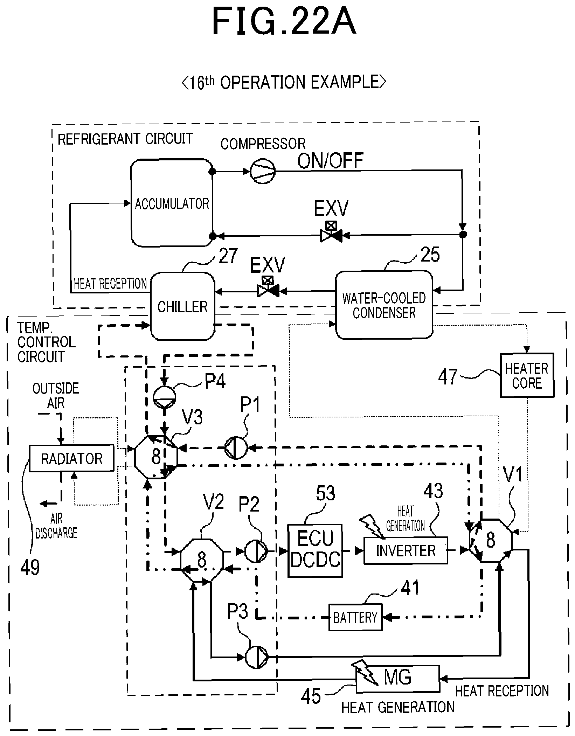

As shown in Fig. 22A, the refrigerant heated by the inverter 43, as indicated by the broken line, returns to the inverter 43 through the first valve V1, the pump P1, the third valve V3, the chiller 27, the pump P4, the third valve V3, the second valve V2, the pump P2, and the ECU 53.

Further, separately from the above-described circuit, the refrigerant heated by the motor 45, as indicated by the solid line, returns to the motor 45 through the second valve V2, the pump P3, and the first valve V1. This causes heat to be stored in the motor 45.

With the configuration described above, the chiller 27 increases in temperature due to the refrigerant heated in the inverter 43, and thus the temperature of the refrigerant flowing in a portion of the chiller 27 which is disposed in the refrigerant circuit 5 increases. This causes the temperature of the refrigerant flowing in a portion of the water-cooled condenser 25 which is disposed in the refrigerant circuit 5 to be also increased, so that the temperature of the heater core 47 is increased. This causes the air in the passenger compartment of the vehicle 1 to be heated by the heater core 47.

Further, separately from the above-described flow path, the refrigerant, as indicated by the two-dot chain lines, flows from the battery 41, through the second valve V2, the third valve V3, and the first valve V1, and returns to the battery 41.

As indicated by a thin broken line in Fig. 21A, the flow path extending from the first valve V1, through the water-cooled condenser 25 and the heater core 47, and returning to the first valve V1 forms a closed circuit. Further, the flow path connecting the third valve V3 and the radiator 49 forms a closed circuit.

### SEVENTEENTH OPERATION EXAMPLE

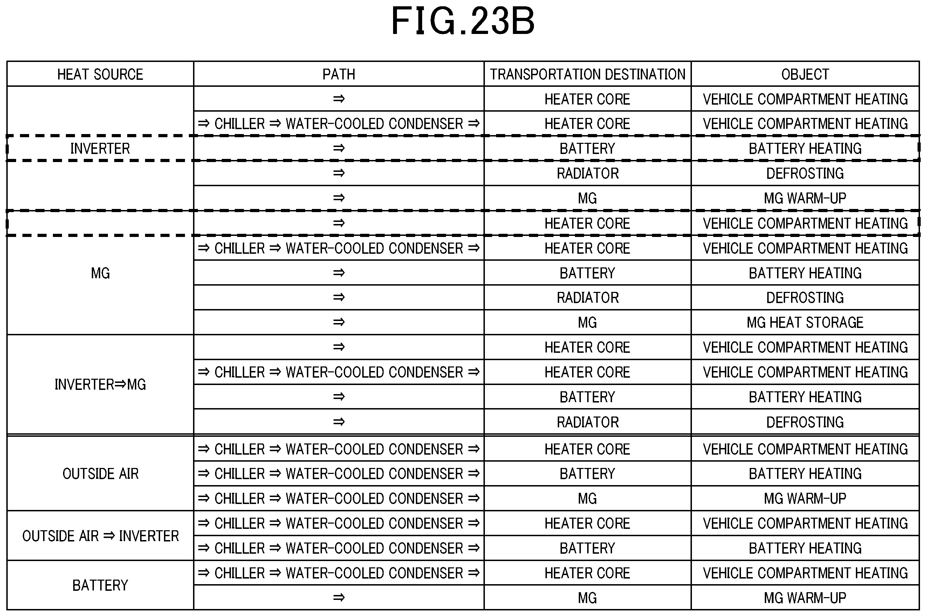

A case will be described in which, as shown within two broken-line frames in Fig. 23B, the refrigerant is heated by thermal energy generated by the inverter 43 and transported to the battery 41 for the purpose of warming up the battery 41, and the refrigerant is also heated by thermal energy generated by the motor 45, so that heat of the refrigerant is transmitted to the heater core 47 for the purpose of heating the passenger compartment of the vehicle 1.

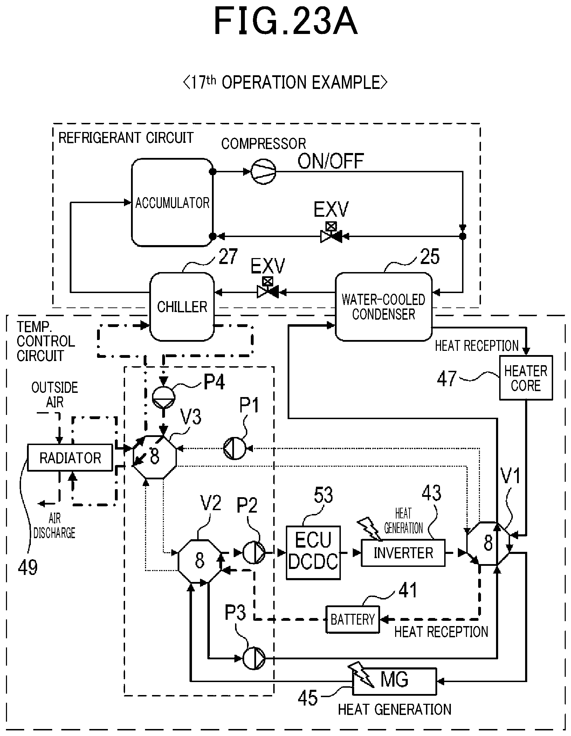

As shown in Fig. 23A, the refrigerant heated by the inverter 43, as indicated by the broken line, is transported to the battery 41 through the first valve V1, and further returns from the battery 41 to the inverter 43 through the second valve V2, the pump P2, and the ECU 53. This warms up the battery 41.

Further, separately from the above-described flow path, the refrigerant heated by the motor 45, as indicated by the solid line, returns to the motor 45 through the second valve V2, the pump P3, the first valve V1, the water-cooled condenser 25, the heater core 47, and the first valve V1.

Further, separately from the above-described flow path, the refrigerant, as indicated by the one-dot chain line, flows from the chiller 27, through the pump P4, the third valve V3, the radiator 49, and the third valve V3, and returns to the chiller 27.

As indicated by the thin broken lines, the flow path connecting the first valve V1 and the third valve V3 and the flow path connecting the third valve V3 and the second valve V2 form closed circuits. The pump P1 is at rest.

### EIGHTEENTH OPERATION EXAMPLE

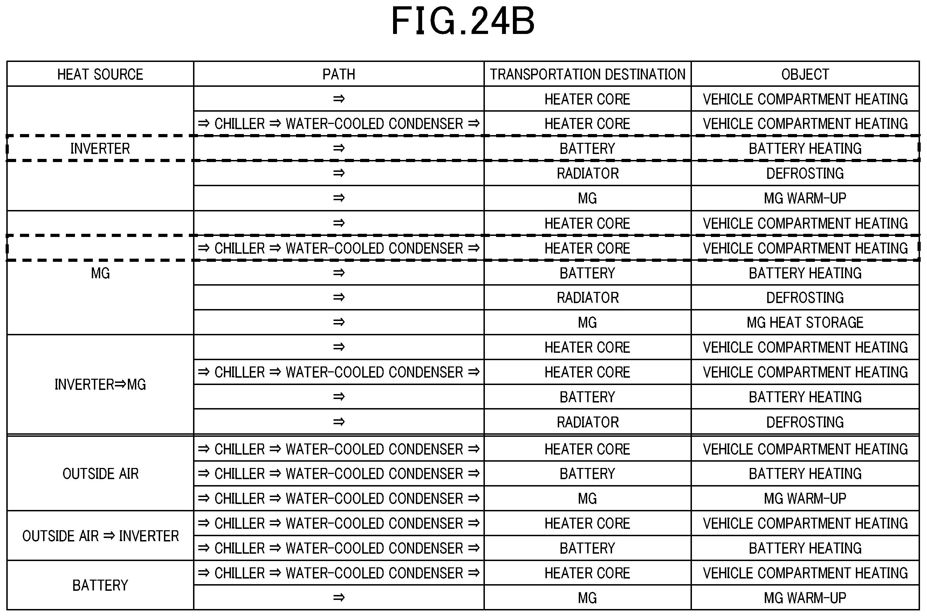

A case will be described in which, as shown within two broken-line frames in Fig. 24B, the refrigerant is heated by thermal energy generated by the inverter 43 and transported to the battery 41 for the purpose of warming up the battery 41, and the refrigerant is also heated by thermal energy generated by the motor 45, so that heat of the refrigerant is transmitted to the heater core 47 via the chiller 27 and the water-cooled condenser 25 for the purpose of heating the passenger compartment of the vehicle 1.

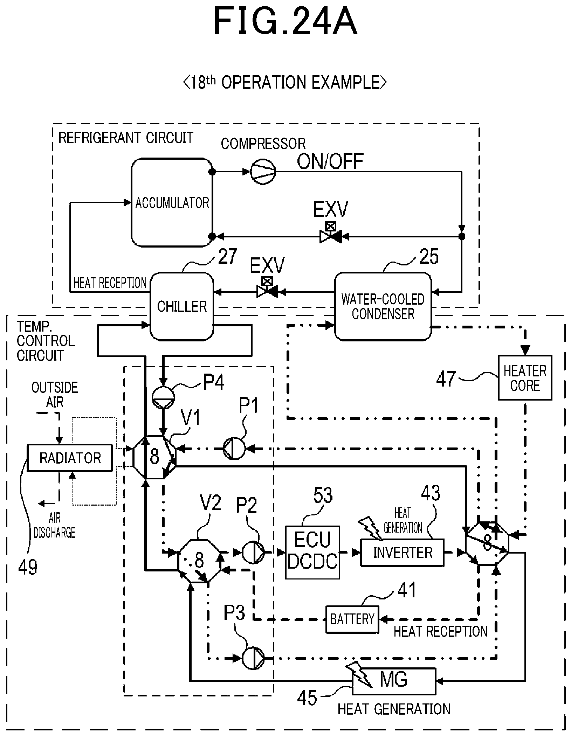

As shown in Fig. 24A, the refrigerant heated by the inverter 43, as indicated by the broken lines, is transported to the battery 41 through the first valve V1, and further returns from the battery 41 to the inverter 43 through the second valve V2, the pump P2, and the ECU 53. Accordingly, the battery 41 is warmed up.

Further, separately from the above-described flow path, the refrigerant heated by the motor 45, as indicated by the solid lines, returns to the motor 45 through the second valve V2, the third valve V3, the chiller 27, the pump P4, the third valve V3, and the first valve V1.

Further, separately from the above-described flow path, the refrigerant, as indicated by the two-dot chain line, flows from the water-cooled condenser 25, through the heater core 47, the first valve V1, the pump P1, the third valve V3, the second valve V2, the pump P3, and the first valve V1, and returns to the water-cooled condenser 25.

With the configuration described above, the chiller 27 increases in temperature due to the refrigerant heated in the motor 45, thereby causing the temperature of the refrigerant flowing in a portion of the chiller 27 which is disposed in the refrigerant circuit 5 to be increased. Therefore, the temperature of the refrigerant flowing in a portion of the water-cooled condenser 25 which is disposed in the refrigerant circuit 5 to be also increased. The temperature of the heater core 47 is also increased. This causes the air in the passenger compartment of the vehicle 1 to be heated by the heater core 47.

As indicated by the thin broken line, the flow path connecting the third valve V3 and the radiator 49 forms a closed circuit.

### NINETEENTH OPERATION EXAMPLE

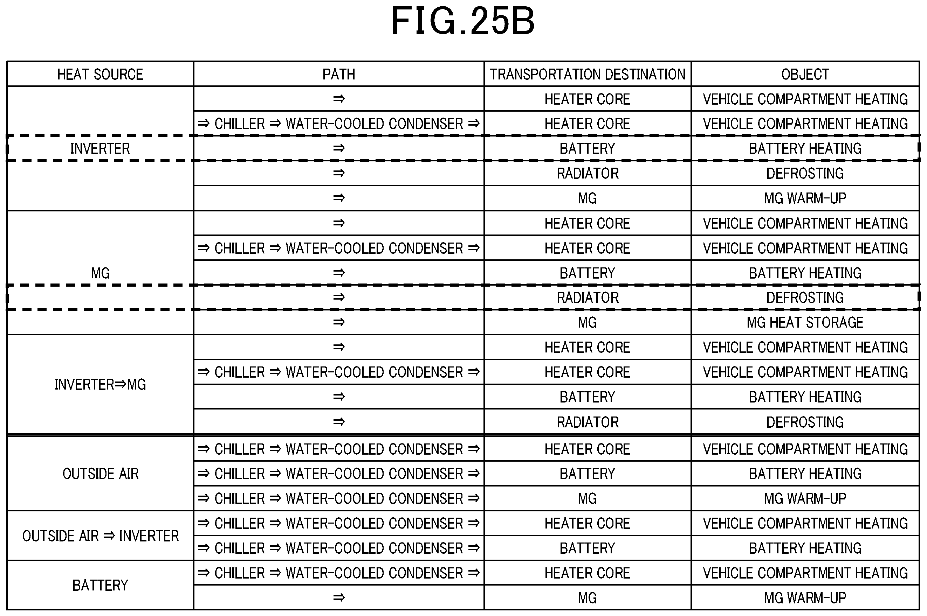

A case will be described in which, as shown within two broken-line frames in Fig. 25B, the refrigerant is heated by thermal energy generated by the inverter 43 and transported to the battery 41 for the purpose of warming up the battery 41, and the refrigerant is also heated by thermal energy generated by the motor 45 and transported to the radiator 49 for the purpose of defrosting the radiator 49.

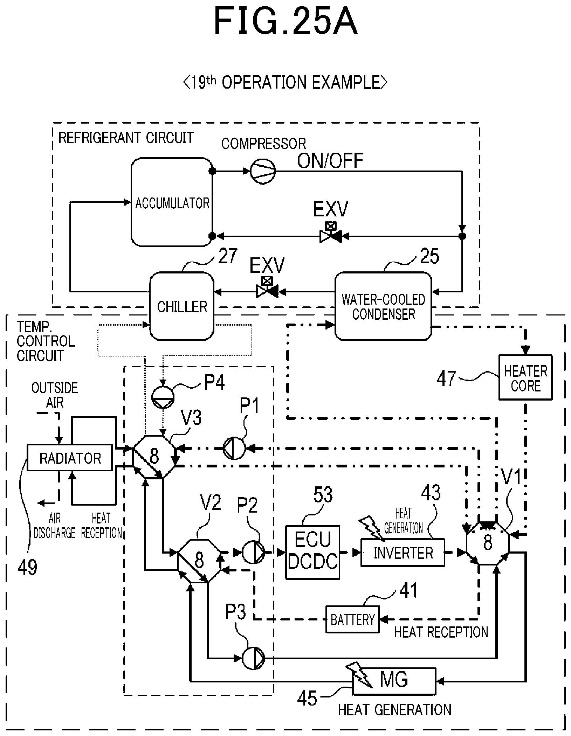

As shown in Fig. 25A, the refrigerant heated by the inverter 43, as indicated by the broken line, is transported to the battery 41 through the first valve V1, and further returns from the battery 41 to the inverter 43 through the second valve V2, the pump P2, and the ECU 53. This warms up the battery 41.

Further, separately from the above-described flow path, the refrigerant heated by the motor 45, as indicated by the solid line, returns to the motor 45 through the second valve V2, the third valve V3, the radiator 49, the third valve V3, the second valve V2, the pump P3, and the first valve V1. This defrosts the radiator 49.

Further, separately from the above-described flow path, the refrigerant, as indicated by the two-dot chain line, flows from the water-cooled condenser 25, through the heater core 47, the first valve V1, the pump P1, the third valve V3, and the first valve V1, and returns to the water-cooled condenser 25.

As indicated by the thin broken line, the flow path extending from the third valve V3, through the chiller 27 and the pump P4, and returning to the third valve V3 forms a closed circuit. The pump P4 is at rest.

### TWENTIETH OPERATION EXAMPLE

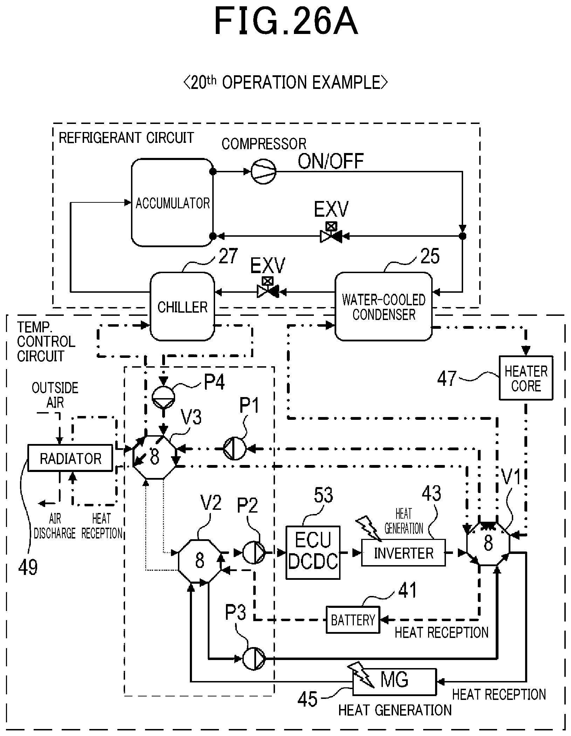

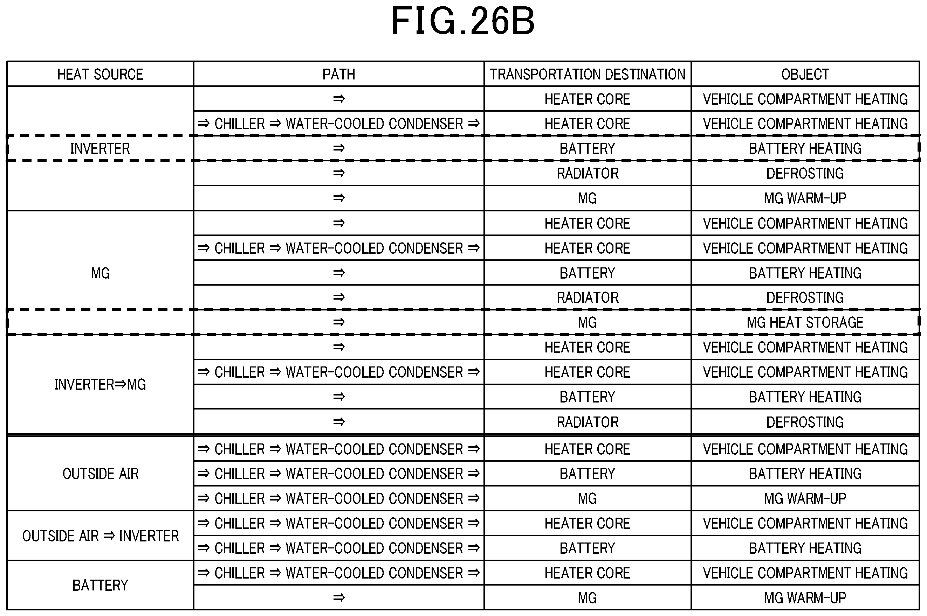

As shown within the two dashed-line frames in Fig. 26B, a case will be described in which the refrigerant is heated by thermal energy generated by the inverter 43 and transported to the battery 41 for the purpose of warming up the battery 41, and in which the refrigerant is heated by thermal energy generated by the motor 45 and transported to the motor 45 for the purpose of heat storage in the motor 45.

As shown in Fig. 26A, the refrigerant heated by the inverter 43 is transported to the battery 41 via the first valve V1, as indicated by a dashed line, and is further returned from the battery 41 to the inverter 43 via the second valve V2, the pump P2, and the ECU 53. This warms up the battery 41.

Separately from the above-described flow path, the refrigerant heated by the motor 45 is returned to the motor 45 via the second valve V2, the pump P3, and the first valve V1, as indicated by a solid line. This stores the heat in the motor 45.

Separately from the above-described flow paths, the refrigerant is, as indicated by a two-dot chain line, returned from the water-cooled condenser 25 to the heater core 47, to the first valve V1, to the pump P1, to the third valve V3, to the first valve V1, and then to the water-cooled condenser 25.

Separately from the above-described flow paths, the refrigerant is, as indicated by a one-dot chain line, returned from the chiller 27 to the pump P4, to the third valve V3, to the radiator 49, to the third valve V3, and then to the chiller 27.

### TWENTY-FIRST OPERATION EXAMPLE

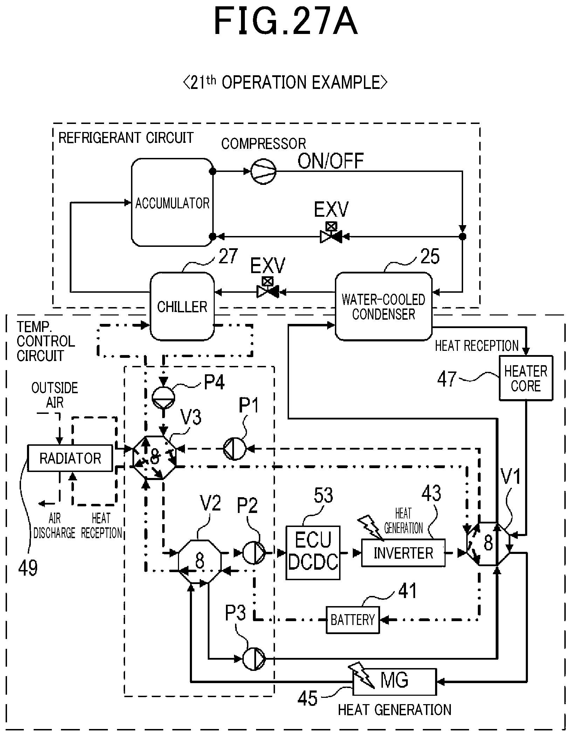

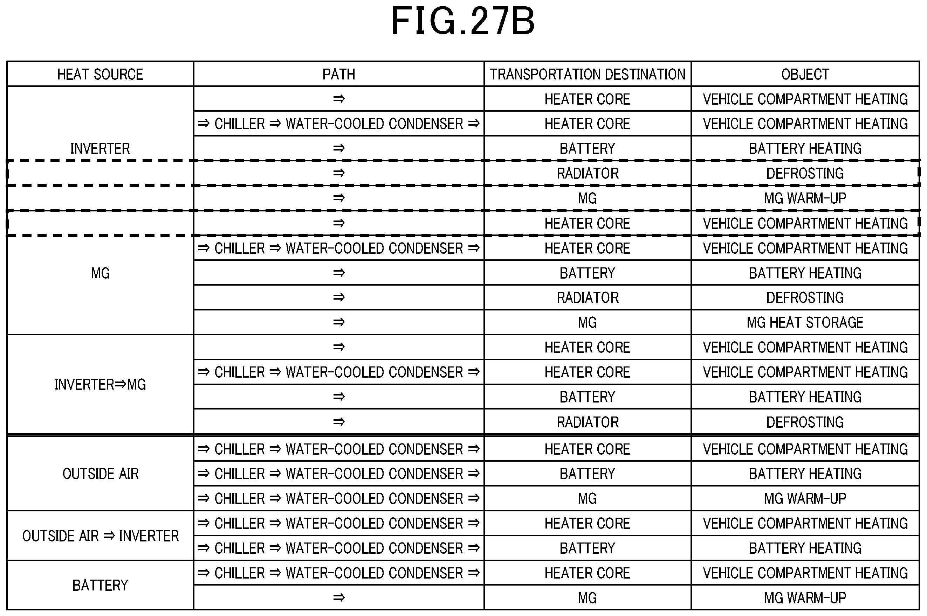

As shown within the two dashed-line frames in Fig. 27B, a case will be described in which the refrigerant is heated by thermal energy generated by the inverter 43 and transported to the radiator 49 for the purpose of defrosting the radiator 49, and in which the refrigerant is heated by thermal energy generated by the motor 45 and transported to the heater core 47 for the purpose of heating the passenger compartment of the vehicle 1.

As shown in Fig. 27A, the refrigerant heated by the inverter 43 is, as indicated by a dashed line, returned to the inverter 43 via the first valve V1, the pump P1, the third valve V3, the radiator 49, the third valve V3, the second valve V2, the pump P2, and the ECU 53, as indicated by a dashed line. This defrosts the radiator 49.

Separately from the above-described flow path, the refrigerant heated by the motor 45 is, as indicated by a solid line, returned to the motor 45 via the second valve V2, the pump P3, the first valve V1, the water-cooled condenser 25, the heater core 47, and the first valve V1. This heats the passenger compartment of the vehicle 1 using the heater core 47.

Separately from the above-described flow paths, the refrigerant is, as indicated by a two-dot chain line, returned from the chiller 27 to the pump P4, the third valve V3, the first valve V1, the battery 41, the second valve V2, the third valve V3, and then to the chiller 27.

### TWENTY-SECOND OPERATION EXAMPLE

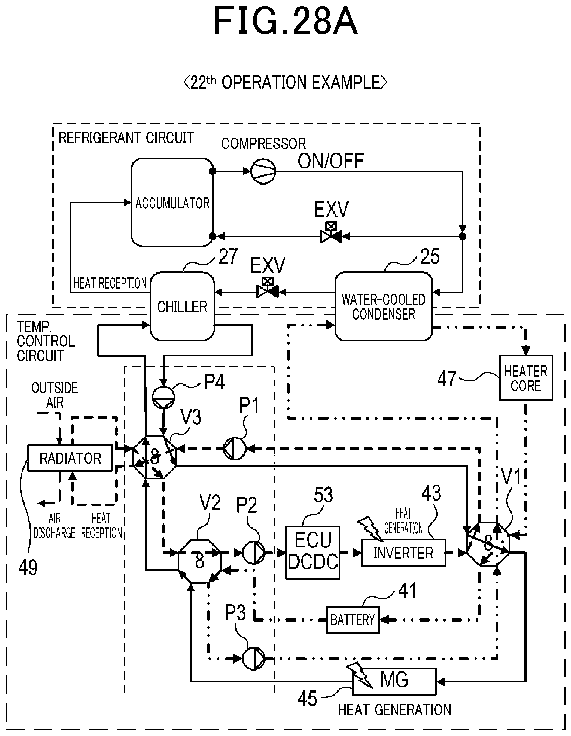

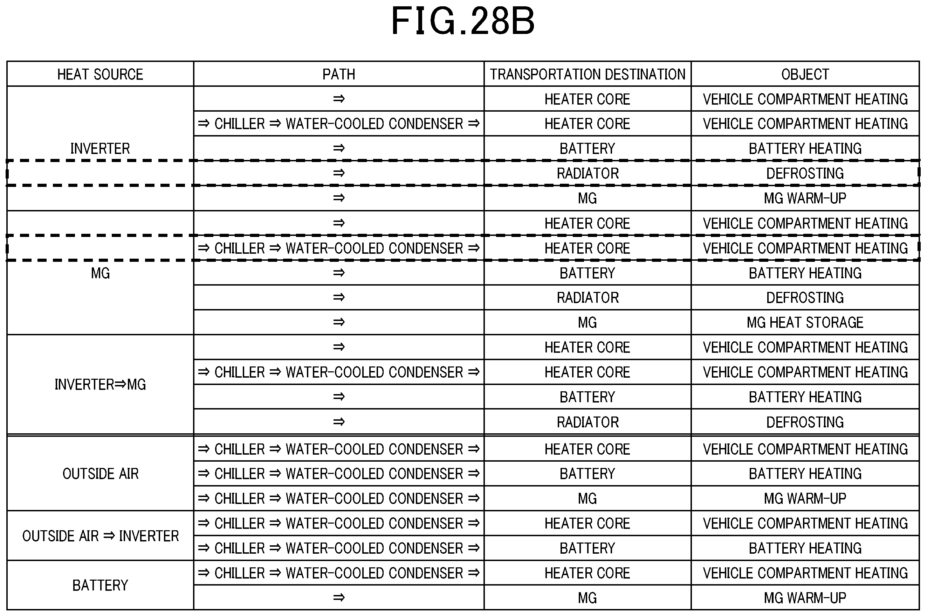

As shown within the two dashed-line frames in Fig. 28B, a case will be described in which the refrigerant is heated by thermal energy generated by the inverter 43 and transported to the radiator 49 for the purpose of defrosting the radiator 49, and in which the refrigerant is heated by thermal energy generated by the motor 45 and then transferred to the heater core 47 via the chiller 27 and the water-cooled condenser 25 for the purpose of heating the passenger compartment of the vehicle 1.

As shown in Fig. 28A, the refrigerant heated by the inverter 43 is returned to the inverter 43 via the first valve V1, the pump P1, the third valve V3, the radiator 49, the third valve V3, the second valve V2, the pump P2, and the ECU 53, as indicated by a dashed line. This defrosts the radiator 49.

Separately from the above-described flow path, the refrigerant heated by the motor 45 is, as indicated by a solid line, returned to the motor 45 via the second valve V2, the third valve V3, the chiller 27, the pump P4, the third valve V3, and the first valve V1.

Separately from the above-described flow paths, the refrigerant is, as indicated by a two-dot chain line, returned from the water-cooled condenser 25 to the heater core 47, the first valve V1, the battery 41, the second valve V2, the pump P3, the first valve V1, and then to the water-cooled condenser 25.

With the above-described configuration, since the temperature of the chiller 27 increases due to the refrigerant heated at the motor 45, the temperature of the refrigerant flowing in a portion of the chiller 27 disposed in the refrigerant circuit 5 increases. This causes the temperature of the refrigerant flowing in a portion of the water-cooled condenser 25 disposed in the refrigerant circuit 5 to be increased and also causes the temperature of the heater core 47 to be increased. This heats air in the passenger compartment of the vehicle 1.

### TWENTY-THIRD OPERATION EXAMPLE

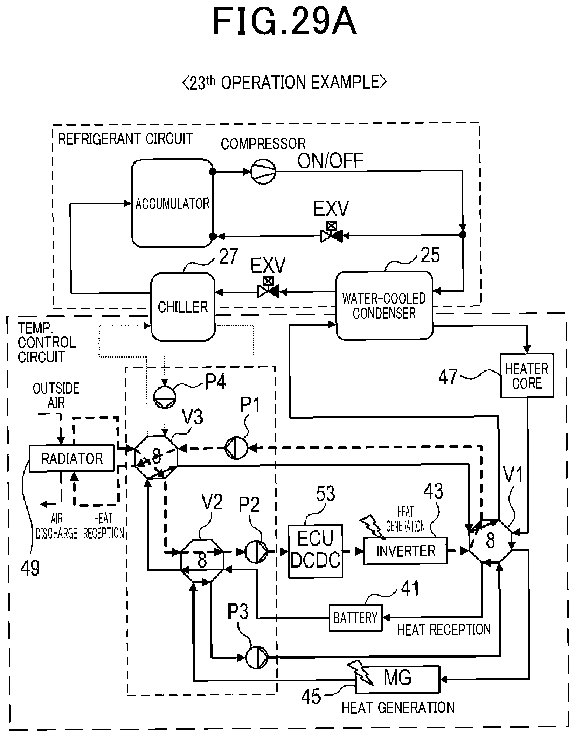

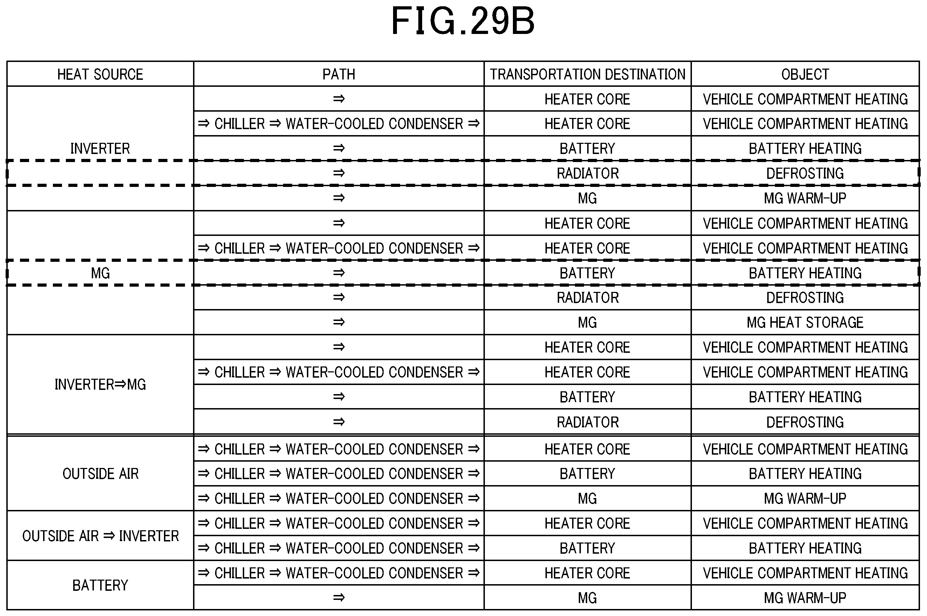

As illustrated in two dashed-line frames in Fig. 29B, a case will be described in which the refrigerant is heated by thermal energy generated by the inverter 43 and transported to the radiator 49 for the purpose of defrosting the radiator 49, and in which the refrigerant is heated by thermal energy generated by the motor 45 and transported to the battery 41 for the purpose of warming up the battery 41.

As illustrated in Fig. 29A, the refrigerant heated by the inverter 43 returns to the inverter 43 via, as indicated by a dashed line, the first valve V1, the pump P1, the third valve V3, the radiator 49, the third valve V3, the second valve V2, the pump P2, and the ECU 53. This defrosts the radiator 49.

Separately from the above-described flow path, the refrigerant heated by the motor 45 returns to the motor 45 via, as indicated by a solid line, the second valve V2, the pump P3, the first valve V1, the battery 41, the second valve V2, the third valve V3, the first valve V1, the water-cooled condenser 25, the heater core 47, and the first valve V1. This warms up the battery 41.

As indicated by a thin dashed line, a flow path extending from the third valve V3, via the chiller 27 and the pump P4, and returning to the third valve V3 constitutes a closed circuit. The pump P4 is at rest.

### TWENTY-FOURTH OPERATION EXAMPLE

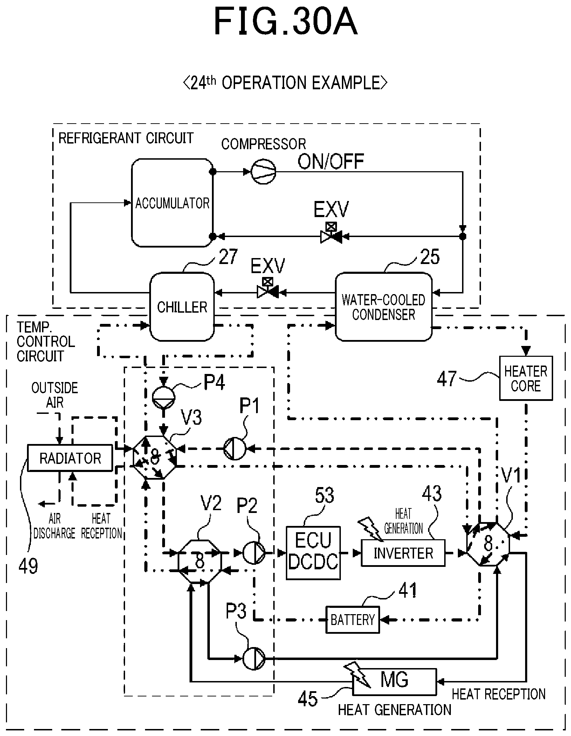

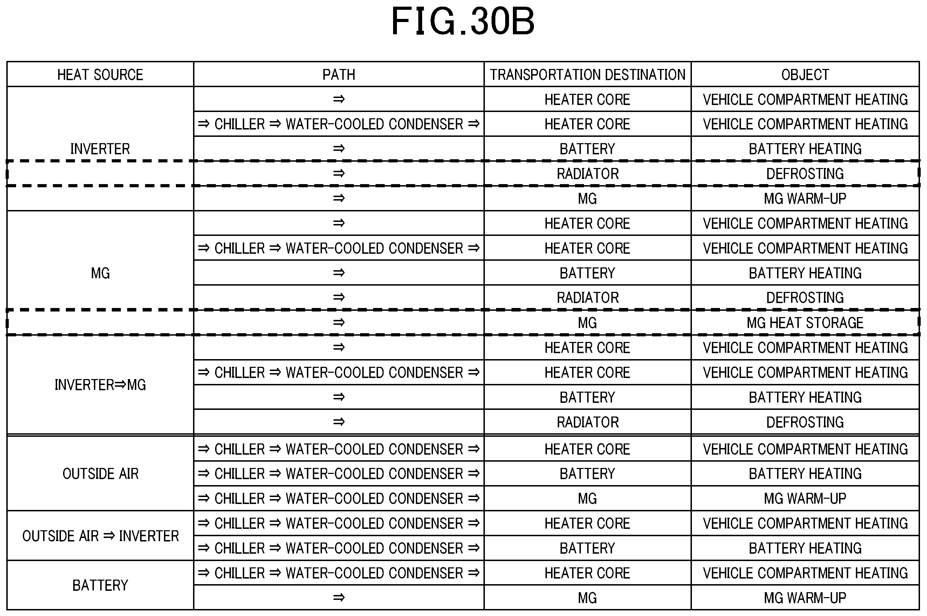

As illustrated in two dashed-line frames in Fig. 30B, a case will be described in which the refrigerant is heated by thermal energy generated by the inverter 43 and transported to the radiator 49 for the purpose of defrosting the radiator 49, and in which the refrigerant is heated by thermal energy generated by the motor 45 and transported to the motor 45 for the purpose of heat storage in the motor 45.

As illustrated in Fig. 30A, the refrigerant heated by the inverter 43 returns to the inverter 43 via, as indicated by a dashed line, the first valve V1, the pump P1, the third valve V3, the radiator 49, the third valve V3, the second valve V2, the pump P2, and the ECU 53. This defrosts the radiator 49.

Separately from the above-described flow path, the refrigerant heated by the motor 45 returns to the motor 45 via, as indicated by a solid line, the second valve V2, the pump P3, and the first valve V1. This stores heat in the motor 45.

Separately from the above-described flow paths, the refrigerant, as indicated by a two-dot chain line, returns from the water-cooled condenser 25 to the heater core 47, the first valve V1, the battery 41, the second valve V2, the third valve V3, the chiller 27, the pump P4, the third valve V3, the first valve V1, and then to the water-cooled condenser 25.

### TWENTY-FIFTH OPERATION EXAMPLE

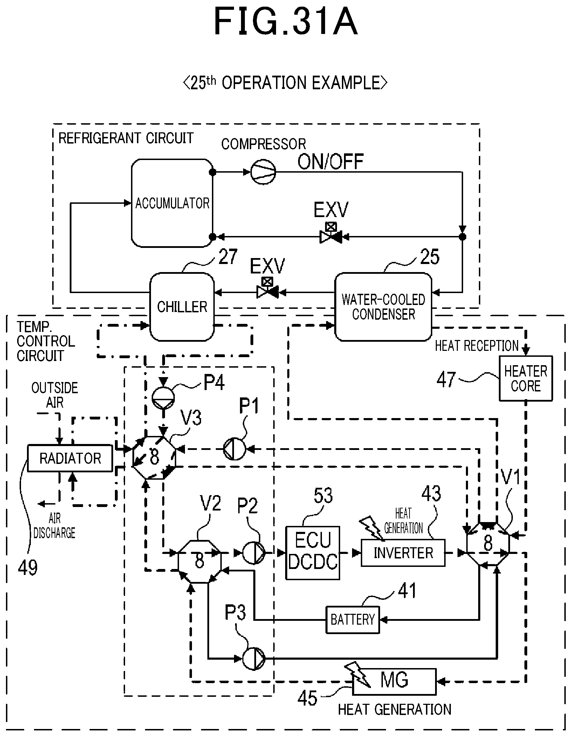

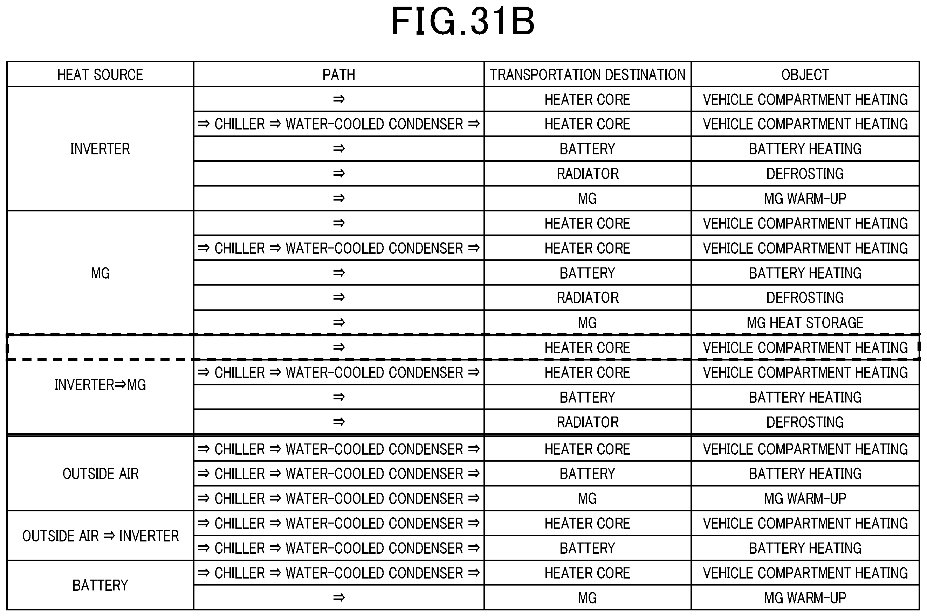

As illustrated in a dashed-line frame in Fig. 31B, a case will be described in which the refrigerant is heated by thermal energy generated by the inverter 43 and the motor 45 and then transported to the heater core 47 for the purpose of heating the passenger compartment of the vehicle 1.

As illustrated in Fig. 31A, the refrigerant heated by the inverter 43 reaches the motor 45 via, as indicated by a dashed line, the first valve V1. The refrigerant is then heated by the motor 45 and returns to the inverter 43 via the second valve V2, the third valve V3, the first valve V1, the water-cooled condenser 25, the heater core 47, the first valve V1, the pump P1, the third valve V3, the second valve V2, the pump P2, and the ECU 53. This heats the heater core 47, thereby heating the passenger compartment of the vehicle 1.

Separately from the above-described flow path, the refrigerant returns to the battery 41 from the battery 41 via, as indicated by a solid line, the second valve V2, the pump P3, and the first valve V1.

### TWENTY-SIXTH OPERATION EXAMPLE

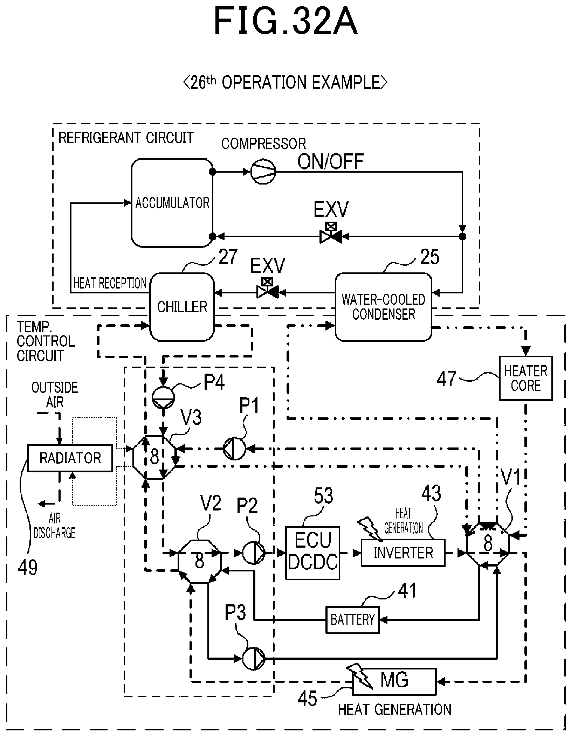

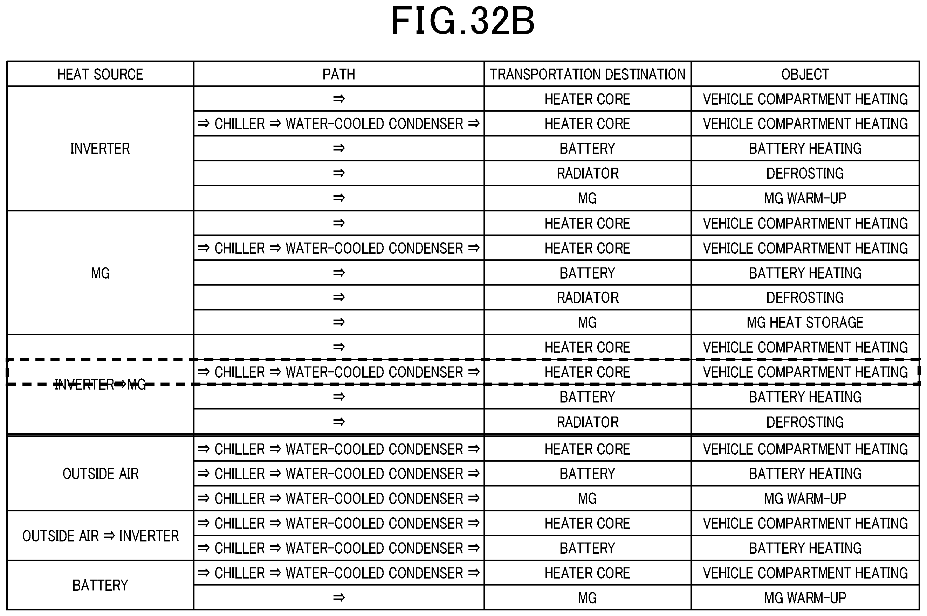

As illustrated in a dashed-line frame in Fig. 32B, a case will be described in which the refrigerant is heated by thermal energy generated by the inverter 43 and the motor 45, and then transmitted to the heater core 47 via the chiller 27 and the water-cooled condenser 25 for the purpose of heating the passenger compartment of the vehicle 1.

As illustrated in Fig. 32A, the refrigerant heated by the inverter 43 reaches the motor 45 via, as indicated by a dashed line, the first valve V1. The refrigerant is then heated by the motor 45 and returns to the inverter 43 via the second valve V2, the third valve V3, the chiller 27, the pump P4, the third valve V3, the second valve V2, the pump P2, and the ECU 53. This heats the chiller 27.

Separately from the above-described flow path, the refrigerant returns to the water-cooled condenser 25 from the water-cooled condenser 25 via, as indicated by two-dot chain lines, the heater core 47, the first valve V1, the pump P1, the third valve V3, and the first valve V1.

With the above-described configuration, since the temperature of the chiller 27 is increased by the refrigerant heated by the inverter 43 and the motor 45, the temperature of the refrigerant flowing in a portion of the chiller 27 which is disposed in the refrigerant circuit 5 is increased. This elevates the temperature of the refrigerant flowing in a portion of the water-cooled condenser 25 which is arranged in the refrigerant circuit 5 and also elevates the temperature of the heater core 47. This heats air in the passenger compartment of the vehicle 1.

Separately from the above-described flow paths, the refrigerant returns to the battery 41 from the battery 41 via, as indicated by a solid line, the second valve V2, the pump P3, and the first valve V1.

### TWENTY-SEVENTH OPERATION EXAMPLE

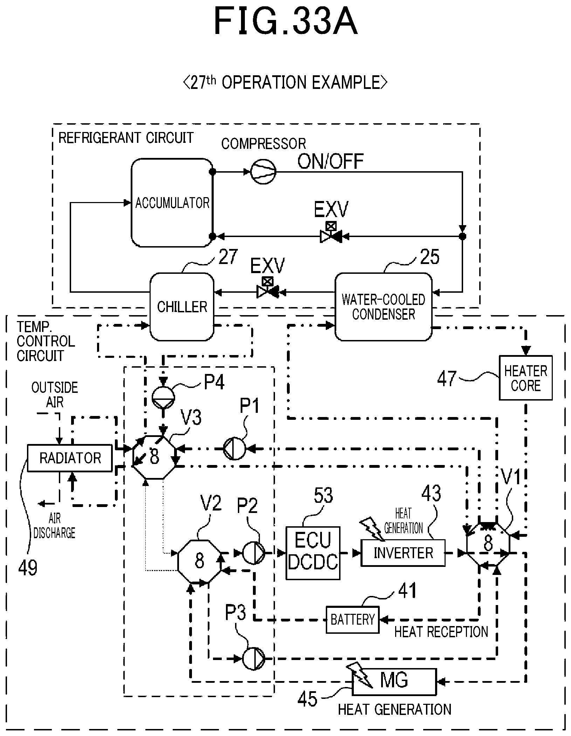

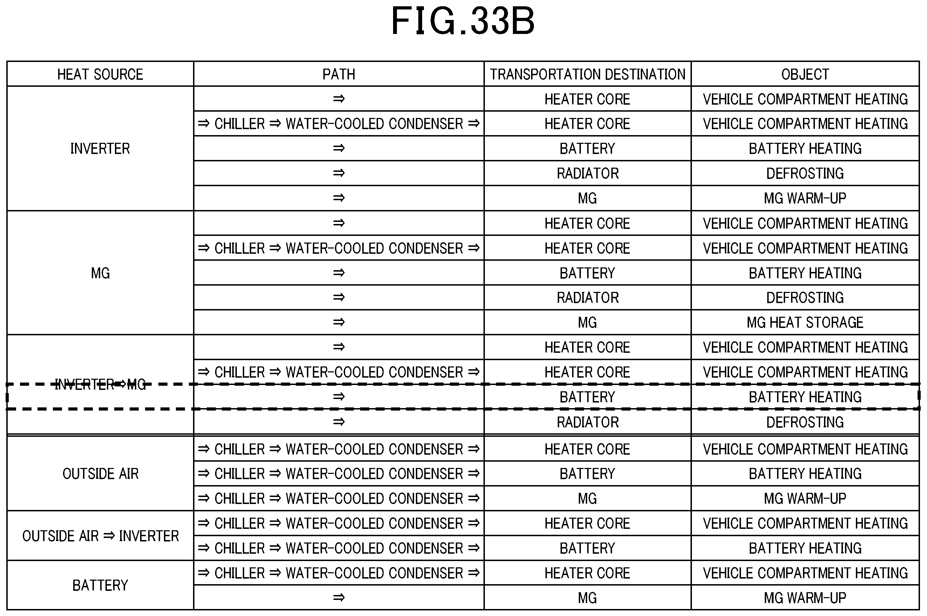

As illustrated in a dashed-line frame in Fig. 33B, a case will be described in which the refrigerant is heated by thermal energy generated by the inverter 43 and the motor 45 and then transported to the battery 41 for the purpose of warming up the battery 41.

As illustrated in Fig. 33A, the refrigerant heated by the inverter 43 reaches the motor 45 via, as indicated by a dashed line, the first valve V1. The refrigerant is then heated by the motor 45 and returns to the inverter 43 via the second valve V2, the pump P3, the first valve V1, the battery 41, the second valve V2, the pump P2, and the ECU 53. This warms up the battery 41.

Separately from the above-described flow path, the refrigerant returns to the water-cooled condenser 25 from the water-cooled condenser 25 via, as indicated by two-dot chain lines, the heater core 47, the first valve V1, the pump P1, the third valve V3, and the first valve V1.

Separately from the above-described flow paths, the refrigerant returns to the chiller 27 from the chiller 27 via, as indicated by one-dot chain lines, the pump P4, the third valve V3, the radiator 49, and the third valve V3.

### TWENTY-EIGHTH OPERATION EXAMPLE

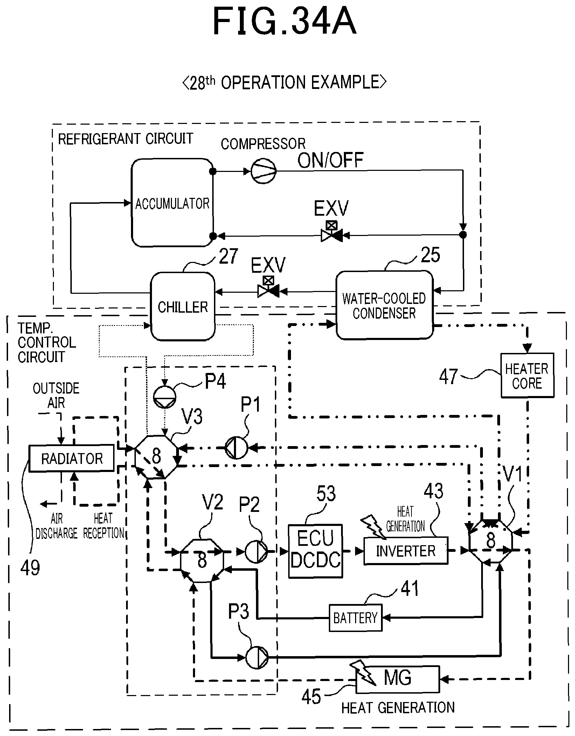

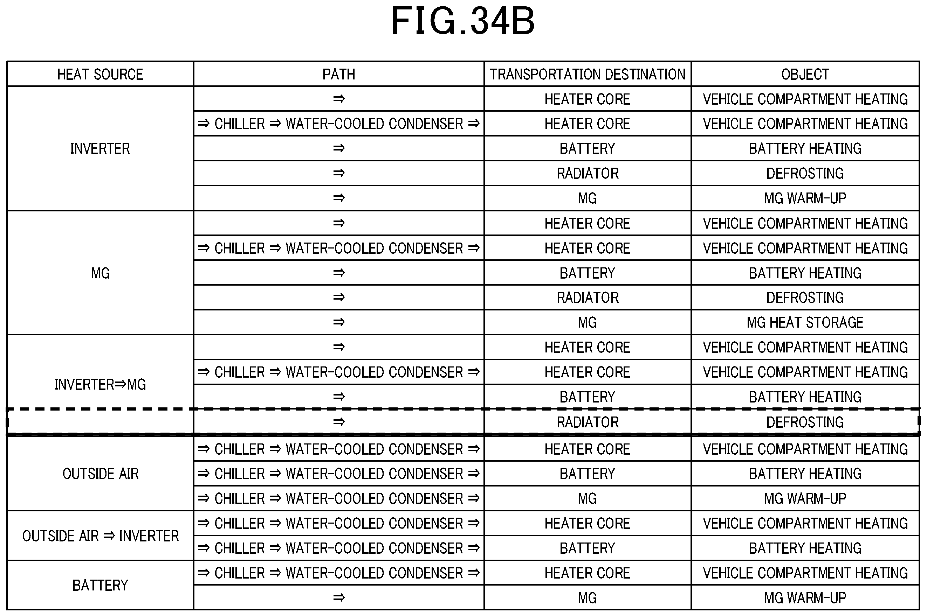

As illustrated in a dashed-line frame in Fig. 34B, a case will be described in which the refrigerant is heated by thermal energy generated by the inverter 43 and the motor 45 and then transported to the radiator 49 for the purpose of defrosting the radiator 49.

As illustrated in Fig. 34A, the refrigerant heated by the inverter 43, as indicated by a dashed line, reaches the motor 45 via the first valve V1. The refrigerant is then heated by the motor 45 and returns to the inverter 43 via the second valve V2, the third valve V3, the radiator 49, the third valve V3, the second valve V2, the pump P2, and the ECU 53. This defrosts the radiator 49.

Separately from the above-described flow path, the refrigerant returns to the water-cooled condenser 25 from the water-cooled condenser 25 via, as indicated by two-dot chain lines, the heater core 47, the first valve V1, the pump P1, the third valve V3, and the first valve V1.

As indicated by a thin dashed line, a flow path extending from the chiller 27, via the pump P4 and the third valve V3, and returning to the chiller 27 constitutes a closed circuit. The pump P4 is at rest.

### 1-5 CONTROL TASKS

Control tasks executed by the arithmetic processing unit 61 will be described below.

### 1-5-1 MAIN TASK

This task is to control the temperature of a temperature increase target (which will be referred simply as a target) to achieve a target temperature. The task is executed at a given time interval.

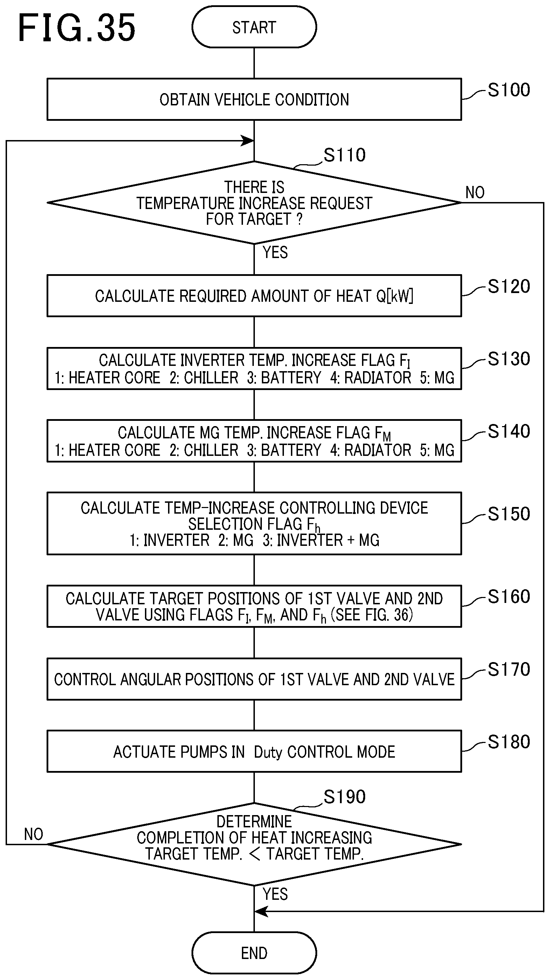

Fig. 35 is a flowchart of a program to perform the main operation. After entering the program, the routine proceeds to step S100 wherein outputs from the above-described sensors are analyzed to determine a condition of the vehicle 1.

The routine proceeds to step S110 wherein it is determined whether there is a temperature-increasing request for the target. If a YES answer is obtained, then the routine proceeds to S120. Alternatively, if a NO answer is obtained, then the routine terminates.

For example, as in a winter season, when the environmental temperature (that is, the temperature around the vehicle 1) is low, which results in a difficulty in obtaining a required performance of at least one of constituent elements or components (for example, the battery 41, the heater core 47, the radiator 49, the motor 45, and the like) which are in operation, the component is determined as the target, and the temperature-increasing request for increasing the temperature of the target is outputted.

For example, when the environmental temperature is 5°C and a temperature required for operation of the target is 10°C, the temperature-increasing request is output in order to raise the temperature of the target to 10°C. Specifically, the arithmetic processing unit 61 analyzes the environmental temperature, produces the temperature-increasing request that causes the target to reach a predetermined target temperature, and outputs it to the arithmetic processing unit 61 itself.

The routine proceeds to step S120 wherein the required amount of heat Q is calculated. Specifically, the amount of heat Q required to bring the target from a current temperature to a target temperature is calculated. For example, when the current temperature is *T1°C,* the target temperature is *T2°C,* and the heat capacity of the target is the heat capacity NQ, the temperature difference to be increased is (*T2 - T1*)°*C,* and therefore the required amount of heat Q is given by "the temperature difference (*T2 - T1*)*°C* × the heat capacity NQ".

The routine proceeds to step S130 wherein the inverter temperature increase flag Fi is calculated. The inverter temperature increase flag Fi is a flag indicating the component serving as the target when temperature increase is performed by the inverter 43. For example, when the inverter temperature increase flag Fi is 1, 2, 3, 4, or 5, this indicates that the target is the heater core 47, the chiller 27, the battery 41, the radiator 49, or the motor 45, respectively.

The routine proceeds to step s140 wherein the MG temperature increase flag Fm is calculated. The MG temperature increase flag Fm is a flag indicating the component serving as the target when temperature increase is performed by the motor 45. For example, when the MG temperature increase flag Fm is 10, 20, 30, 40, or 50, this indicates that the target is the heater core 47, the chiller 27, the battery 41, the radiator 49, or the motor 45, respectively.

The routine proceeds to step S150 wherein the temperature-increasing controlling device selection flag *Fh* is calculated. The temperature-increasing controlling device selection flag *Fh* is a flag indicating the device that is to be operated in a temperature-increasing control mode. For example, when the temperature-increasing controlling device selection flag *Fh* is 1, this indicates that the inverter 43 is placed in the temperature-increasing control mode to control the temperature of the target.

The routine proceeds to step S160 wherein the inverter temperature increase flag *Fi,* the MG temperature increase flag *Fm,* and the temperature-increasing control device selection flag *Fh* are analyzed to calculate angular positions (i.e., rotation angles) which represent opening degrees of the first valve V1 and the second valve V2.

Subsequently, a sequence of tasks or operations on the inverter temperature increase flag *Fi,* the MG temperature increase flag *Fm,* and the temperature-increasing controlling device selection flag *Fh* will be described.

The sequence of operations includes a first step of selecting the target(s) and a second step of prioritizing the targets for the temperature-increasing requests. Such prioritization is made based on the required amount of heat or immediacy of heating.

Specifically, for example, in the case of the eleventh operation example demonstrated in Fig. 17, the first step selects, as targets, the heater core 47 and the battery 41. In the second step, the prioritization of the targets for the temperature-increasing requests is represented as "battery 41 < heater core 47" (that is, when the immediacy of heating is taken into consideration, the heater core 47 has a higher priority than the battery 41).

Accordingly, the inverter temperature increase flag *Fi* selects "1" corresponding to the heater core 47 having a high immediacy of heating, and the MG temperature increase flag Fm selects "30" corresponding to the battery 41 remaining as a warm-up request. Therefore, based on the inverter temperature increase flag Fi and the MG temperature increase flag Fm, the temperature-increasing control device selection flag *Fh* selects "3".

For example, in a situation or for a device in which immediacy of heating related to responsiveness is required, such as at startup of the vehicle 1 under a low-temperature condition (for example, warm-up of the motor 45 at startup), heat generation may be performed at least by the inverter 43. Alternatively, when utilization of heat storage requiring a large amount of heat is important (for example, heating of the battery 41 over an entire charging range thereof), heat generation may be performed by the motor 45, or heat generation may be performed by both the inverter 43 and the motor 45.

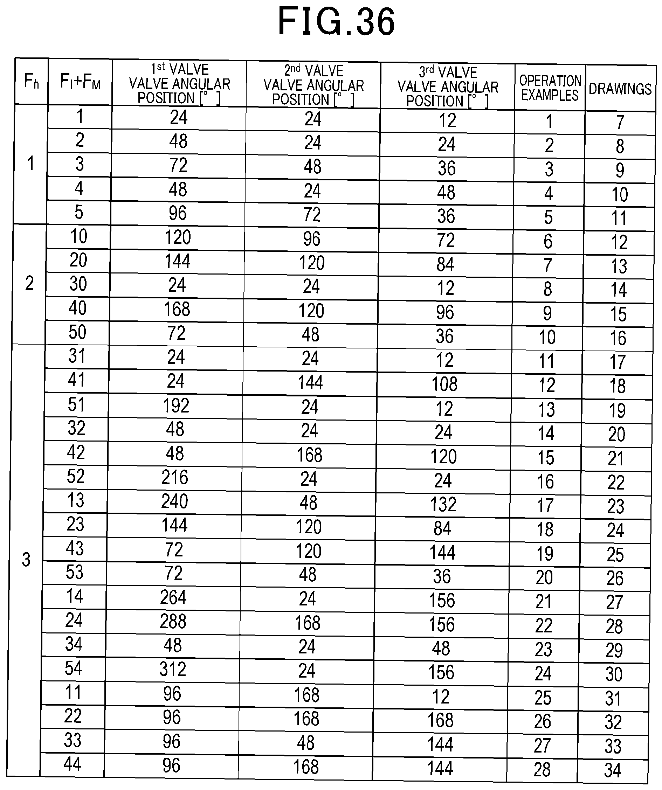

Fig. 36 demonstrates relationships among a total value of the temperature-increasing control device selection flag *Fh,* the inverter temperature increase flag *Fi,* and the MG temperature increase flag *Fm,* and angular positions of the first valve V1, the second valve V2, and the third valve V3.

The angular position of the third valve V3 is set depending upon an arrangement of the flow paths of each operation example.

Referring back to Fig. 35, after step S160, the routine proceeds to step S170 wherein the angular positions of the first valve V1 and the second valve V2 are controlled. At the same time, the angular position of the third valve V3 is also controlled.

The routine proceeds to step S180 wherein the pumps P are operated in a duty control mode. Specifically, the pumps P are actuated to transport the refrigerant in the pipes H in predetermined directions.

The routine proceeds to step S190 wherein it is determined whether the temperature of each target has exceeded the target temperature. If a YES answer is obtained, then the routine terminates. Alternatively, if a NO answer is obtained, then the routine returns back to step S110.

### 1-5-2 SUB-TASKS

Sub-tasks will be described below. The sub-tasks are performed at a given time interval.

### FIRST TASK EXAMPLE

The first task is to perform temperature-increasing control using the inverter 43 (e.g., the first operation example).

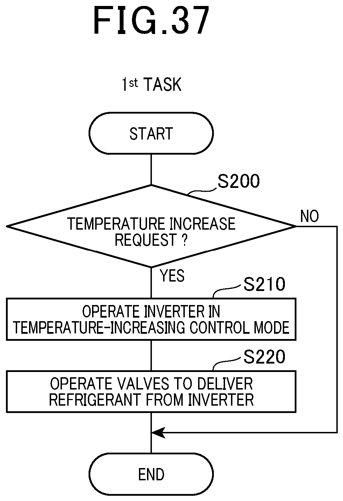

Fig. 37 shows a flowchart of a program executing the first task. First, in step S200, the temperature of the target (e.g., the heater core 47) is low. It is, therefore, determined whether there is the temperature-increasing request which increase the temperature of the target. If a YES answer is obtained, then the routine proceeds to step S210. Alternatively, if a NO answer is obtained, then the routine terminates.

The routine proceeds to step S210 wherein the inverter 43 is operated in the temperature-increasing control mode to generate thermal energy.

The routine proceeds to step S220 wherein the valve V (e.g., the first valve V1) is operated, in other words, the angular position of the valve V is controlled to supply the refrigerant from the inverter 43 to the target (e.g., the heater core 47). The routine then terminates. In step S220, the pump P (e.g., the pump P2) which is needed to transport the refrigerant to the target is also actuated.

The first task serves to elevate the temperature of the target using the refrigerant heated by thermal energy generated by the inverter 43.

Instead of the inverter 43, the motor 45 is actuated to generate the above thermal energy. Specifically, in place of the inverter 43 in each step of the flowchart in Fig. 37, the motor 45 is used to generate thermal energy to heat the refrigerant for increasing the temperature of the target.

### SECOND TASK EXAMPLE

The second task is to perform temperature-increasing control using the motor 45 (e.g., the eighth operation example).

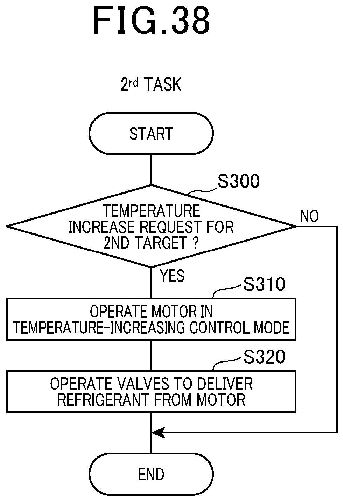

Fig. 38 shows a flowchart of a program executing the second task. First, in step S300, the temperature of the target (which will be referred to as a second target, e.g., the battery 41), which is different from that target heated by the inverter 43, is low. It is, therefore, determined whether there is a temperature-increasing request which increases the temperature of the second target. If a YES answer is obtained, then the routine proceeds to step S310. Alternatively, if a NO answer is obtained, then the routine terminates.

The routine proceeds to step S310 wherein the motor 45 is operated in the temperature-increasing control mode to generate thermal energy.

The routine proceeds to step S320 wherein the valve V (e.g., the second valve V2) is operated, in other words, the angular position of the valve V is controlled to supply the refrigerant from the motor 45 to the second target (e.g., the battery 41). The routine then terminates. In step S320, the pump P (e.g., the pump P3) which is needed to transport the refrigerant to the second target is also actuated.

The second task serves to elevate the temperature of the second target using the refrigerant heated by thermal energy generated by the motor 45.

### THIRD TASK EXAMPLE

The third task is to perform temperature-increasing control using the inverter 43 and the motor 45 (e.g., the eleventh operation example) to elevate the temperature of the targets.

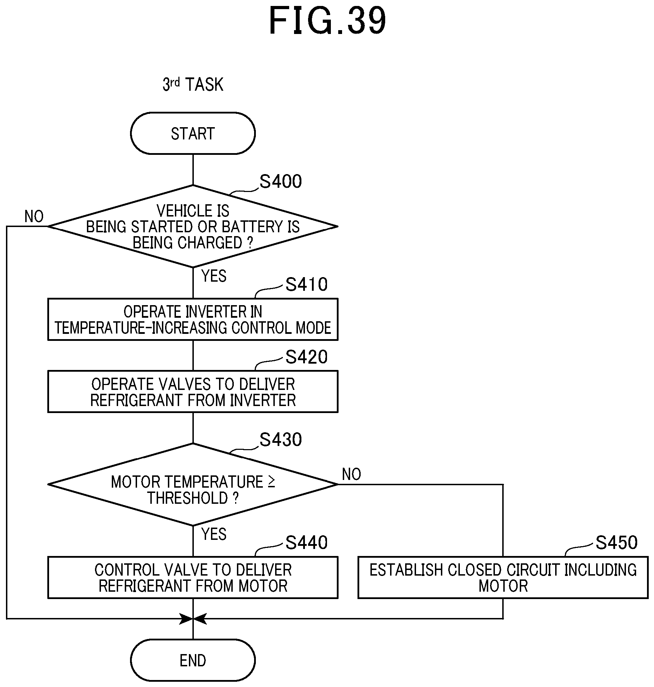

Fig. 39 shows a flowchart of a program executing the third task. First, in step S400, it is determined whether the vehicle 1 is being started (for example, when a start switch of the vehicle 1 is turned on) or whether the battery 41 is being charged. If a YES answer is obtained, then the routine proceeds to step S410. Alternatively, if a NO answer is obtained, then the routine terminates.

The routine proceeds to step S410 wherein the inverter 43 is operated in the temperature-increasing control mode to generate thermal energy.

The routine then proceeds to step S420 wherein the valves V (e.g., the first to third valves V1 to V3) are actuated, that is, the angular positions of the valves V are controlled to deliver the refrigerant from the inverter 43 to one of the third targets (e.g., the heater core 47). In step S420, the pumps P (e.g., the pumps P1 and P2) which are needed to transport the refrigerant to the third target (e.g., the heater core 47) are also actuated.

The routine proceeds to step S430 wherein it is determined whether the temperature of the motor 45 is equal to or higher than a predetermined threshold. In other words, it is determined whether the temperature of the motor 45 is a temperature suitable for operation. If a YES answer is obtained, then the routine proceeds to step S440. Alternatively, if a NO answer is obtained, then the routine proceeds to step S450.

The condition where the routine proceeds from step S430 to step S440 means that the motor 45 is being warmed-up. In step S440, the refrigerant is, therefore, delivered from the warming-up motor 45 to one of the third targets (e.g., the battery 41). The valves V (e.g., the first and second valves V1 and V2) are operated, in other words, the angular positions of the valves V are controlled. The routine then terminates. In step S440, the pump P (e.g., the pump P3) which is needed to transport the refrigerant to the third targets is also actuated.

Alternatively, in step S450, a closed circuit including the motor 45 is established. The routine then terminates.

The third task serves to elevate the temperatures of the third targets using the refrigerant heated by thermal energy generated by the motor 45 in the temperature-increasing control mode and the motor 45 in the warm-up mode.

### FOURTH TASK EXAMPLE

The fourth task is to perform temperature-increasing control using the inverter 43 and the motor 45 to elevate the temperature of a single target (i.e., the fourth target).

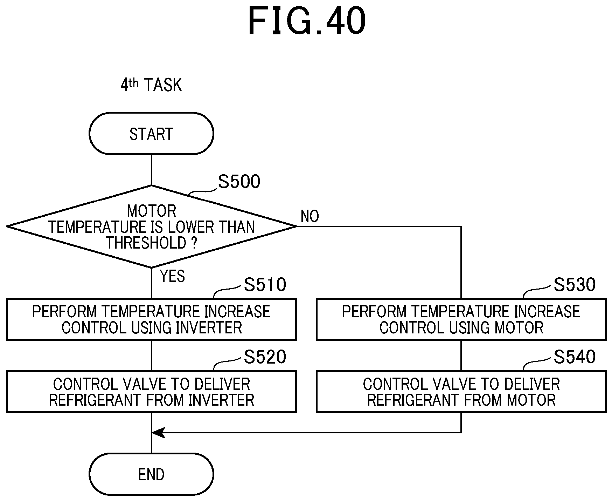

Fig. 40 shows a flowchart of a program executing the fourth task. First, in step S500, it is determined whether the temperature of the motor 45 is lower than a predetermined threshold. In other words, it is determined whether the temperature of the motor 45 is at a low level unsuitable for heating the refrigerant. If a YES answer is obtained, then the routine proceeds to step S510. Alternatively, if a NO answer is obtained, then the routine proceeds to step S530.

The condition where step S510 is entered means that the motor 45 is at a low temperature level. The inverter 43 is actuated in the temperature-increasing control mode to generate thermal energy.

The routine proceeds to step S520 wherein the valves V are actuated, that is, the angular positions of the valves V are controlled to deliver the refrigerant from the inverter 43 to the fourth target. In step S520, the pumps P which are needed to transport the refrigerant to the fourth target are also actuated.

The condition where the routine proceeds from step S500 to step S530 means that the motor 45 is not at the low temperature level, that is, that the motor 45 is not in a state in which the temperature thereof is difficult to increase. The motor 45 is actuated in the temperature-increasing control mode to generate thermal energy.

The routine proceeds to step S540 wherein the valves V are actuated, that is, the angular positions of the valves V are controlled to deliver the refrigerant from the motor 45 to the fourth target. In step S540, the pumps P which are needed to transport the refrigerant to the fourth target are also actuated.

The fourth task serves to quickly elevate the temperature of the fourth target using the refrigerant heated by thermal energy generated by the inverter 43 or the motor 45.

### FIFTH TASK EXAMPLE

The fifth task is to perform temperature-increasing control using the inverter 43 and the motor 45.

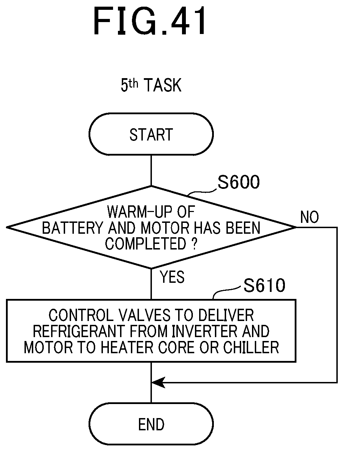

Fig. 41 shows a flowchart of a program executing the fifth task. First, in step S600, it is determined whether warm-up of the battery 41 and the motor 45 has been completed. If a YES answer is obtained, then the routine proceeds to step S610. Alternatively, if a NO answer is obtained, then the routine terminates.

The routine proceeds to step S610 wherein the valves V are controlled to deliver from the inverter 43 and the motor 45 the refrigerant, which has been heated by the inverter 43 and the motor 45, to the fifth target (e.g., the heat core 47 or the chiller 27). The routine then terminates. In step S610, the pumps P which are needed to transport the refrigerant to the fifth target are also actuated.

The fifth task serves to elevate the temperature of the fifth target using thermal energy generated by the inverter 43 and/or the motor 45 when the battery 41 and the motor 45 have been completely warmed-up.

### SIXTH TASK EXAMPLE

The sixth task is to control a drop in temperature of a component(s) (i.e., one of the constituent elements of the temperature control circuit 7) which will be also referred to as a sixth target) which connects with the pipe(s) H of the temperature control circuit 7 and to which the refrigerant is supplied. The sixth target is capable of accumulating thermal energy therein. In the following discussion, the sixth target will also be referred to as a heat storage component.

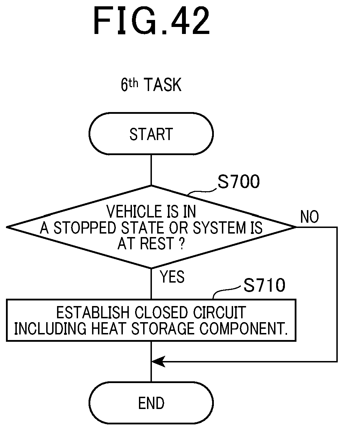

Fig. 42 shows a flowchart of a program executing the sixth task. First, in step S700, it is determined whether the vehicle 1 is in a stopped state (for example, when the vehicle is parked) or whether the system is in a stopped state (for example, when the vehicle controller 9 is at rest). If a YES answer is obtained, then the routine proceeds to step S710. Alternatively, if a NO answer is obtained, then the routine terminates. Note that examples of the system being in the stopped state include a state in which the driver exits the vehicle 1 and locks the vehicle 1 using a key.

In step S710, a flow path connecting with the heat storage component (e.g., the battery 41) is closed in the form of a closed circuit. The routine then terminates.

The sixth task serves to minimize a decrease in temperature of the heat storage component when the vehicle 1 is stopped or the system is at rest.

For instance, the heat storage component includes the battery 41, the inverter 43, the motor 45, the heater core 47, or the radiator 49.

### SEVENTH TASK EXAMPLE

The seventh task is to control accumulation of thermal energy in the heat storage component (e.g., the third operation example).

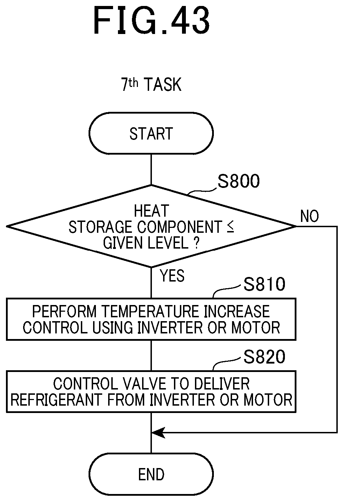

Fig. 43 shows a flowchart of a program executing the seventh task. First, in step S800, it is determined whether the temperature of the heat storage component (e.g., the battery 41) is lower than or equal to a given level unsuitable for operation of the heat storage component. If a YES answer is obtained, then the routine proceeds to step S810. Alternatively, if a NO answer is obtained, then the routine terminates.

The routine proceeds to step S810 wherein the inverter 43 or the motor 45 is actuated in the temperature-increasing control mode to generate thermal energy.

The routine proceeds to step S820 wherein the valves V are controlled to deliver the refrigerant from the inverter 43 or the motor 45 to the heat storage component 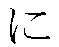 the refrigerant. The routine then terminates. In step S820, the pumps P are actuated which are needed to transport the refrigerant to the heat storage component.

As apparent from the above discussion, the seventh task serves to elevate the temperature of the heat storage component.

### EIGHTH TASK EXAMPLE

The eighth task is executed when the vehicle 1 is started (e.g., the first operation example).

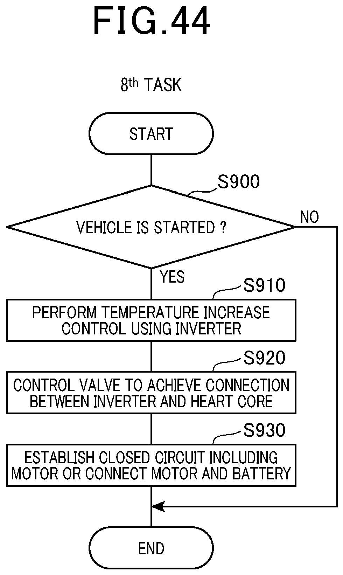

Fig. 44 shows a flowchart of a program executing the eighth task. First, in step S900, it is determined whether the vehicle 1 is in a start-up condition. If a YES answer is obtained, then the routine proceeds to step S910. Alternatively, if a NO answer is obtained, then the routine terminates.

In step S910, the inverter 43 is actuated in the temperature-increasing control mode to produce thermal energy.

The routine proceeds to step S920 wherein the valve V is controlled to connect the inverter 43 and the heater core 47 together.

The routine proceeds to step S930 wherein a flow path including the motor 45 is closed in the form of a closed circuit. Alternatively, the motor 45 and the battery 41 are connected together. The routine then terminates.

The eighth task serves to warm the passenger compartment of the vehicle 1 quickly when the vehicle 1 is started and also minimize drops in temperature of the motor 45 and the battery 1.

### NINTH TASK EXAMPLE

The ninth task is executed when the battery 41 installed in the vehicle 1 is electrically charged using an external charger disposed outside the vehicle 1 (e.g., the third operation example).

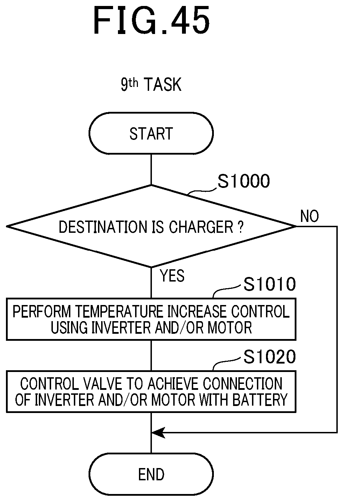

Fig. 45 shows a flowchart of a program executing the ninth task. First, in step S1000, it is determined whether a destination of the vehicle 1 is an external charger using a signal outputted from the navigation device 11. If a YES answer is obtained, then the routine proceeds to step S1010. Alternatively, if a NO answer is obtained, then the routine terminates.

In step S1010, the inverter 43 and/or the motor 45 is actuated in the temperature-increasing control mode to produce thermal energy.

The routine proceeds to step S1020 wherein the valves V are controlled to connect the inverter 43 and/or the motor 45 with the battery 41. Additionally, the pumps P are actuated which are needed to transport the refrigerant to the battery 41.

The ninth task serves to elevate the temperature of the battery 41 up to a level suitable for electrically charging the battery 41 using the external charger.

### TENTH TASK EXAMPLE

The tenth task is executed when it is required to warm-up the battery 41 (e.g., the third operation example).

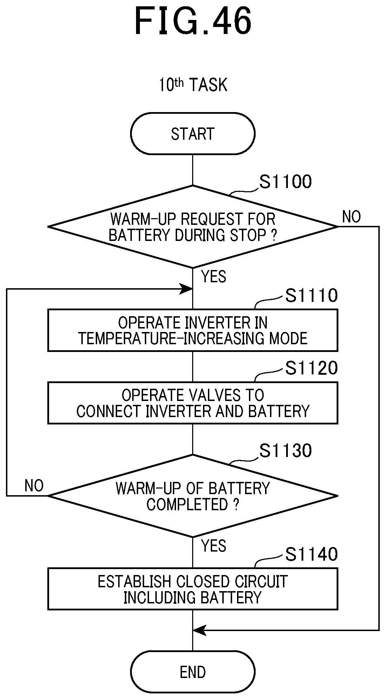

Fig. 46 shows a flowchart of a program executing the tenth task. First, in step S1100, it is determined whether there is a warm-up request for the battery 41 when the vehicle 1 is stopped. If a YES answer is obtained, then the routine proceeds to step S1110. Alternatively, if a NO answer is obtained, then the routine terminates.

In step S1110, the inverter 43 is actuated in the temperature-increasing control mode to produce thermal energy.

The routine proceeds to step S1120 wherein the valve V is controlled to connect the inverter 43 the battery 41. Additionally, the pump P is actuated which is needed to transport the refrigerant to the battery 41.

The routine proceeds to step S1130 wherein it is determined whether the warm-up of the battery 41 has been completed. If a YES answer is obtained, then the routine proceeds to step S1140. Alternatively, if a NO answer is obtained, then the routine returns back to step S1110.

In step S1140, a flow path including the battery 41 is closed in the form of a closed circuit. The routine then terminates.

When the temperature of the battery 41 is undesirably low while the vehicle 1 is stopped, the tenth task serves to quickly elevate the temperature of the battery 41.

### 1-6 EXPERIMENTAL EXAMPLES

Next, experimental examples carried out to confirm the beneficial effects of the present disclosure (for example, the effects of the first embodiment) will be described.

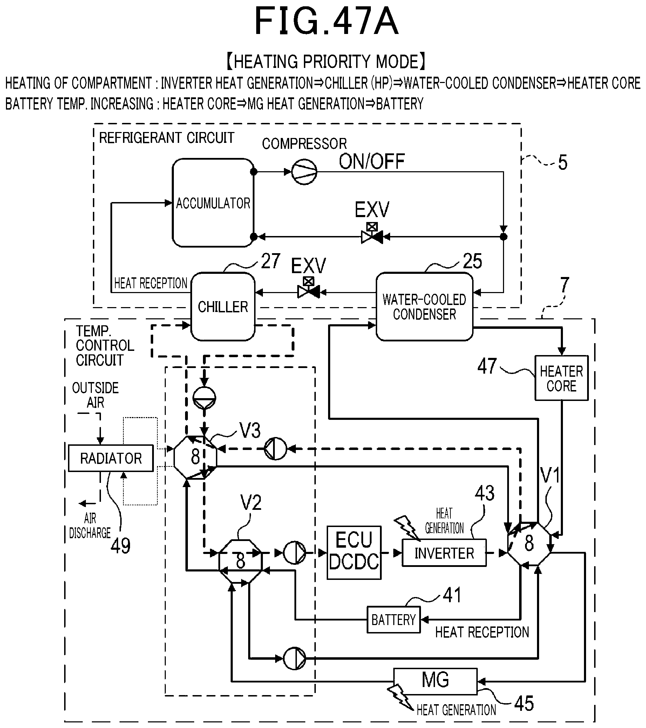

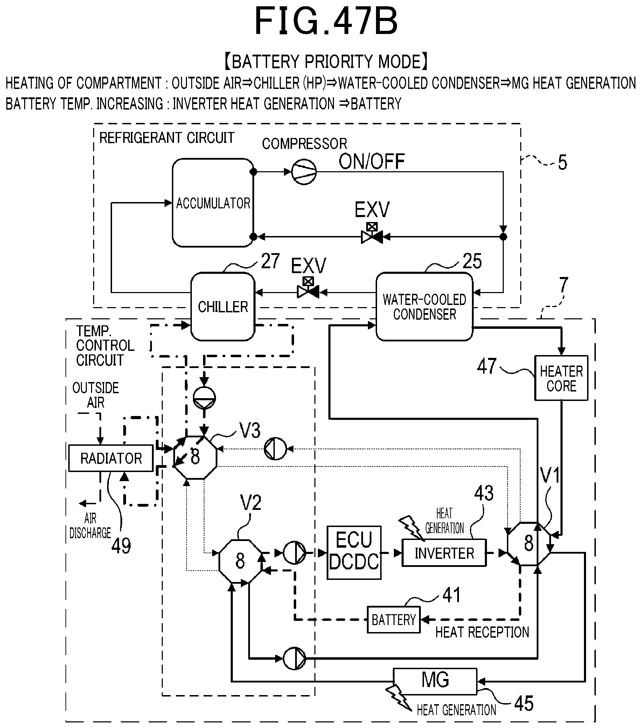

Fig. 47A shows an example of operation of a heating-priority mode in which heating of the passenger compartment of the vehicle 1 is prioritized over heating of the battery 41. In Figs. 47A and 47B, *HP* is an abbreviation for a heat pump.

In the heating-priority mode, since the heating of the passenger compartment is prioritized, thermal energy is generated by the inverter 43 to heat the refrigerant, and the generated thermal energy is transported to the chiller 27 to heat the chiller 27. The refrigerant in the refrigerant circuit 5 that has received thermal energy from the chiller 27 heats the water-cooled condenser 25. The water-cooled condenser 25 heats the refrigerant in the temperature control circuit 7, and the refrigerant is transported to the heater core 47 to heat the heater core 47, thereby heating the passenger compartment of the vehicle 1.

In addition, in the heating-priority mode, when the temperature of the battery 41 is to be increased, the refrigerant is supplied from the heater core 47 to the motor 45, and heat is generated by the motor 45 to heat the refrigerant. The refrigerant heated by the motor 45 is supplied to the battery 41 to heat the battery 41.

Fig. 47B shows an example of operation of a battery-priority mode in which heating of the battery 41 is prioritized over heating of the passenger compartment of the vehicle 1.

In the battery-priority mode, since heating of the battery 41 is prioritized, thermal energy is generated by the inverter 43 to heat the refrigerant, and the heated refrigerant is transported to the battery 41 to heat the battery 41.

In addition, in the battery-priority mode, outside air is used to increase the temperature of the refrigerant of the radiator 49. The refrigerant whose temperature has been increased by the radiator 49 is then transported to the chiller 27. The refrigerant in the refrigerant circuit 5 that has received heat from the chiller 27 works to heat the water-cooled condenser 25. The water-cooled condenser 25, therefore, heats the refrigerant in the temperature control circuit 7 which is then delivered to the heater core 47 to heat the heater core 47, thereby heating the passenger compartment of the vehicle 1. Subsequently, the refrigerant is transported from the heater core 47 to the motor 45 and is heated by thermal energy generated by the motor 45.

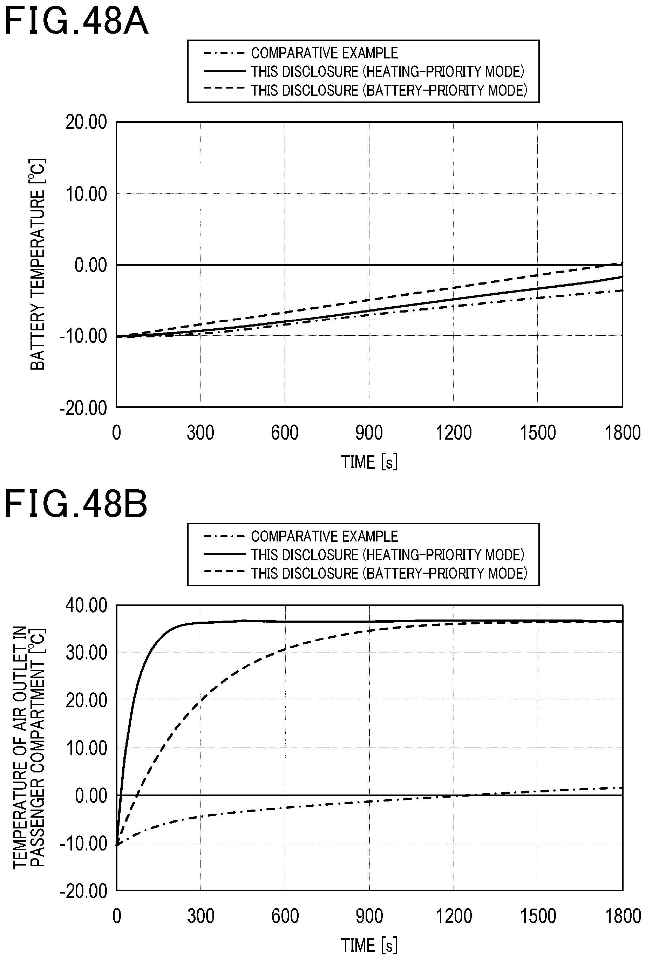

Next, Fig. 48A shows results of examining changes in the temperature rise of the battery 41 in the heating-priority mode and the battery-priority mode in comparison with a comparative example. Note that the comparative example is a conventional example in which the first valve V1 is not arranged between the inverter 43 and the motor 45.

As is apparent from Fig. 48A, the heating-priority mode and the battery-priority mode exhibited a faster temperature rise of the battery 41 as compared with the comparative example. In addition, the battery-priority mode exhibited a faster temperature rise of the battery 41 as compared with the heating-priority mode.

In addition, Fig. 48B shows results of examining changes in the temperature rise of the passenger compartment of the vehicle 1 (i.e., an air outlet in the passenger compartment) in the heating-priority mode and the battery-priority mode in comparison with the comparative example.

As is apparent from Fig. 48B, the heating-priority mode and the battery-priority mode exhibited a faster temperature rise in the passenger compartment as compared with the comparative example. In addition, the heating-priority mode exhibited a faster temperature rise in the passenger compartment as compared with the battery-priority mode.

### 1-7 EFFECTS

The above-described first embodiment offers the following beneficial advantages.

*1a* In the first embodiment, the temperature control circuit 7 of the vehicle system 3 includes the inverter 43, the motor 45, the pipes H in which the refrigerant flows and which connect the inverter 43 and the motor 45 in series, and the first valve V1 disposed in the pipe H and configured to be capable of switching a flow path of the refrigerant.

The first valve V1 is connected not only to one of the pipes H which leads to the inverter 43 and one of the pipes H which leads to the motor 45 but also to one or more additional pipes H. The first valve V1 has a configuration capable of switching so as to transport the refrigerant supplied from an upstream side of the first valve V1 to a downstream side thereof to at least one of a plurality of the pipes H on the downstream side.

In the vehicle system 3, the inverter 43 and the motor 45 are each capable of performing the temperature-increasing control in which heat is generated by causing a current for heat generation to flow (that is, heat is generated). Therefore, when at least one of the inverter 43 and the motor 45 is subjected to the temperature-increasing control, by controlling the first valve V1, the refrigerant is transported from at least one of the inverter 43 and the motor 45 subjected to the temperature-increasing control to a transportation destination (that is, the target) disposed downstream of at least one of the inverter 43 and the motor 45 subjected to the temperature-increasing control.

With the above configuration of the first embodiment, various performances of the vehicle 1 are improved by effectively utilizing heat generated by devices that are capable of generating heat (that is, capable of producing thermal energy) in the vehicle 1.

In other words, since the inverter 43 and the motor 45 are each capable of generating heat (that is, increasing temperature by application of current thereto), by causing the inverter 43 and the motor 45 to generate thermal energy, the refrigerant supplied to the inverter 43 and the motor 45 are increased in temperature. Therefore, by switching a supply destination of the refrigerant that has been increased in temperature by the first valve V1, the heat of the refrigerant is utilized to efficiently increase a temperature of the target device.
*1b* In the first embodiment, as a configuration of the circuit system 13 of the vehicle system 3, the inverter 43, the motor 45, the battery 41, the chiller 27, the heater core 47, the radiator 49, the first valve V1, and the pumps P may be employed as respective constituent elements. Each of these constituent elements are configured to be connected to the pipe(s) H through which the refrigerant flows.

In addition, the first valve V1 may be arranged between the pipe H that connects an outlet of the refrigerant of the inverter 43 from which the refrigerant is discharged and an inlet of the motor 45 into which the refrigerant enters, or alternatively between the pipe H that connects an outlet of the motor 45 from which the refrigerant is outputted and an inlet of the inverter 43 into which the refrigerant flows. Furthermore, the first valve V1 may be configured to be connected, via the pipes H for the refrigerant, to at least one of the battery 41, the chiller 27, the heater core 47, and the radiator 49.

Furthermore, the operation of the first valve V1 is controlled to switch the flow path of the refrigerant so that the refrigerant that has passed through the inverter 43 or the motor 45 subjected to the temperature-increasing control is transported to at least one of the battery 41, the chiller 27, the heater core 47, the radiator 49, and the motor 45.
*1c* In the first embodiment, the vehicle system 3 is capable of determining whether there is a temperature-increasing request for at least one target among the battery 41, the chiller 27, the heater core 47, and the radiator 49. When it is determined that there is the temperature-increasing request, the temperature-increasing control of the inverter 43 may be performed. Specifically, when the temperature-increasing control of the inverter 43 is required to be performed, the flow path of the refrigerant may be switched by the first valve V1 so that the refrigerant that has passed through the inverter 43 is transported to the target. With such a configuration, the target is heated promptly.
*1d* In the first embodiment, the refrigerant that has passed through the inverter 43 subjected to the temperature-increasing control is capable of being transported, via a predetermined flow path, to at least one of the battery 41, the chiller 27, the heater core 47, and the radiator 49. In addition, the flow path of the refrigerant may be switched by the first valve V1 or the like so that the refrigerant that has passed through the motor 45 subjected to the temperature-increasing control is transported, via a flow path different from the predetermined flow path of the refrigerant that has passed through the inverter 43, to at least one of the battery 41, the chiller 27, the heater core 47, and the radiator 49.
*1e* The temperature control circuit 7 in the first embodiment also includes the second valve V2 different from the first valve V1 and the pipe H that connects the outlet of the motor 45 from which the refrigerant is outputted and the second valve V2.

The vehicle system 3 (i.e., the temperature control circuit 7) is capable of determining whether there is the temperature-increasing request from a second target different from the target to which the refrigerant that has passed through the inverter 43 subjected to the temperature-increasing control is transported (that is, another target). When it is determined that there is the temperature-increasing request from the second target, the temperature-increasing control of the motor 45 is performed. This causes the flow path to be switched by the second valve V2 so that the refrigerant that has passed through the motor 45 is transported to the second target.

Accordingly, the temperature of the second target is increased using the refrigerant heated by the motor 45.
*1f* In the first embodiment, at a time of starting the vehicle 1 or at a time of charging the battery 41 of the vehicle 1, the vehicle system 3 is capable of performing the temperature-increasing control of the inverter 43 and switch the flow path using the first valve V1 so that the refrigerant that has passed through the inverter 43 is transported to the target. Furthermore, when the motor 45 is at or above a predetermined temperature threshold, the vehicle system 3 is capable of switching the flow path of the refrigerant using the first valve V1 and the second valve V2 so that the refrigerant that has passed through the motor 45 is transported to the target. Alternatively, when the temperature of the motor 45 is determined to be below the predetermined temperature threshold, the vehicle system 3 switches the flow path of the refrigerant using the first valve V1 and the second valve V2 so as to form a closed flow path including the motor 45 alone.

With the above configuration, at a time of starting the vehicle 1 or at a time of charging the battery 41, the vehicle system 3 is capable of promptly heating the target or perform appropriate measures such as heating of the target in accordance with an operating state of the motor 45.
*1g* In the first embodiment, when there is a single target and the temperature of the motor 45 is below a predetermined temperature threshold, the vehicle system 3 is capable of performing the temperature-increasing control using the inverter 43 and switches the flow path of the refrigerant using the first valve V1 so that the refrigerant that has passed through the inverter 43 communicates with the target. Alternatively, when there is a single target and the temperature of the motor 45 is at or above the predetermined temperature threshold, the vehicle system 3 is capable of performing the temperature-increasing control using the motor 45 and changes the flow path of the refrigerant using the first valve V1 and the second valve V2 so that the refrigerant that has passed through the motor 45 is transported to the target.

With the above configuration, the vehicle system 3 is capable of controlling the operations of the inverter 43 and the motor 45 as a function of the temperature of the motor 45 to heat the target.
*1h* In the first embodiment, when it is determined that the battery 41 and the motor 45 have completed warm-up, the vehicle system 3 is capable of changing the flow path of the refrigerant using the first valve V1 or the second valve so that the refrigerant that has passed through the inverter 43 and the motor 45 subjected to the temperature-increasing control is transported to the heater core 47 or the chiller 27.

With the above configuration, after warm-up of the battery 41 and the motor 45, the vehicle system 3 works to heat the heater core 47 or the chiller 27 using the refrigerant.
*1i* The first embodiment is capable of employing a configuration including the heat storage component connected to the first valve V1 via the flow path. The first valve V1 is capable of switching among the flow paths to form a closed circuit that is at least one of a first flow path that passes only through one of the heat storage components, a second flow path that connects the inverter 43 and the heat storage component (i.e., the heat storage component other than the inverter 43), a third flow path that connects the motor 45 and the heat storage component (that is, the heat storage component other than the motor 45), and a fourth flow path that connects the inverter 43, the motor 45, and the heat storage component (that is, the heat storage component other than the inverter 43 and the motor 45).

The above configuration is capable of accumulating a desired amount of thermal energy in the heat storage component.
*1j* In the first embodiment, when the vehicle 1 is stopped, or when a system that controls the vehicle 1 (for example, the vehicle system 3) is stopped, a closed flow path may be created in the temperature control circuit 7.

With the above configuration, for example, when an outside air temperature is low, it is possible to suppress a decrease in a temperature of a component to which the refrigerant is supplied (for example, the battery 41).
*1k* The first embodiment may be designed to have a configuration including the heat storage component connected to the first valve V1 via the flow path in the temperature control circuit 7. When it is determined that the heat storage component is below a predetermined temperature, the vehicle system 3 is capable of performing the temperature-increasing control on the inverter 43 and/or the motor 45 and controlling the first valve V1 and/or the second valve V2 to switch among the flow paths such that the refrigerant heated thereby is transported to the heat storage component.

With the above configuration, when a temperature of the heat storage component is low, the vehicle system 3 is capable of suitably elevating the temperature of the heat storage component.
*1l* In the first embodiment, at startup of the vehicle 1, the vehicle system 3 is capable of performing the temperature-increasing control in the inverter 43 and creating a flow path in the temperature control circuit 7 in which the refrigerant that has passed through the inverter 43 is delivered to the heater core 47. Further, the vehicle system 3 is capable of forming a closed flow path in which the refrigerant flows and which is connected to the motor 45 or capable of connecting a flow path communicating with the motor 45 to the battery 41.

With the above configuration, at startup of the vehicle, even when an outside air temperature is low, the vehicle system 3 is capable of suitably heating the passenger compartment of the vehicle 1 and also minimizing a decrease in a temperature of the motor 45 or the battery 41.
*1m* In the first embodiment, when a destination of the vehicle 1 is a charger for electrically charging the battery 41, the vehicle system 3 is capable of performing the temperature-increasing control on at least one of the inverter 43 and the motor 45 and connecting at least one of the inverter 43 and the motor 45 on which the temperature-increasing control has been performed to the battery 41 via the flow path of the refrigerant in the temperature control circuit 7.

With the above configuration, before charging the battery 41, the vehicle system 3 is capable of heating the battery 41 in advance to a temperature suitable for the charging operation.
*1n* In the first embodiment, when there is a battery warm-up request while the vehicle 1 is stopped, the vehicle system 3 is capable of performing the temperature increasing control on the inverter 43 and operating the first valve V1 to switch among the flow paths to connect the inverter 43 and the battery 41 together using the flow path through which the refrigerant flows. Further, when warm-up of the battery 41 is completed, the vehicle system 3 (i.e., the temperature control circuit 7) forms a closed flow path connecting with the battery 41.

With the above configuration, when there is a warm-up request, the vehicle system 3 is capable of suitably performing the warm-up of the battery 41. Upon completion of the warm-up, it results in a minimized decrease in temperature of the battery 41.

### 1-8 CORRESPONDING RELATIONSHIP

Next, element relationships between the first embodiment and the present disclosure will be described.

The vehicle 1 corresponds to the mobile object, the vehicle system 3 corresponds to a temperature control apparatus or temperature controller for the mobile object, the vehicle controller 9 corresponds to a control unit or controller, the inverter 43 corresponds to an inverter, the motor 45 corresponds to a motor, the pipes H correspond to pipes, and the first valve V1 corresponds to a valve.

### 2. SECOND EMBODIMENT

The second embodiment is designed to have a basic configuration similar to that of the first embodiment, and differences from the first embodiment will be mainly described below. The same reference numbers or symbols as those in the first embodiment denote the same or similar parts, and explanation thereof in detail will be omitted here.

The following discussion will mainly refer to parts different from those in the first embodiment.

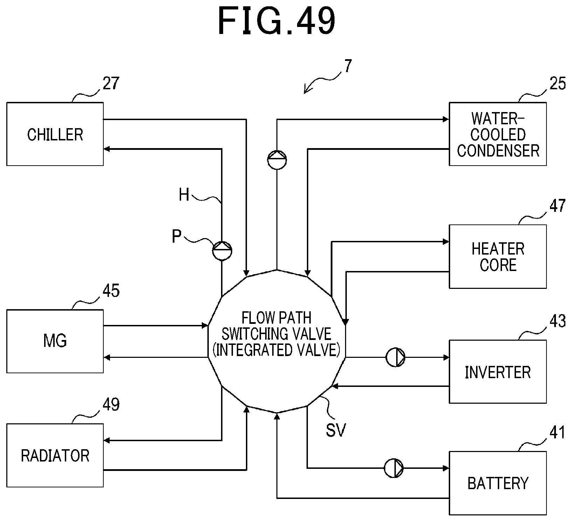

The temperature control circuit 7 in the second embodiment, as illustrated in Fig. 49, does not use valves that switch flow paths in eight directions, such as the first valve V1 and the second valve V2 of the first embodiment, but instead is designed to realize functions of the first valve V1 and the second valve V2 by a single flow path switching valve (hereinafter referred to as the integrated valve SV).

The integrated valve SV, as can be seen in Fig. 49, has fourteen openings that are connectable to flow paths of fourteen pipes H. By adjusting a valve opening degree or an angular position of the integrated valve SV, it is possible to switch connection states between the flow paths in the fourteen pipes H and the fourteen openings.

For example, each of the chiller 27, the motor 45, the radiator 49, the water-cooled condenser 25, the heater core 47, the inverter 43, and the battery 41 are connectable with the integrated valve SV using a pair of the pipes H for inflow and outflow of the refrigerant.

Note that the pumps P are disposed in predetermined ones of the pipes H as needed.

The second embodiment offers substantially the same advantageous effects as those of the first embodiment.

### 3. THIRD EMBODIMENT

The third embodiment is designed to have a basic configuration similar to that of the first embodiment, and differences from the first embodiment will be mainly described below. The same reference numbers or symbols as those in the first embodiment denote the same or similar parts, and explanation thereof in detail will be omitted here.

The following discussion will mainly refer to parts different from those in the first embodiment.

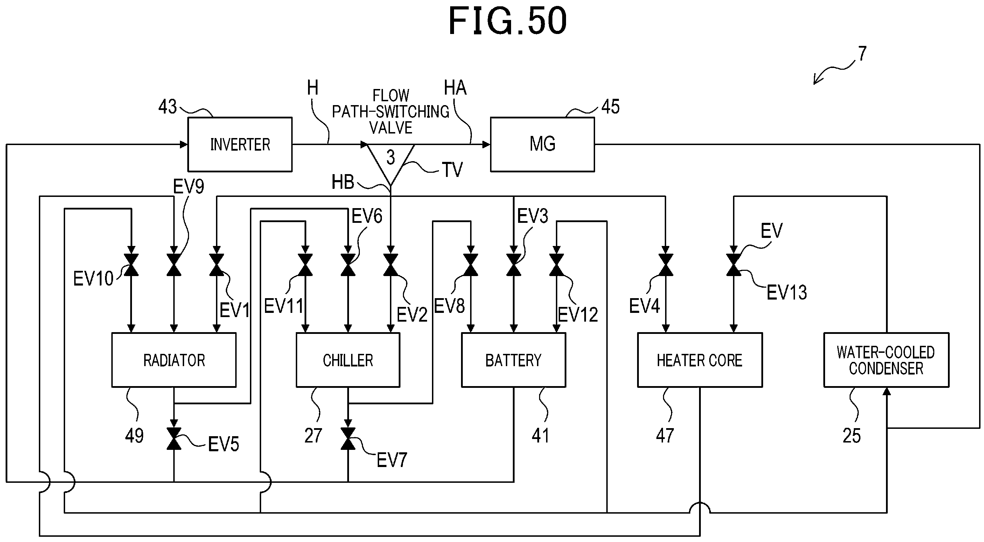

The temperature control circuit 7 in the third embodiment, as illustrated in Fig. 50, does not use valves that switch flow paths in eight directions, such as the first valve V1 and the second valve V2 of the first embodiment, but instead is designed to realize functions of the first valve V1 and the second valve V2 using a flow path-switching valve in which a flow path is branched into a selected one of three directions (hereinafter referred to as the three-way valve TV) and a plurality of electromagnetic on-off valves EV.

Specifically, the temperature control circuit 7 has the pipe HA that is one of the pipes H and is arranged between a downstream side of the inverter 43 and an upstream side of the motor 45. The pipe HA has the three-way valve TV disposed therein. The three-way valve TV communicates between the inverter 43 and the motor 45 and also communicates with the pipes HB that are the pipes H other than the pipe HA. Each of the pipes HB leads to a respective one of the electromagnetic on-off valves EV.

The pipes HB are connected, via the electromagnetic on-off valves EV1 to EV4, to the radiator 49, the chiller 27, the battery 41, the heater core 47, and the water-cooled condenser 25, respectively.

Further, the temperature control circuit 7 has flow paths through which the refrigerant flowing out from the radiator 49 is delivered to the inverter 43 and the chiller 27 via the electromagnetic on-off valves EV5 and EV6, respectively.

The temperature control circuit 7 also has flow paths through which the refrigerant flowing out from the chiller 29 is delivered to the inverter 43 and the battery 41 via the electromagnetic on-off valves EV7 and EV8, respectively.

The temperature control circuit 7 also has a flow path through which the refrigerant flowing out from the battery 41 is delivered to the inverter 43.

Additionally, the temperature control circuit 7 has a flow path through which the refrigerant flowing out from the heater core 47 is delivered to the radiator 49 through the electromagnetic on-off valve EV9.

Further, the temperature control circuit 7 also has flow paths through which the refrigerant flowing out from the motor 45 is delivered to the water-cooled condenser 25 and also supplied to the radiator 49, the chiller 27, and the battery 41 through the electromagnetic on-off valves EV10 to EV12, respectively. The temperature control circuit 7 also has a flow path through which the refrigerant flowing out from the water-cooled condenser 25 is delivered to the heater core 47 through the electromagnetic on-off valve EV13.

The third embodiment provides substantially the same advantageous effects as those of the first embodiment.

### 4 OTHER EMBODIMENTS

Although the embodiments of the present disclosure have been described above, it goes without saying that the present disclosure is not limited to the above-described embodiments and may take various forms.
*4a* A position at which the first valve V1 is located may alternatively be either between the pipes H connecting the outlet the inverter 43 from which the refrigerant flows and the inlet of the motor 45 into which the refrigerant flows, or between the pipes H connecting the outlet of the motor 45 from which the refrigerant is discharged and the inlet of the inverter 43 into which the refrigerant enters.

Accordingly, in each of the temperature control circuits 7 illustrated in the respective figures, positions of the inverter 43 and the motor 45 may be interchanged. In this case, in accordance with characteristics of the inverter 43 and the motor 45, it is desirable to arrange each target corresponding to the respective characteristics on the downstream side of the flow path to which the refrigerant is supplied. For example, for a target that requires responsiveness, it is desirable to arrange the target on the downstream side of the inverter 43, whereas for a target for which utilization of heat storage is contemplated, it is desirable to arrange the target on the downstream side of the motor 45. Further, it is preferable to dispose the pump P on the upstream side or the downstream side of the motor 45.
*4b* Examples of the mobile object include an aircraft, a drone (UAV: Unmanned Aerial Vehicle), and the like, in addition to a vehicle. The mobile object may include a mobile object that is driven to move only by electricity, but is not limited thereto. For example, the mobile object may be driven by also using a driving force of an internal combustion engine, in addition to a battery, with the mobile object being provided with the internal combustion engine.
4c The temperature control circuit 7 may also include an additional valve(s) disposed in the pipe(s) H in addition to the first to third valves V1 to V3.

The temperature control circuit 7 may be designed to have only the first and second valves V1 and V2 disposed therein without use of the third valve V3.

For example, in the third, twentieth, or twenty-seventh operation example, a flow path may be formed using the first and second valves V1 and V2 for heating the battery 41 and/or the motor 45 using thermal energy generated by the inverter 43. In addition, in the seventeenth, twentieth, or twenty-seventh operation example, a flow path may be formed using the first and second valves V1 and V2 for using thermal energy generated by the motor 45 to heat the water-cooled capacitor 25, the heater core 47, and/or the motor 45 itself.

Furthermore, in addition to the eight-direction switching valves, the temperature control circuit 7 may also include a valve(s) capable of switching to another or other directions. In addition, when using valves having fixed flow paths (for example, valves each having flow paths fixed in three directions), the temperature control circuit 7 may be configured to use a combination of such valves and a solenoid valve(s) that selectively opens or closes the flow path.

Note that the temperature control circuit 7 may be configured by appropriately combining the valves of the respective embodiments.
*4d* In the present disclosure, the heat generation condition wherein the inverter 43 or the motor 45 is capable of heating the refrigerant is met, for example, by execution of the temperature-increasing control (that is, heat generation control) in which heat is generated by causing an electrical current to flow through at least one of the inverter 43 and the motor 45, but other conditions may also be adopted.

For example, the transportation of the refrigerant may be achieved by the transport control unit 61A as long as at least one of the inverter 43 and the motor 45 generates heat during a normal operation (that is, an operation originally intended for the device: a preset original operation) and is in a state capable of heating the refrigerant (for example, when the inverter 43 or the motor 45 is at a predetermined temperature or higher).
4e The control tasks performed by the temperature control apparatus for the mobile object according to the present disclosure and methods to perform the control tasks may be implemented by a dedicated computer provided by configuring a processor and a memory programmed to execute one or more functions embodied in a computer program.

Alternatively, the control tasks performed by the temperature control apparatus for the mobile object according to the present disclosure and the methods to achieve the control tasks may be implemented by a dedicated computer provided by configuring a processor using one or more dedicated hardware logic circuits.

Alternatively, the control tasks performed by the temperature control apparatus for the mobile object according to the present disclosure and the methods to perform the control tasks may be implemented by one or more dedicated computers, each configured by a combination of a processor and a memory programmed to execute one or more functions, and a processor configured by one or more hardware logic circuits.

Further, the computer programs may be stored, as instructions executed by a computer, in a computer-readable non-transitory tangible recording medium. Methods for implementing functions of respective units included in the control tasks performed by the temperature control apparatus for the mobile object does not necessarily include software, and all of the functions thereof may be implemented using one or more pieces of hardware.
4f The present disclosure may also be implemented in various forms, such as a program for causing a computer installed in the above-described temperature control apparatus for the mobile object to function, a non-transitory tangible recording medium, such as a semiconductor memory, storing the program, and a control method.
*4g* In the above-described respective embodiments, a plurality of functions included in one component may be implemented by a plurality of components, or one function included in one component may be implemented by a plurality of components. Further, a plurality of functions included in a plurality of components may be implemented by one component, or one function implemented by a plurality of components may be implemented by one component. Further, a part of the configuration of each of the above-described embodiments may be omitted. Further, at least a part of the configuration of each of the above-described embodiments may be added to or replaced with a configuration of another embodiment.

### TECHNICAL CONCEPTS OR ASPECTS DISCLOSED IN PRESENT SPECIFICATION

### FIRST ASPECT

A temperature control apparatus (3) configured to control a temperature of equipment in a mobile object (1) comprising: a circuit (7) in which a refrigerant flows; and a controller (61) configured to control operation of the circuit.

The circuit includes, as constituent elements thereof, an inverter (43), a motor (45), pipes (H), and a valve (V1), the pipes defining flow paths in which the refrigerant flows, the valve being disposed in the pipes and capable of switching among the flow paths/

The valve is connected to one of the pipes which leads to the inverter, one of the pipes which leads to the motor, and at least one of the remaining pipes

The valve is configured to be switchable so as to transport the refrigerant supplied from an upstream side of the valve to at least one of the pipes arranged on a downstream side of the valve.

The controller includes a transport control unit (61A) configured to, when a heat generation condition is met wherein at least one of the inverter and the motor is capable of heating the refrigerant, control the valve so as to transport the refrigerant, in the flow paths, from the at least one of the inverter and the motor that satisfies the heat generation condition to a transport destination located downstream of the at least one of the inverter and the motor.

### SECOND ASPECT

The temperature control apparatus as set forth in the above first aspect, wherein the controller includes a heat generation control unit (61B) which is configured to perform temperature-increasing control by causing an electrical current to flow through at least one of the inverter and the motor to generate heat therein, thereby meeting the heat generation condition.

### THIRD ASPECT

The temperature control apparatus as set forth in the first aspect, wherein the circuit further includes, as constituent elements thereof, a battery (41), a chiller (27) configured to cool the refrigerant, a heater core (47), a radiator (49) for heat exchange with outside air, and a pump (P) configured to circulate the refrigerant in the circuit,
each of the constituent elements is connected to the pipes through which the refrigerant flows,
the valve is provided between the pipes connecting an outlet of the inverter from which the refrigerant is outputted and an inlet of the motor into which the refrigerant is inputted, or between the pipes connecting an outlet of the motor from which the refrigerant is outputted and an inlet of the inverter into which the refrigerant enters, the valve being also connected to at least one of the battery, the chiller, the heater core, and the radiator trough the pipes, and
the valve is configured to be switchable among the flow paths to transport the refrigerant, as having passed through at least one of the inverter and the motor, to at least one of the battery, the chiller, the heater core, the radiator, and the motor.

### FOURTH ASPECT

The temperature control apparatus as set forth in the third aspect, wherein the controller performs temperature-increasing control by causing an electrical current to flow through at least one of the inverter and the motor, thereby generating heat therein to satisfy the heat generation condition.

### FIFTH ASPECT

The temperature control apparatus as set forth in the fourth aspect, wherein the heat generation control unit includes a temperature-increasing request determiner (S200) and an inverter temperature-increasing controller (S210), the temperature-increasing request determiner being configured to determine whether there is a temperature-increasing request for at least one target selected from the battery, the chiller, the heater core, and the radiator, the inverter temperature-increasing controller being configured to perform temperature-increasing control on the inverter when the temperature-increasing request determiner determines that there is the temperature-increasing request, and
the transport control unit includes a valve controller (S220) configured to, when the inverter is subjected to the temperature-increasing control by the inverter temperature-increasing controller, control the valve to switch among the flow paths so as to transport the refrigerant that has passed through the inverter to the target.

### SIXTH ASPECT

The temperature control apparatus as set forth in the fourth or fifth aspect, wherein the controller is configured such that,
when the inverter is subjected to the temperature-increasing control by the heat generation control unit, the valve is controlled by the transport control unit to transport the refrigerant that has passed through the inverter, through a first flow path that is one of the flow paths, to at least one selected from the battery, the chiller, the heater core, and the radiator, and
when the motor is subjected to the temperature-increasing control by the heat generation control unit, the valve is controlled by the transport control unit to transport the refrigerant that has passed through the motor, through a second flow path that is one of the flow paths and different from the first flow path, to at least one selected from the battery, the chiller, the heater core, and the radiator.

### SEVENTH ASPECT

The temperature control apparatus as set forth in the sixth aspect, wherein
the circuit further includes, as constituent elements thereof, a second valve (V2) different from a first valve that is the valve recited in the above aspects and a pipe connecting the outlet of the motor from which the refrigerant is outputted and the second valve,
the control unit further includes:
   a second temperature-increasing request determiner (S300) configured to determine, when the inverter is subjected to the temperature-increasing control by the heat generation control unit, whether there is a temperature-increasing request from a second target different from a first target that is the target, as recited in claim 6, to which the refrigerant that has passed through the inverter is transported;
   a motor temperature-increasing controller (S310) configured to perform the temperature-increasing control on the motor when the second temperature-increasing request determiner determines that there is the temperature-increasing request from the second target; and
   a second valve controller (S320) configured to, when the motor is subjected to the temperature-increasing control by the motor temperature-increasing controller, control the second valve to switch among the flow paths such that the refrigerant that has passed through the motor is transported to the second target.

### EIGHTH ASPECT

The temperature control apparatus as set forth in any one of the fourth to seventh aspects, wherein the circuit further includes, as constituent elements thereof, a second valve different from a first valve that is the valve recited in the above aspect,
the transport control unit is configured to be capable of controlling the first valve and the second valve, and the control unit is configured such that:
at startup of the mobile object or during electrically charging of the battery installed in the mobile object, the heat generation control unit performs the temperature-increasing control on the inverter, and the transport control unit controls the first valve to switch among the flow paths such that the refrigerant that has passed through the inverter is transported to the target;
when the motor has a temperature equal to or higher than a predetermined temperature threshold, the transport control unit controls the first valve and the second valve to switch among the flow paths such that the refrigerant that has passed through the motor is transported to the target; and when the motor has a temperature lower than the predetermined temperature threshold, the transport control unit controls the first valve and the second valve to switch among the flow paths to establish a flow path in a form of a closed circuit for the motor alone.

### NINTH ASPECT

The temperature control apparatus as set forth in any one of the second aspect and the fourth to eighth aspects, wherein the circuit further includes a second valve different from a first valve that is the valve recited in the above aspects,
the transport control unit is configured to be capable of controlling the first valve and the second valve, and when there is a single target,
the controller is configured such that:
when the motor has a temperature lower than a predetermined temperature threshold, the heat generation control unit performs the temperature-increase control on the inverter, and the transport control unit controls the first valve to switch among the flow paths such that the refrigerant that has passed through the inverter is connected to the target; and
when the motor has a temperature equal to or higher than the predetermined temperature threshold, the heat generation control unit performs the temperature-increase control on the motor, and the transport control unit controls the first valve and the second valve to switch among the flow paths such that the refrigerant that has passed through the motor is transported to the target.

### TENTH ASPECT

The temperature control apparatus as set forth in any one of the fourth to ninth aspect, wherein the circuit further includes a second valve different from a first valve that is the valve recited in the above aspects,
the transport control unit is configured to control the first valve and the second valve, and
the control unit is configured such that,
when the battery and the motor are determined to have completed warm-up, the heat generation control unit performs the temperature-increasing control on the inverter and the motor, and the transport control unit controls the first valve or the second valve to switch among the flow paths such that the refrigerant that has passed through the inverter and the motor is transported to the heater core or the chiller.

### ELEVENTH ASPECT

The temperature control apparatus as set forth in the first to tenth aspects, wherein the circuit is configured such that the valve is capable of switching among the flow paths so that at least one of the following flow paths forms a closed circuit:
a first flow path passing through only a single one of the constituent elements thereof,
a second flow path connecting the inverter and the constituent element other than the inverter;
a third flow path connecting the motor and the constituent element other than the motor; and
a fourth path connecting the inverter, the motor, and the constituent element other than the inverter and the motor.

### TWELFTH ASPECT

The temperature control apparatus as set forth in the eleventh aspect, wherein the controller is configured to, when movement of the mobile object is stopped or when a system that controls operation of the mobile object is stopped, control the valve such that the at least one of the flow paths forms the closed circuit.

### THIRTEENTH ASPECT

The temperature control apparatus as set forth in the second aspect, and the fourth to tenth aspects, wherein the circuit further includes a second valve different from a first valve that is the valve recited in the above aspects,
the transport control unit is configured to control the first valve and the second valve, and
the controller is configured such that,
when it is determined that one of the constituent elements has fallen below a predetermined temperature, the heat generation control unit performs the temperature-increasing control on the inverter and/or the motor, and the transport control unit controls the first valve and/or the second valve to switch among the flow paths such that the refrigerant that has passed through the inverter and/or the motor is transported to the one of the constituent elements.

### FOURTEENTH ASPECT

The temperature control apparatus as set forth in the fourth to tenth aspects, wherein the controller is configured such that,
at startup of the mobile object, the heat generation control unit performs the temperature-increasing control on the inverter, and the transport control unit controls the valve to supply the refrigerant that has passed through the inverter to the heater core, and the transport control unit further works to establish a closed circuit that is one of the flow paths connected to the motor, or connect the flow path, as communicating with to the motor, to the battery.

### FIFTEENTH ASPECT

The temperature control apparatus as set forth in any one of the fourth to tenth aspects, wherein the controller is configured such that,
when a destination of the mobile object is a charger for electrically charging the battery, the heat generation control unit performs the temperature-increasing control on at least one of the inverter and the motor, and the transport control unit controls the valve to connect at least one of the inverter and the motor with the battery using the flow path.

### SIXTEENTH ASPECT

The temperature control apparatus as set forth in any one of the fourth to tenth aspects and the fourteenth and fifteenth aspects, wherein when the mobile object is a vehicle, the controller is configured such that:
when there is a battery warm-up request while the vehicle is stopped, the heat generation control unit performs the temperature-increasing control on the inverter, and the transport control unit controls the switching operation of the valve to connect the inverter and the battery using the flow path; and
when warm-up of the battery is completed, the transport control unit controls the switching operation of the valve such that the flow path connected to the battery establishes a closed circuit.

### SEVENTEENTH ASPECT

A computer program for controlling a temperature control apparatus (3) configured to perform temperature control on equipment installed in a mobile object (1), wherein
the temperature control apparatus includes as constituent elements of a circuit in which a refrigerant flows:
an inverter (43);
a motor (45);
pipes (H) defining flow paths through which the refrigerant flows; and
a valve (V1) disposed in the pipes and configured to switch among the flow paths, wherein
in addition to the pipe leading to the inverter and the pipe leading to the motor, one or more additional pipes are connected to the valve,
the valve is capable of being switched so as to transport the refrigerant supplied from an upstream side of the valve to at least one of the pipes on a downstream side of the valve, and
the computer program causes a computer to function as a transport control unit (61A) configured to,
when at least one of the inverter and the motor satisfies a heat generation condition under which the at least one of the inverter and the motor is capable of heating the refrigerant, control a switching operation of the valve so as to transport the refrigerant, in the flow paths, from the at least one of the inverter and the motor which satisfies the heat generation condition to a transport destination disposed downstream of the at least one.

## Claims

1. A temperature control apparatus (3) configured to control a temperature of equipment in a mobile object (1) comprising:
a circuit (7) in which a refrigerant flows; and
a controller (61) configured to control operation of the circuit,
wherein the circuit includes, as constituent elements thereof, an inverter (43), a motor (45), pipes (H), and a valve (V1), the pipes defining flow paths in which the refrigerant flows, the valve being disposed in the pipes and capable of switching among the flow paths,
the valve is connected to one of the pipes which leads to the inverter, one of the pipes which leads to the motor, and at least one of the remaining pipes,
the valve is configured to be switchable so as to transport the refrigerant supplied from an upstream side of the valve to at least one of the pipes arranged on a downstream side of the valve, and
the controller includes a transport control unit (61A) configured to, when a heat generation condition is met wherein at least one of the inverter and the motor is capable of heating the refrigerant, control the valve so as to transport the refrigerant, in the flow paths, from the at least one of the inverter and the motor that satisfies the heat generation condition to a transport destination located downstream of the at least one of the inverter and the motor.

2. The temperature control apparatus as set forth in claim 1, wherein the controller further includes a heat generation control unit (61B) which is configured to perform temperature-increasing control by causing an electrical current to flow through at least one of the inverter and the motor to generate heat therein, thereby meeting the heat generation condition.

3. The temperature control apparatus as set forth in claim 1, wherein the circuit further includes, as constituent elements thereof, a battery (41), a chiller (27) configured to cool the refrigerant, a heater core (47), a radiator (49) for heat exchange with outside air, and a pump (P) configured to circulate the refrigerant in the circuit,
each of the constituent elements is connected to the pipes through which the refrigerant flows,
the valve is provided between the pipes connecting an outlet of the inverter from which the refrigerant is outputted and an inlet of the motor into which the refrigerant is inputted, or between the pipes connecting an outlet of the motor from which the refrigerant is outputted and an inlet of the inverter into which the refrigerant enters, the valve being also connected to at least one of the battery, the chiller, the heater core, and the radiator trough the pipes, and
the valve is configured to be switchable among the flow paths to transport the refrigerant, as having passed through at least one of the inverter and the motor, to at least one of the battery, the chiller, the heater core, the radiator, and the motor.

4. The temperature control apparatus as set forth in claim 3, wherein the controller performs temperature-increasing control by causing an electrical current to flow through at least one of the inverter and the motor, thereby generating heat therein to satisfy the heat generation condition.

5. The temperature control apparatus as set forth in claim 4, wherein the heat generation control unit includes a temperature-increasing request determiner (S200) and an inverter temperature-increasing controller (S210), the temperature-increasing request determiner being configured to determine whether there is a temperature-increasing request for at least one target selected from the battery, the chiller, the heater core, and the radiator, the inverter temperature-increasing controller being configured to perform temperature-increasing control on the inverter when the temperature-increasing request determiner determines that there is the temperature-increasing request, and
the transport control unit includes a valve controller (S220) configured to, when the inverter is subjected to the temperature-increasing control by the inverter temperature-increasing controller, control the valve to switch among the flow paths so as to transport the refrigerant that has passed through the inverter to the target.

6. The temperature control apparatus as set forth in claim 4, wherein the controller is configured such that,
in response to the inverter being subjected to the temperature-increasing control by the heat generation control unit, the valve is controlled by the transport control unit to transport the refrigerant that has passed through the inverter, through a first flow path that is one of the flow paths, to at least one selected from the battery, the chiller, the heater core, and the radiator, and
when the motor is subjected to the temperature-increasing control by the heat generation control unit, the valve is controlled by the transport control unit to transport the refrigerant that has passed through the motor, through a second flow path that is one of the flow paths and different from the first flow path, to at least one selected from the battery, the chiller, the heater core, and the radiator.

7. The temperature control apparatus as set forth in claim 6, wherein
the circuit further includes, as constituent elements thereof, a second valve (V2) different from a first valve that is the valve recited in claim 6 and a pipe connecting the outlet of the motor from which the refrigerant is outputted and the second valve,
the control unit further includes:
a second temperature-increasing request determiner (S300) configured to determine, when the inverter is subjected to the temperature-increasing control by the heat generation control unit, whether there is a temperature-increasing request from a second target different from a first target that is the target, as recited in claim 6, to which the refrigerant that has passed through the inverter is transported;
a motor temperature-increasing controller (S310) configured to perform the temperature-increasing control on the motor when the second temperature-increasing request determiner determines that there is the temperature-increasing request from the second target; and
a second valve controller (S320) configured to, when the motor is subjected to the temperature-increasing control by the motor temperature-increasing controller, control the second valve to switch among the flow paths such that the refrigerant that has passed through the motor is transported to the second target.

8. The temperature control apparatus as set forth in claim 4, wherein the circuit further includes, as constituent elements thereof, a second valve different from a first valve that is the valve recited in claim 4,
the transport control unit is configured to be capable of controlling the first valve and the second valve, and
the control unit is configured such that:
at startup of the mobile object or during electrically charging of the battery installed in the mobile object, the heat generation control unit performs the temperature-increasing control on the inverter, and the transport control unit controls the first valve to switch among the flow paths such that the refrigerant that has passed through the inverter is transported to the target;
when the motor has a temperature equal to or higher than a predetermined temperature threshold, the transport control unit controls the first valve and the second valve to switch among the flow paths such that the refrigerant that has passed through the motor is transported to the target; and
when the motor has a temperature lower than the predetermined temperature threshold, the transport control unit controls the first valve and the second valve to switch among the flow paths to establish a flow path in a form of a closed circuit for the motor alone.

9. The temperature control apparatus as set forth in claim 2 or 4, wherein the circuit further includes a second valve different from a first valve that is the valve recited in claim 2 or 4,
the transport control unit is configured to be capable of controlling the first valve and the second valve, and
when there is a single target,
the controller is configured such that:
when the motor has a temperature lower than a predetermined temperature threshold, the heat generation control unit performs the temperature-increase control on the inverter, and the transport control unit controls the first valve to switch among the flow paths such that the refrigerant that has passed through the inverter is connected to the target; and
when the motor has a temperature equal to or higher than the predetermined temperature threshold, the heat generation control unit performs the temperature-increase control on the motor, and the transport control unit controls the first valve and the second valve to switch among the flow paths such that the refrigerant that has passed through the motor is transported to the target.

10. The temperature control apparatus as set forth in claim 4, wherein the circuit further includes a second valve different from a first valve that is the valve recited in claim 4,
the transport control unit is configured to control the first valve and the second valve, and
the control unit is configured such that,
when the battery and the motor are determined to have completed warm-up, the heat generation control unit performs the temperature-increasing control on the inverter and the motor, and the transport control unit controls the first valve or the second valve to switch among the flow paths such that the refrigerant that has passed through the inverter and the motor is transported to the heater core or the chiller.

11. The temperature control apparatus as set forth in claim 1 or 3, wherein the circuit is configured such that the valve is capable of switching among the flow paths so that at least one of the following flow paths forms a closed circuit:
a first flow path passing through only a single one of the constituent elements thereof,
a second flow path connecting the inverter and the constituent element other than the inverter;
a third flow path connecting the motor and the constituent element other than the motor; and
a fourth path connecting the inverter, the motor, and the constituent element other than the inverter and the motor.

12. The temperature control apparatus as set forth in claim 11, wherein the controller is configured to, when movement of the mobile object is stopped or when a system that controls operation of the mobile object is stopped, control the valve such that the at least one of the flow paths forms the closed circuit.

13. The temperature control apparatus as set forth in claim 2 or 4, wherein the circuit further includes a second valve different from a first valve that is the valve recited in claim 2 or 4,
the transport control unit is configured to control the first valve and the second valve, and
the controller is configured such that,
when it is determined that one of the constituent elements has fallen below a predetermined temperature, the heat generation control unit performs the temperature-increasing control on the inverter and/or the motor, and the transport control unit controls the first valve and/or the second valve to switch among the flow paths such that the refrigerant that has passed through the inverter and/or the motor is transported to the one of the constituent elements.

14. The temperature control apparatus as set forth in claim 4, wherein the controller is configured such that,
at startup of the mobile object, the heat generation control unit performs the temperature-increasing control on the inverter, and the transport control unit controls the valve to supply the refrigerant that has passed through the inverter to the heater core, and the transport control unit further works to establish a closed circuit that is one of the flow paths connected to the motor, or connect the flow path, as communicating with to the motor, to the battery.

15. The temperature control apparatus as set forth in claim 4, wherein the controller is configured such that,
when a destination of the mobile object is a charger for electrically charging the battery, the heat generation control unit performs the temperature-increasing control on at least one of the inverter and the motor, and the transport control unit controls the valve to connect at least one of the inverter and the motor with the battery using the flow path.

16. The temperature control apparatus as set forth in claim 4, wherein when the mobile object is a vehicle,
the controller is configured such that:
when there is a battery warm-up request while the vehicle is stopped, the heat generation control unit performs the temperature-increasing control on the inverter, and the transport control unit controls the valve to connect the inverter and the battery using the flow path; and
when warm-up of the battery is completed, the transport control unit controls the valve such that the flow path connected to the battery forms a closed circuit.

17. A computer program for controlling a temperature control apparatus (3) configured to perform temperature control on equipment installed in a mobile object (1),
wherein
the temperature control apparatus includes as constituent elements of a circuit in which a refrigerant flows:
an inverter (43);
a motor (45);
pipes (H) defining flow paths through which the refrigerant flows; and
a valve (V1) disposed in the pipes and configured to switch among the flow paths, wherein
in addition to the pipe leading to the inverter and the pipe leading to the motor, one or more additional pipes are connected to the valve,
the valve is capable of being switched so as to transport the refrigerant supplied from an upstream side of the valve to at least one of the pipes on a downstream side of the valve, and
the computer program causes a computer to function as a transport control unit (61A) configured to,
when at least one of the inverter and the motor satisfies a heat generation condition under which the at least one of the inverter and the motor is capable of heating the refrigerant, control the valve so as to transport the refrigerant, in the flow paths, from the at least one of the inverter and the motor satisfying the heat generation condition to a transport destination disposed downstream of the at least one.
